# EUROPÄISCHE PATENTSCHRIFT

(11) **EP 3 071 656 B1**
(45) Veröffentlichungstag und Bekanntmachung des Hinweises auf die Patenterteilung: **22.05.2019**
(21) Anmeldenummer: 13792027.8
(22) Anmeldetag: 18.11.2013
(51) Int. Cl.: C09D 5/44, C25D 3/54, C25D 13/12, C25D 13/18

(54) **WÄSSRIGE BESCHICHTUNGSZUSAMMENSETZUNG ZUR TAUCHLACK-BESCHICHTUNG ELEKTRISCH LEITFÄHIGER SUBSTRATE ENTHALTEND BISMUT SOWOHL IN GELÖST ALS AUCH UNGELÖST VORLIEGENDER FORM**
AQUEOUS COATING COMPOSITION FOR THE DIP-PAINT COATING OF ELECTRICALLY CONDUCTIVE SUBSTRATES CONTAINING BISMUTH BOTH IN DISSOLVED AND UNDISSOLVED FORM
COMPOSITION AQUEUSE DE REVÊTEMENT POUR LE REVÊTEMENT PAR VERNIS À IMMERSION DE SUBSTRATS ÉLECTRIQUEMENT CONDUCTEURS CONTENANT DU BISMUTH PRÉSENT SOUS FORME DISSOUTE ET NON DISSOUTE

(43) Veröffentlichungstag der Anmeldung: 28.09.2016
(73) Patentinhaber: BASF Coatings GmbH, 48165 Münster (DE); Henkel AG & Co. KGaA, 40589 Düsseldorf (DE)
(72) Erfinder: CZIKA, Franz-Adolf, 41470 Neuss (DE); LEPA, Klaus, 53842 Troisdorf (DE); WAPNER, Kristof, 40589 Düsseldorf (DE)
(74) Vertreter: BASF IP Association
(86) Internationale Anmeldenummer: PCT/EP2013/074103
(87) Internationale Veröffentlichungsnummer: WO 2015/070930

(56) Entgegenhaltungen:
- EP-A1- 0 000 086
- EP-A1- 0 569 842
- EP-A1- 0 690 106
- EP-A1- 1 719 806
- EP-A1- 2 405 035
- EP-B1- 1 246 874
- KYU-JIN KIM ET AL: "Ultrafiltration of Colloidal Silver Particles: Flux, Rejection, and Fouling", JOURNAL OF COLLOID AND INTERFACE SCIENCE, Bd. 155, Nr. 2, 1. Februar 1993 (1993-02-01), Seiten 347-359, XP055127424, DOI: 10.1006/jcis.1993.1046

## Beschreibung

Die vorliegende Erfindung betrifft ein Verfahren zur zumindest teilweisen Beschichtung eines elektrisch leitfähigen Substrats mit einem Elektrotauchlack umfassend wenigstens einen Schritt (1), der ein Kontaktieren des Substrats mit einer wässrige Beschichtungszusammensetzung (A) umfasst, welche einen pH-Wert in einem Bereich von 4,0 bis 6,5, wenigstens ein kathodisch abscheidbares Bindemittel (A1), eine Gesamtmenge von wenigstens 130 ppm Bi, bezogen auf das Gesamtgewicht von (A), wobei davon wenigstens 30 ppm Bi in einer in (A) gelöst vorliegenden Form (A3) und wenigstens 100 ppm Bi in einer in (A) ungelöst vorliegenden Form (A4) vorhanden sind, wobei der Anteil an (A4) in mol-% größer als der Anteil an (A3) in mol-% ist, und wenigstens ein zur Komplexierung von Bi geeignetes wenigstens zweizähniges Komplexierungsmittel (A5), wobei (A5) in (A) in einem Anteil von wenigstens 5 mol-%, bezogen auf die Gesamtmenge des in (A) enthaltenen Bi, vorhanden ist, aufweist, und wobei Schritt (1) in wenigstens zwei aufeinanderfolgenden Stufen (1a) und (1b) durchgeführt wird, sowie ein Verfahren zur Einstellung und/oder Aufrechterhaltung der Konzentration von (A3) und/oder (A4) in der Beschichtungszusammensetzung (A) während des Beschichtungsverfahrens.

Im Automobilbereich müssen die zur Herstellung eingesetzten metallischen Bauteile üblicherweise gegen Korrosion geschützt werden. Die Anforderungen an den zu erzielenden Korrosionsschutz sind sehr hoch, insbesondere da seitens der Hersteller oftmals über viele Jahre eine Garantie gegen Durchrostung gewährt wird. Solch ein Korrosionsschutz wird üblicherweise durch eine Beschichtung der Bauteile oder der zu ihrer Herstellung eingesetzten Substrate mit wenigstens einer dafür geeigneten Beschichtung erzielt.

Nachteilig an den bekannten Beschichtungsverfahren, insbesondere an den bekannten in der Automobilindustrie eingesetzten Verfahren, ist, dass diese Verfahren üblicherweise einen Phosphatierungsschritt als Vorbehandlung vorsehen, in dem das zu beschichtende Substrat nach einem optionalen Reinigungsschritt und vor einem Tauchlackierungsschritt mit einem Metallphosphat wie Zinkphosphat in einem Phosphatierungsschritt behandelt wird, um einen ausreichenden Korrosionsschutz zu gewährleisten. Diese Vorbehandlung beinhaltet üblicherweise die Durchführung mehrerer Verfahrensschritte in mehreren verschiedenen und unterschiedlich beheizten Tauchbecken. Zudem fallen bei der Durchführung einer solchen Vorbehandlung Abfallschlämme an, die die Umwelt belasten und entsorgt werden müssen. Es ist daher insbesondere aus ökonomischen und ökologischen Gründen wünschenswert, einen solchen Vorbehandlungsschritt einsparen zu können, aber dennoch zumindest die gleiche Korrosionsschutzwirkung zu erzielen, die mit den bekannten Verfahren erzielt wird.

EP 2 405 035 A1 und JP 2011-057944 A offenbaren jeweils eine elektrophoretisch abscheidbare Beschichtungszusammensetzung, die 100 bis 1000 ppm bzw. 100 bis 5000 ppm an trivalenten Bismut-Ionen und eine Aminopolycarbonsäure in der 0,5 bis 10-fachen bzw. 0,1 bis 5-fachen molaren Konzentration, jeweils bezogen auf die molare Konzentration der trivalenten Bismut-Ionen, enthält. Die trivalenten Bismut-Ionen liegen dabei in den darin offenbarten Beschichtungszusammensetzungen in gelöster Form vor. Nachteilig an den aus EP 2 405 035 A1 und JP 2011-057944 A bekannten Beschichtungszusammensetzungen ist jedoch, dass zunächst in einem separaten vorgelagerten Verfahrensschritt eine entsprechende wasserlösliche Bismut-haltige Verbindung, welche zur Freisetzung der trivalenten Bismut-Ionen befähigt ist, ausgehend von wasserunlöslichen Bismut-Precursor-Verbindungen wie Bismutoxid und geeigneten Aminopolycarbonsäuren als Komplexierungsmittel hergestellt werden muss. Diese so hergestellte wasserlösliche Bismut-haltige Verbindung wird erst dann der Beschichtungszusammensetzung zugesetzt. Solche in Wasser gelösten Bismut-Salze, welche nach ihrer Herstellung in eine bei Anlegen einer Spannung in einem Bereich von 100-400 V elektrophoretisch abscheidbare Beschichtungszusammensetzung gegeben werden, sind zudem aus EP 1 000 985 A1 bekannt.

Kathodisch abscheidbare Bismut-haltige Beschichtungszusammensetzungen, die in einem einstufigen Beschichtungsschritt auf ein geeignetes Substrat abgeschieden werden können, sind beispielsweise aus WO 2009/021719 A2, WO 2004/018580 A1, WO 2004/018570 A2, EP 0 642 558 B2 sowie WO 95/07319 A1 bekannt: Der Zusatz von wasserunlöslichem Bismut-Subnitrat in elektrophoretisch abscheidbaren Beschichtungszusammensetzungen ist dabei aus WO 2009/021719 A2 bekannt. Das eingesetzte Bismut-Subnitrat fungiert dabei als Vernetzungskatalysator. Aus WO 2004/018580 A1 ist der Einsatz von wasserunlöslichem Bismut-Subsalicylat in Beschichtungszusammensetzungen bekannt. Ein Einsatz von Bismut-Subsalicylat oder Bismut-Ethylhexanoat in Beschichtungszusammensetzungen als Bakterizid wird in WO 2004/018570 A2 beschrieben. Wasserlösliche Bismut-Verbindungen sind zudem aus EP 0 642 558 B2 sowie WO 95/07319 A1 bekannt.

EP 1 719 806 A1 betrifft eine kationische Elektrotauchlackzusammensetzung, die unter Einsatz einer wässrigen Dispersionspaste hergestellt wird, welche eine organische säure-modifizierte nicht-wasserlösliche Bismut-Verbindung enthält. Aus EP 0 690 106 A1 sind Zusammensetzungen bekannt, die wasserlösliche Bismut-Verbindungen als Katalysatoren für die Härtung enthalten. EP 1 246 874 B1 betrifft Zusammensetzungen, die kolloidal dispergiertes metallisches Bismut enthalten.

Es besteht ein Bedarf an elektrophoretisch abscheidbaren Beschichtungszusammensetzungen zur zumindest teilweisen Beschichtung von elektrisch leitfähigen Substraten mit einem Elektrotauchlack, welche - insbesondere im Hinblick auf eine Einsparung des üblicherweise durchgeführten Phosphatierungsschritts als Vorbehandlung - eine ökonomischeres und ökologischeres Beschichtungsverfahren als herkömmliche eingesetzte Beschichtungszusammensetzungen ermöglichen, aber dennoch zumindest in gleichem Maße dazu geeignet ist, die hierfür erforderliche Korrosionsschutzwirkung zu erzielen.

Eine Aufgabe der vorliegenden Erfindung ist es daher, eine Beschichtungszusammensetzung zur zumindest teilweisen Beschichtung eines elektrisch leitfähigen Substrats zur Verfügung zu stellen, welche gegenüber den aus dem Stand der Technik bekannten Beschichtungszusammensetzungen Vorteile aufweist. Insbesondere ist es eine Aufgabe der vorliegenden Erfindung, solche Beschichtungszusammensetzungen zur Verfügung zu stellen, die ein ökonomischeres und/oder ökologischeres Beschichtungsverfahren als herkömmliche eingesetzte Beschichtungszusammensetzungen ermöglichen. Insbesondere ist es zudem eine Aufgabe der vorliegenden Erfindung, ein solches Verfahren bereitzustellen, welches eine ökonomischere und/oder ökologischere Beschichtung als herkömmliche Beschichtungsverfahren ermöglicht, d.h. welches es beispielsweise ermöglicht, auf die üblicherweise noch vor einer Tauchlackierung mittels eines Metallphosphats durchzuführende Phosphatierung zu verzichten, aber mit welchem dennoch die zumindest gleiche und insbesondere eine verbesserte Korrosionsschutzwirkung erzielt werden kann, die mit den üblichen Verfahren erzielt wird.

Diese Aufgabe wird gelöst durch die in den Patentansprüchen beanspruchten Gegenstände sowie den in der nachfolgenden Beschreibung beschriebenen bevorzugten Ausführungsformen dieser Gegenstände.

Ein erster Gegenstand der vorliegenden Erfindung ist daher ein Verfahren zur zumindest teilweisen Beschichtung eines elektrisch leitfähigen Substrats mit einem Elektrotauchlack gemäß Anspruch 1.

Die erfindungsgemäß eingesetzte wässrige Beschichtungszusammensetzung (A) dient somit zur Herstellung einer Elektrotauchlackschicht auf einer Substratoberfläche eines elektrisch leitfähigen Substrats.

Es wurde überraschend gefunden, dass es die erfindungsgemäß eingesetzte wässrige Beschichtungszusammensetzung (A), insbesondere wenn diese in einem Verfahren zur zumindest teilweisen Beschichtung eines elektrisch leitfähigen Substrats mit einem Elektrotauchlack eingesetzt wird, ermöglicht, auf den üblicherweise vor der Tauchlackierung, insbesondere Elektrotauchlackierung, durchzuführenden erforderlichen Schritt einer Vorbehandlung des zumindest teilweise zu beschichtenden elektrisch leitfähigen Substrats mit einem Metallphosphat wie Zinkphosphat zur Ausbildung einer Metallphosphatschicht auf dem Substrat verzichten zu können, wodurch das entsprechende Beschichtungsverfahren damit insgesamt sowohl ökonomischer, insbesondere weniger zeit- und kosten-intensiv, als auch ökologischer als herkömmliche Verfahren gestaltet werden kann.

Insbesondere wurde überraschend gefunden, dass es die erfindungsgemäß eingesetzte Beschichtungszusammensetzung (A) ermöglicht, zumindest teilweise mit einem Elektrotauchlack beschichtete elektrisch leitfähige Substrate zur Verfügung zu stellen, die im Vergleich zu mittels herkömmlicher Verfahren entsprechend beschichteter Substrate hinsichtlich ihrer Korrosionsschutzwirkung zumindest keine Nachteile und insbesondere Vorteile aufweisen.

Es wurde ferner überraschend gefunden, dass ein Verfahren zur zumindest teilweisen Beschichtung eines elektrisch leitfähigen Substrate, bei dem die erfindungsgemäß eingesetzte Beschichtungszusammensetzung eingesetzt wird, es ermöglicht, insbesondere durch einen zweistufigen Schritt (1) und innerhalb dieses Schritts (1) durch die Stufe (1a), eine signifikante Beschichtung des Substrats mit Bi, insbesondere von mindestens 10 mg/m² Bi, zu erzielen.

Zudem wurde überraschend gefunden, dass es die erfindungsgemäß eingesetzte Beschichtungszusammensetzung (A) ermöglicht, einen vor Herstellung der Beschichtungszusammensetzung üblicherweise notwendigen separaten Verfahrensschritt, nämlich die Herstellung einer wasserlöslichen Bismut-haltigen Verbindung, welche dann üblicherweise erst der Beschichtungszusammensetzung zugesetzt werden muss, einsparen zu können.

Ferner wurde überraschend gefunden, dass es die erfindungsgemäß eingesetzte Beschichtungszusammensetzung (A) ermöglicht, dass eine Anreicherung des Komplexiermittels (A5) in der Beschichtungszusammensetzung (A) vermieden werden kann. Eine daraus resultierende Anreicherung des Komplexiermittels (A5) in der Beschichtungszusammensetzung kann üblicherweise zu Problemen hinsichtlich der Stabilität des Tauchbads führen. Überraschenderweise kann dem insbesondere durch Erhöhung des Anteils der Komponente (A4) in der Beschichtungszusammensetzung (A) entgegengewirkt werden. Dies wird insbesondere durch ein Verfahren zur Einstellung und/oder Aufrechterhaltung der Konzentration der Komponente (A3) und/oder (A4) in der erfindungsgemäßen Beschichtungszusammensetzung (A) während der Durchführung des erfindungsgemäßen Beschichtungsverfahrens ermöglicht.

Der Begriff "umfassend" im Sinne der vorliegenden Erfindung, beispielsweise in Zusammenhang mit der erfindungsgemäßen wässrigen Beschichtungs-zusammensetzung (A), hat in einer bevorzugten Ausführungsform die Bedeutung "bestehend aus". Dabei können hinsichtlich der erfindungsgemäß eingesetzten Beschichtungszusammensetzung (A) in dieser bevorzugten Ausführungsform eine oder mehrere der weiteren nachstehend genannten optional in der erfindungsgemäß eingesetzten Beschichtungszusammensetzung (A) enthaltenen Komponenten in der Beschichtungszusammensetzung (A) enthalten sein wie - neben (A1), (A3), (A4), (A5) und Wasser sowie gegebenenfalls (A2) zum Beispiel die optionalen Komponenten (A6) und/oder (A7) und/oder (A8) sowie gegebenenfalls vorhandene organische Lösemittel. Alle Komponenten können dabei jeweils in ihren vorstehend und nachstehend genannten bevorzugten Ausführungsformen in der erfindungsgemäß eingesetzten Beschichtungszusammensetzung (A) enthalten sein.

### Substrat

Als erfindungsgemäß eingesetztes elektrisch leitfähiges Substrat eignen sich alle üblicherweise eingesetzten und dem Fachmann bekannten elektrisch leitfähigen Substrate. Vorzugsweise sind die erfindungsgemäß eingesetzten elektrisch leitfähigen Substrate ausgewählt aus der Gruppe bestehend aus Stahl, vorzugsweise Stahl ausgewählt aus der Gruppe bestehend aus kalt gewalztem Stahl, verzinktem Stahl wie tauchverzinktem Stahl, legierungsverzinktem Stahl (wie beispielsweise Galvalume, Galvannealed oder Galfan) und aluminiertem Stahl, Aluminium und Magnesium, insbesondere eignen sich verzinkter Stahl und Aluminium. Zudem eignen sich als Substrate warmgewalzter Stahl, hochfester Stahl, Zn/Mg-Legierungen und Zn/Ni-Legierungen. Als Substrate eignen sich insbesondere Teile von Karosserien oder vollständige Karosserien von zu produzierenden Automobilen. Das erfindungsgemäße Verfahren kann auch zur Bandbeschichtung (Coil-Coating) eingesetzt werden. Bevor das jeweilige elektrisch leitfähige Substrat eingesetzt wird, erfolgt vorzugsweise eine Reinigung und/oder Entfettung des Substrats.

Das erfindungsgemäß eingesetzte elektrisch leitfähige Substrat kann ein mit wenigstens einem Metallphosphat vorbehandeltes Substrat sein. Das erfindungsgemäß eingesetzte elektrisch leitfähige Substrat kann zudem ein chromatiertes Substrat sein. Eine solche Vorbehandlung mittels einer Phosphatierung oder Chromatierung, die üblicherweise nach Reinigung des Substrats und vor der Tauchlackierung des Substrats erfolgt, ist insbesondere ein in der Automobilindustrie üblicher Vorbehandlungsschritt. Es ist in diesem Zusammenhang insbesondere wünschenswert, dass eine optional durchgeführte Vorbehandlung unter ökologischen und/oder ökonomischen Gesichtspunkte vorteilhaft ausgestaltet ist. Beispielsweise ist daher ein optionaler Vorbehandlungsschritt möglich, in dem anstelle einer üblichen Trikation-Phosphatierung auf die Nickel-Komponente verzichtet wird und stattdessen eine Dikation-Phosphatierung (enthaltend Zink- und Mangan-Kationen und keine Nickel-Kationen) des erfindungsgemäß eingesetzten elektrisch leitfähigen Substrat noch vor einer Beschichtung mit der wässrigen Beschichtungszusammensetzung (A) durchgeführt wird.

Es ist jedoch gerade eine Aufgabe der vorliegenden Erfindung, dass auf eine solche Vorbehandlung des zumindest teilweise zu beschichtenden elektrisch leitfähigen Substrats mittels Phosphatierung mit einem Metallphosphat wie beispielsweise Zinkphosphat oder mittels einer Chromatierung verzichtet werden kann. In einer bevorzugten Ausführungsform ist das erfindungsgemäß eingesetzte elektrisch leitfähige Substrat daher kein solches phosphatiertes oder chromatiertes Substrat.

Das erfindungsgemäß eingesetzte elektrisch leitfähige Substrat kann noch vor einer Beschichtung mit der erfindungsgemäßen wässrigen Beschichtungszusammensetzung (A) mit einer wässrigen Vorbehandlungs-Zusammensetzung vorbehandelt werden, welche wenigstens eine wasserlösliche Verbindung, welche wenigstens ein Ti-Atom und/oder wenigstens ein Zr-Atom enthält, und wenigstens eine wasserlösliche Verbindung als Quelle für Fluorid-Ionen, welches wenigstens ein Fluor-Atom enthält, umfasst, oder mit einer wässrigen Vorbehandlungs-Zusammensetzung, welche eine wasserlösliche Verbindung umfasst, welche durch Umsetzung wenigstens einer wasserlöslichen Verbindung, welche wenigstens ein Ti-Atom und/oder wenigstens ein Zr-Atom enthält, mit wenigstens einer wasserlöslichen Verbindung als Quelle für Fluorid-Ionen, welches wenigstens ein Fluor-Atom enthält, erhältlich ist.

Vorzugsweise weisen das wenigstens eine Ti-Atom und/oder das wenigstens eine Zr-Atom dabei die Oxidationsstufe +4 auf. Vorzugsweise enthält die wässrige Vorbehandlungs-Zusammensetzung aufgrund der in ihr enthaltenen Komponenten, vorzugsweise zudem aufgrund der entsprechend gewählten Mengenanteile dieser Komponenten einen Fluoro-Komplex wie beispielsweise ein Hexfluorometallat, d.h. insbesondere Hexafluorotitanat und/oder wenigstens ein Hexafluorozirkonat. Vorzugsweise weist die Vorbehandlungs-Zusammensetzung eine Gesamtkonzentration an den Elementen Ti und/oder Zr auf, die 2,5·10⁻⁴ mol/L nicht unterschreitet, aber nicht grösser als 2,0·10⁻² mol/L ist. Die Herstellung solcher Vorbehandlungs-Zusammensetzungen und ihr Einsatz in der Vorbehandlung elektrisch leitfähiger Substrat ist beispielsweise aus WO 2009/115504 A1 bekannt.

Vorzugsweise enthält die Vorbehandlungs-Zusammensetzung zudem Kupferionen, vorzugsweise Kupfer(II)-Ionen sowie gegebenenfalls eine oder mehrere wasserlösliche und/oder wasserdispergierbare Verbindungen, die wenigstens ein Metallion ausgewählt aus der Gruppe bestehend aus Ca, Mg, Al, B, Zn, Mn und W sowie Mischungen davon enthält, vorzugsweise wenigstens ein Alumosilikat und hierbei insbesondere ein solches, das ein atomares Verhältnis von Al zu Si-Atomen von zumindest 1:3 aufweist. Die Herstellung solcher Vorbehandlungs-Zusammensetzungen und ihr Einsatz in der Vorbehandlung elektrisch leitfähiger Substrat ist beispielsweise aus WO 2009/115504 A1 bekannt. Die Alumosilikate liegen vorzugsweise als Nanopartikel mit einer durch dynamische Lichtstreuung bestimmbaren Teilchengröße im Bereich von 1 bis 100 nm. Die durch dynamische Lichtstreuung bestimmbare mittlere Teilchengröße solcher Nanopartikel im Bereich von 1 bis 100 nm wird dabei gemäß DIN ISO 13321 (Datum: 1.10.2004) bestimmt.

In einer bevorzugten Ausführungsform ist das erfindungsgemäß eingesetzte elektrisch leitfähige Substrat jedoch ein Substrat, welches nicht mit einer solchen Vorbehandlungs-Zusammensetzung vorbehandelt worden ist.

### Komponente (A1) und optionale Komponente (A2)

Die erfindungsgemäß eingesetzte wässrige Beschichtungszusammensetzung (A) umfasst wenigstens ein kathodisch abscheidbares Bindemittel als Komponente (A1) und gegebenenfalls wenigstens ein Vernetzungsmittel als Komponente (A2).

Der Begriff "Bindemittel" als Bestandteil der Beschichtungszusammensetzung (A) umfasst im Sinne der vorliegenden Erfindung vorzugsweise die für die Filmbildung verantwortlichen kathodisch abscheidbaren polymeren Harze der erfindungsgemäß eingesetzten wässrigen Beschichtungszusammensetzung (A), wobei jedoch gegebenenfalls vorhandenes Vernetzungsmittel nicht vom Begriff des Bindemittels mit eingeschlossen ist. Vorzugsweise ist ein "Bindemittel" im Sinne der vorliegenden Erfindung daher ein polymeres Harz, wobei jedoch gegebenenfalls vorhandenes Vernetzungsmittel nicht vom Begriff des Bindemittels mit eingeschlossen ist. Insbesondere werden zudem gegebenenfalls vorhandene Pigmente und Füllstoffe nicht unter den Begriff des Bindemittels subsumiert. Vorzugsweise wird zudem die Komponente (A5) nicht unter den Begriff des Bindemittels subsumiert, wenn es sich bei dieser Komponente um ein polymeres Komplexierungsmittel handelt.

Vorzugsweise wird zur Herstellung der erfindungsgemäß eingesetzten Beschichtungszusammensetzung (A) eine wässrige Dispersion oder wässrige Lösung, besonders bevorzugt wenigstens eine wässrige Dispersion, eingesetzt, die das wenigstens eine kathodisch abscheidbare Bindemittel (A1) und das gegebenenfalls vorhandene wenigstens eine Vernetzungsmittel (A2) enthält. Diese wässrige Dispersion oder Lösung enthaltend (A1) und gegebenenfalls (A2) weist vorzugsweise einen nicht-flüchtigen Anteil, d.h. einen Festkörper-Anteil, in einem Bereich von 25 bis 60 Gew-%, besonders bevorzugt in einem Bereich von 27,5 bis 55 Gew-%, ganz besonders bevorzugt in einem Bereich von 30 bis 50 Gew-%, noch bevorzugter in einem Bereich von 32,5 bis 45 Gew-%, insbesondere in einem Bereich von 35 bis 42,5 Gew-%, jeweils bezogen auf das Gesamtgewicht dieser wässrigen Dispersion oder Lösung, auf.

Bestimmungsmethoden zur Bestimmung des Festkörper-Anteils sind dem Fachmann bekannt. Vorzugsweise wird der Festkörper-Anteil gemäß DIN EN ISO 3251 (Datum: 1.6.2008) bestimmt, insbesondere über eine Dauer von 30 Minuten bei 180°C gemäß dieser Norm.

Dem Fachmann sind kathodisch abscheidbare Bindemittel (A1) bekannt. Besonders bevorzugt ist das Bindemittel ein kathodisch abscheidbares Bindemittel. Das erfindungsgemäß eingesetzte Bindemittel ist vorzugsweise ein in Wasser lösbares oder dispergierbares Bindemittel.

Alle üblichen dem Fachmann bekannten kathodisch abscheidbaren Bindemittel eignen sich dabei als Bindemittel-Komponente (A1) der erfindungsgemäß eingesetzten wässrigen Beschichtungszusammensetzung (A).

Vorzugsweise weist das Bindemittel (A1) reaktive funktionelle Gruppen auf, die eine Vernetzungsreaktion ermöglichen. Das Bindemittel (A1) ist dabei ein selbstvernetzendes oder ein fremd-vernetzendes Bindemittel, vorzugsweise ein fremd-vernetzendes Bindemittel. Um eine Vernetzungsreaktion zu ermöglichen, enthält die Beschichtungszusammensetzung (A) daher neben dem wenigstens einen Bindemittel (A1) vorzugsweise zudem wenigstens ein Vernetzungsmittel (A2).

Das der Beschichtungszusammensetzung (A) enthaltene Bindemittel (A1) bzw. das gegebenenfalls enthaltene Vernetzungsmittel (A2) ist vorzugsweise thermisch vernetzbar. Vorzugsweise sind das Bindemittel (A1) und das gegebenenfalls enthaltene Vernetzungsmittel (A2) beim Erwärmen auf Temperaturen oberhalb Raumtemperatur, d.h. oberhalb von 18-23°C vernetzbar. Vorzugsweise sind das Bindemittel (A1) und das gegebenenfalls enthaltene Vernetzungsmittel (A2) erst bei Ofentemperaturen ≥ 80°C, bevorzugter ≥ 110°C, besonders bevorzugt ≥ 130°C und ganz besonders bevorzugt ≥ 140°C vernetzbar. Besonders vorteilhaft sind das Bindemittel (A1) und das gegebenenfalls enthaltene Vernetzungsmittel (A2) bei 100 bis 250°C, noch bevorzugter bei 125 bis 250°C und besonders bevorzugt bei 150 bis 250°C vernetzbar.

Vorzugsweise umfasst die Beschichtungszusammensetzung (A) wenigstens ein Bindemittel (A1), welches reaktive funktionelle Gruppen aufweist, die vorzugsweise in Kombination mit wenigstens einem Vernetzungsmittel (A2) eine Vernetzungsreaktion ermöglichen.

Jede übliche dem Fachmann bekannte vernetzbare reaktive funktionelle Gruppe kommt dabei in Betracht. Vorzugsweise weist das Bindemittel (A1) reaktive funktionelle Gruppen ausgewählt aus der Gruppe bestehend aus gegebenenfalls substituierten primären Amino-Gruppen, gegebenenfalls substituierten sekundären Amino-Gruppen, substituierten tertiären Amino-Gruppen, Hydroxyl-Gruppen, Thiol-Gruppen, Carboxyl-Gruppen, Gruppen, welche wenigstens eine C=C-Doppelbindung, wie beispielsweise Vinyl-Gruppen oder (Meth)acrylat-Gruppen, und Epoxid-Gruppen auf, wobei die primären und sekundären Amino-Gruppen mit 1 oder 2 oder 3 Substituenten jeweils unabhängig voneinander ausgewählt aus der Gruppe bestehend aus C₁₋₆-aliphatischen Resten wie beispielsweise Methyl, Ethyl, n-Propyl oder iso-Propyl substituiert sein können, wobei diese C₁₋₆-aliphatischen Reste wiederum gegebenenfalls mit 1, 2 oder 3 Substituenten jeweils unabhängig voneinander ausgewählt aus der Gruppe bestehend aus OH, NH₂, NH(C₁₋₆-Alkyl) und N(C₁₋₆-Alkyl)₂ substituiert sein können. Besonders bevorzugt ist wenigstens ein Bindemittel (A1), welches reaktive funktionelle Gruppen ausgewählt aus der Gruppe bestehend aus gegebenenfalls substituierten primären Amino-Gruppen, gegebenenfalls substituierten sekundären Amino-Gruppen, und Hydroxyl-Gruppen aufweist, wobei die primären und sekundären Amino-Gruppen gegebenenfalls mit 1 oder 2 oder 3 Substituenten jeweils unabhängig voneinander ausgewählt aus der Gruppe bestehend aus C₁₋₆-aliphatischen Resten wie beispielsweise Methyl, Ethyl, n-Propyl oder iso-Propyl substituiert sein können, wobei diese C₁₋₆-aliphatischen Reste wiederum gegebenenfalls mit 1, 2 oder 3 Substituenten jeweils unabhängig voneinander ausgewählt aus der Gruppe bestehend aus OH, NH₂, NH(C₁₋₆-Alkyl) und N(C₁₋₆-Alkyl)₂ substituiert sein können. Die reaktiven funktionellen Gruppen, insbesondere die gegebenenfalls substituierten primären und sekundären Amino-Gruppen, können dabei gegebenenfalls zumindest teilweise in protonierter Form vorliegen.

Besonders bevorzugt weist das Bindemittel (A1) tertiäre gegebenenfalls zumindest teilweise in protonierter Form vorliegende Amino-Gruppen auf, ganz besonders bevorzugt solche tertiären Amino-Gruppen, die jeweils unabhängig voneinander wenigstens zwei jeweils wenigstens einfach mit einer Hydroxyl-Gruppe substituierte C₁₋₃-Alkyl-Gruppen aufweisen, insbesondere die jeweils unabhängig voneinander zwei Hydroxyethyl-Gruppen, zwei Hydroxypropyl-Gruppen oder eine Hydroxylpropyl- und eine Hydroxyethyl-Gruppe aufweisen, wobei das Bindemittel (A1) vorzugsweise wenigstens ein polymeres Harz ist. Derartige Bindemittel können beispielsweise nach einem Verfahren erhalten werden, welches in JP 2011-057944 A beschrieben ist.

Vorzugsweise ist das in der Beschichtungszusammensetzung (A) enthaltene Bindemittel (A1) wenigstens ein Acrylat-basiertes polymeres Harz und/oder wenigstens ein Epoxid-basiertes polymeres Harz, insbesondere wenigstens ein kationisches Epoxid-basiertes und Amin-modifiziertes Harz. Die Herstellung solcher kationischer Amin-modifizierter Epoxid-basierter Harze ist bekannt und wird beispielsweise in DE 35 18 732, DE 35 18 770, EP 0 004 090, EP 0 012 463, EP 0 961 797 B1 und EP 0 505 445 B1 beschrieben. Unter kationischen Epoxid-basierten Amin-modifizierten Harzen werden vorzugsweise Reaktionsprodukte aus wenigstens einem gegebenenfalls modifizierten Polyepoxid, d.h. wenigstens einer gegebenenfalls modifizierten Verbindung mit zwei oder mehr Epoxid-Gruppen, und wenigstens einem vorzugsweise wasserlöslichen Amin, vorzugsweise wenigstens einem solchen primären und/oder sekundären Amin verstanden. Besonders bevorzugte Polyepoxide sind dabei aus Polyphenolen und Epihalohydrinen hergestellte Polyglycidylether von Polyphenolen. Als Polyphenole können insbesondere Bisphenol A und/oder Bisphenol F eingesetzt werden. Weitere geeignete Polyepoxide sind Polyglycidylether von mehrwertigen Alkoholen, wie z. B. Ethylenglykol, Diethylenglykol, Triethylenglykol, 1,2-Propylenglykol- 1-4-Propylenglykol, 1,5-Pentandiol, 1,2,6-Hexantriol, Glycerin und Bis-(4-hydroxycyclohexyl)2,2propan. Unter modifizierten Polyepoxiden werden solche Polyepoxide verstanden, in denen ein Teil der reaktiven funktionellen Gruppen mit wenigstens einer modifizierenden Verbindung umgesetzt worden ist. Beispiele für solche modifizierenden Verbindungen sind:
a) Carboxylgruppenhaltige Verbindungen, wie gesättigte oder ungesättigte Monocarbonsäuren (z.B. Benzoesäure, Leinölfettsäure, 2-Ethylhexansäure, Versaticsäure), aliphatische, cycloaliphatische und/oder aromatische Dicarbonsäuren verschiedener Kettenlänge (z. B. Adipinsäure, Sebacinsäure, Isophthalsäure oder dimere Fettsäuren), Hydroxialkylcarbonsäuren (z.B. Milchsäure, Dimethylolpropionsäure) sowie carboxylgruppenhaltige Polyester oder
b) aminogruppenhaltige Verbindungen, wie Diethylamin oder Ethylhexylamin oder Diamine mit sekundären Aminogruppen, z. B. N,N'-Dialkylalykendiamine, wie Dimethylethylendiamin, N,N'-Dialkyl-polyoxialkylenamine, wie N,N'-dimethylpolyoxipropylendiamin, cyanalkylierte Alkylendiamine, wie Bis-N,N'-Cyanethyl-ethylendiamin, cyanalkylierte Polyoxialkylenamine, wie Bis-N,N'-Cyanethylpolyoxipropylendiamin, Polyaminoamide, wie z. B. Versamide, insbesondere endständige Aminogruppen enthaltende Umsetzungsprodukte aus Diaminen (z.B. Hexamethylendiamin), Polycarbonsäuren, insbesondere Dimerfettsäuren und Monocarbonsäuren, insbesondere Fettsäuren, oder das Umsetzungsprodukt von einem Mol Diaminohexan mit zwei Molen Monoglycidylether oder Monoglycidylester, speziell Glycidylester α-verzweigter Fettsäuren, wie der Versaticsäure, oder
c) hydroxylgruppenhaltige Verbindungen, wie Neopentylglykol, Bis-ethoxiliertes Neopentylglykol, Hydroxipivalinsäureneopentylglykolester, Dimethylhydantoin-N-N'-diethanol, Hexandiol-1,6, Hexandiol-2,5, 1,4-Bis- (hydroximethyl)cyclohexan, 1,1-Isopropyliden-bis-(p-phenoxy)-2-propanol, Trimethylolpropan, Pentaerythrit oder Aminoalkohole, wie Triethanolamin, Methyldiethanolamin oder hydroxylgruppenhaltige Alkylketimine, wie Aminomethylpropandiol-1,3-methyl-isobutylketimin oder Tris-(hydroximethyl)-aminomethan-cyclohexanonketimin sowie auch Polyglykolether, Polyesterpolyole, Polyetherpolyole, Polycaprolactonpolyole, Polycaprolactampolyole verschiedener Funktionalität und Molekulargewichte oder
d) gesättigte oder ungesättigte Fettsäuremethylester, die in Gegenwart von Natriummethylat mit Hydroxylgruppen der Epoxidharze umgeestert werden.
Beispiele für einsetzbare Amine sind Mono- und Dialkylamine, wie Methylamin, Ethylamin, Propylamin, Butylamin, Dimethylamin, Diethylamin, Dipropylamin, Methylbutylamin, Alkanolamine, wie z. B. Methylethanolamin oder Diethanolamin, Dialkylaminoalkylamine, wie z. B. Dimethylaminoethylamin, Diethylaminopropylamin, oder Dimethylaminopropylamin. Die einsetzbaren Amine können auch noch andere funktionelle Gruppen enthalten, sofern diese die Umsetzung des Amins mit der Epoxidgruppe des gegebenenfalls modifizierten Polyepoxids nicht stören und auch nicht zu einer Gelierung der Reaktionsmischung führen. Bevorzugt werden sekundäre Amine eingesetzt. Die für die Wasserverdünnbarkeit und elektrische Abscheidung erforderlichen Ladungen können durch Protonierung mit wasserlöslichen Säuren (z.B. Borsäure, Ameisensäure, Essigsäure, Milchsäure, bevorzugt Essigsäure) erzeugt werden. Eine weitere Möglichkeit zur Einführung kationischer Gruppen in die das gegebenenfalls modifizierte Polyepoxid besteht in der Umsetzung von Epoxidgruppen des Polyepoxids mit Amin-Salzen.

Vorzugsweise umfasst die Beschichtungszusammensetzung (A) neben dem wenigstens einen kathodisch abscheidbaren Bindemittel (A1) wenigstens ein Vernetzungsmittel (A2), welches eine Vernetzungsreaktion mit den reaktiven funktionellen Gruppen des Bindemittels (A1) ermöglicht.

Alle dem Fachmann bekannten üblichen Vernetzungsmittel (A2) können eingesetzt werden wie beispielsweise Phenoplaste, polyfunktionelle Mannich-Basen, Melaminharze, Benzoguanamin-Harze, Epoxide, freie Polyisocyanate und/oder blockierte Polyisocyanate, insbesondere blockierte Polyisocyanate.

Ein besonders bevorzugtes Vernetzungsmittel (A2) ist ein blockiertes Polyisocyanat. Als blockierte Polyisocyanate können beliebige Polyisocyanate wie beispielsweise Diisocyanate benutzt werden, bei denen die Isocyanat-Gruppen mit einer Verbindung umgesetzt worden sind, so dass das gebildete blockierte Polyisocyanat insbesondere gegenüber Hydroxyl- und Amino-Gruppen wie primärer und/oder sekundärer Amino-Gruppen bei Raumtemperatur, d.h. bei einer Temperatur von 18 bis 23°C beständig ist, bei erhöhten Temperaturen, beispielsweise bei ≥ 80°C, bevorzugter ≥ 110°C, besonders bevorzugt ≥ 130°C und ganz besonders bevorzugt ≥ 140°C oder bei 90°C bis 300°C oder bei 100 bis 250°C, noch bevorzugter bei 125 bis 250°C und besonders bevorzugt bei 150 bis 250°, aber reagiert.

Bei der Herstellung der blockierten Polyisocyanate können beliebige für die Vernetzung geeignete organische Polyisocyanate verwendet werden. Als Isocyanate werden bevorzugt (hetero)aliphatische, (hetero)cycloaliphatische, (hetero)aromatische oder (hetero)aliphatisch-(hetero)aromatische Isocyanate eingesetzt. Bevorzugt sind Diisocyanate, die 2 bis 36, insbesondere 6 bis 15 Kohlenstoffatome enthalten. Bevorzugte Beispiele sind 1,2-Ethylendiisocyanat, 1,4-Tetramethylendiisocyanat, 1,6-Hexamethylendiisocyanat (HDI), 2,2,4-(2,4,4)-Trimethyl-1,6-hexamethylendiisocyanat (TMDI), Diphenylmethandiisocyanat (MDI), 1,9-Diisocyanato-5-methylnonan, 1,8-Diisocyanato-2,4-dimethyloctan, 1,12-Dodecandiisocyanat, ω,ω'-Diisocyanatodipropylether, Cyclobuten-1,3-diisocyanat, Cyclohexan-1,3- und -1,4-diisocyanat, 3-Isocyanato-methyl-3,5,5-trimethyl-cyclohexylisocyanat (Isophorondiisocyanat, IPDI), 1,4-Diisocyanatomethyl-2,3,5,6-tetramethyl-cyclohexan, Decahydro-8-methyl-(1,4-methanol-naphthalen-2 (oder 3), 5-ylendimethylendiisocyanat, Hexahydro-4,7-methano-indan-1 (oder 2), 5 (oder 6) ylendimethylendiisocyanat, Hexahydro-4,7-methanoindan-1 (oder 2), 5 (oder 6) ylendiisocyanat, 2,4- und/oder 2,6-Hexahydrotoluylendiisocyanat (H6-TDI), 2,4- und/oder 2,6-Toluoldiisocyanat (TDI), Perhydro-2,4'-diphenylmethandiisocyanat, Perhydro-4,4'-diphenylmethandiisocyanat (H₁₂MDI), 4,4'-Diisocyanato-3,3',5,5'-tetramethyldicyclohexylmethan, 4,4'-Diisocyanato-2,2',3,3',5,5',6,6'-octamethyldicyclohexylmethan, ω,ω'-Diisocyanato-1,4-diethylbenzen, 1,4-Diisocyanatomethyl-2,3,5,6-tetramethylbenzen, 2-Methyl-1,5-diisocyanatopentan (MPDI), 2-Ethyl-1,4-diisocyanatobutan, 1,10-Diisocyanatodecan, 1,5-Diisocyanatohexan, 1,3-Diisocyanatomethylcyclohexan, 1,4-Diisocyanatomethylcyclohexan, 2,5(2,6)-Bis(isocyanatomethyl)bicyclo[2.2.1]heptan (NBDI), sowie jede Mischung dieser Verbindungen. Es können auch Polyisocyanate von höherer Isocyanatfunktionalität verwendet werden. Beispiele dafür sind trimerisiertes Hexamethylendiisocyanat und trimerisiertes Isophorondiisocyanat. Ferner kann man auch Mischungen von Polyisocyanaten benutzen. Die bei der Erfindung als Vernetzungsmittel (A2) in Betracht kommenden organischen Polyisocyanate können auch Präpolymere sein, die sich beispielsweise von einem Polyol einschliesslich eines Polyetherpolyols oder eines Polyesterpolyols ableiten. Ganz besonders bevorzugt sind 4-Toluoldiisocyanat und/oder 2,6-Toluoldiisocyanat (TDI), bzw. Isomerengemische aus 2,4-Toluoldiisocyanat und 2,6-Toluoldiisocyanat und/oder Diphenylmethandiisocyanat (MDI).

Für die Blockierung der Polyisocyanate können vorzugsweise beliebige geeignete aliphatische, cycloaliphatische oder aromatische Alkylmonoalkohole verwendet werden. Beispiele dafür sind aliphatische Alkohole, wie Methyl-, Ethyl-, Chlorethyl-, Propyl-, Butyl-, Amyl-, Hexyl-, Heptyl, Octyl-, Nonyl-, 3,3,5-Trimethylhexyl-, Decyl- und Laurylalkohol; cycloaliphatische Alkohole, wie Cyclopentanol und Cyclohexanol; aromatische Alkylalkohole, wie Phenylcarbinol und Methylphenylcarbinol. Andere geeignete Blockierungsmittel sind Hydroxylamine, wie Ethanolamin, Oxime, wie Methylethylketonoxim, Acetonoxim und Cyclohexanonoxim und Amine, wie Dibutylamin und Diisopropylamin.

Vorzugsweise liegt das relative Gewichtsverhältnis des wenigstens einen Bindemittels (A1) und des gegebenenfalls vorhandenen wenigstens einen Vernetzungsmittels (A2) in der erfindungsgemäß eingesetzten Beschichtungszusammensetzung (A) zueinander in einem Bereich von 4:1 bis 1,1:1, besonders bevorzugt in einem Bereich von 3:1 bis 1,1:1, ganz besonders bevorzugt in einem Bereich von 2,5:1 bis 1,1:1, insbesondere in einem Bereich von 2,1:1 bis 1,1:1, jeweils bezogen auf den Festkörper-Anteil des wenigstens einen Bindemittels (A1) und des wenigstens einen Vernetzungsmittel (A2) in der Beschichtungszusammensetzung (A).

In einer anderen bevorzugten Ausführungsform liegt das relative Gewichtsverhältnis des wenigstens einen Bindemittels (A1) und des gegebenenfalls vorhandenen wenigstens einen Vernetzungsmittels (A2) in der erfindungsgemäß eingesetzten Beschichtungszusammensetzung (A) zueinander in einem Bereich von 4:1 bis 1,5:1, besonders bevorzugt in einem Bereich von 3:1 bis 1,5:1, ganz besonders bevorzugt in einem Bereich von 2,5:1 bis 1,5:1, insbesondere in einem Bereich von 2,1:1 bis 1,5:1, jeweils bezogen auf den Festkörper-Anteil des wenigstens einen Bindemittels (A1) und des wenigstens einen Vernetzungsmittel (A2) in der Beschichtungszusammensetzung (A).

### Beschichtungszusammensetzung (A)

Die erfindungsgemäße wässrige Beschichtungszusammensetzung (A) eignet sich zur zumindest teilweisen Beschichtung eines elektrisch leitfähigen Substrats mit einem Elektrotauchlack, d.h. sie ist dazu geeignet, zumindest teilweise in Form einer Elektrotauchlackschicht auf die Substratoberfläche eines elektrisch leitfähigen Substrats aufgebracht zu werden. Vorzugsweise ist die gesamte erfindungsgemäße wässrige Beschichtungszusammensetzung (A) kathodisch abscheidbar.

Die erfindungsgemäßen wässrigen Beschichtungszusammensetzungen (A) enthalten als flüssiges Verdünnungsmittel Wasser.

Unter dem Begriff "wässrig" im Zusammenhang mit der Beschichtungszusammensetzung (A) werden vorzugsweise solche flüssigen Beschichtungszusammensetzungen (A) verstanden, die - als flüssiges Verdünnungsmittel, d.h. als flüssiges Lösemittel und/oder Dispergiermittel - Wasser als Hauptkomponente enthalten. Gegebenenfalls können die Beschichtungszusammensetzungen (A) jedoch wenigstens ein organisches Lösemittel in geringen Anteilen enthalten. Als Beispiele für solche organischen Lösemittel seien heterocyclische, aliphatische oder aromatische Kohlenwasserstoffe, ein- oder mehrwertige Alkohole, insbesondere Methanol und/oder Ethanol, Ether, Ester, Ketone und Amide, wie z. B. N-Methylpyrrolidon, N-Ethylpyrrolidon, Dimethylformamid, Toluol, Xylol, Butanol, Ethyl- und Butylglykol sowie deren Acetate, Butyldiglykol, Diethylenglykoldimethylether, Cyclohexanon, Methylethylketon, Methylisobutylketon, Aceton, Isophoron oder Mischungen davon genannt. Vorzugsweise beträgt der Anteil dieser organischen Lösemittel höchstens 20,0 Gew.-%, besonders bevorzugt höchstens 15,0 Gew.-%, ganz besonders bevorzugt höchstens 10,0 Gew.-%, insbesondere höchstens 5,0 Gew.-% oder höchstens 4,0 Gew.-% oder höchstens 3,0 Gew.-%, noch bevorzugter höchstens 2,5 Gew.-% oder höchstens 2,0 Gew.-% oder höchstens 1,5 Gew.-%, am meisten bevorzugt höchstens 1,0 Gew.-% oder höchstens 0,5 Gew.-%, jeweils bezogen auf den Gesamtanteil der in Beschichtungszusammensetzung (A) enthaltenen flüssigen Verdünnungsmitteln, d.h. flüssigen Lösemitteln und/oder Dispergiermitteln.

Die Anteile in Gew.-% aller in der erfindungsgemäßen Beschichtungszusammensetzung (A) enthaltenen Komponenten, d.h. die Anteile von (A1), (A3), (A4), (A5) und Wasser sowie gegebenenfalls (A2) und/oder (A6) und/oder (A7) und/oder (A8) und/oder organischer Lösemittel addieren sich vorzugsweise auf 100 Gew.-%, bezogen auf das Gesamtgewicht der Beschichtungszusammensetzung (A).

Vorzugsweise weist die wässrige Beschichtungszusammensetzung (A) einen Festkörper-Anteil im Bereich von 5 bis 45 Gew.-%, besonders bevorzugt im Bereich von 7,5 bis 35 Gew.-%, ganz besonders bevorzugt von 10 bis 30 Gew.-%, noch bevorzugter im Bereich von 12,5 bis 25 Gew.-% oder im Bereich von 15 bis 30 Gew.-% oder im Bereich von 15 bis 25 Gew-%, insbesondere von 17 bis 22 Gew.-%, jeweils bezogen auf das Gesamtgewicht der wässrigen Beschichtungszusammensetzung (A) auf. Bestimmungsmethoden zur Bestimmung des Festkörper-Anteils sind dem Fachmann bekannt. Vorzugsweise wird der Festkörper-Anteil gemäß DIN EN ISO 3251 (Datum: 1.6.2008) bestimmt.

Die erfindungsgemäß eingesetzte wässrige Beschichtungszusammensetzung (A) ist vorzugsweise eine wässrige Dispersion oder Lösung, vorzugsweise eine wässrige Dispersion.

Die erfindungsgemäße Beschichtungszusammensetzung (A) weist einen pH-Wert in einem Bereich von 4,0 bis 6,5 auf. Vorzugsweise weist die erfindungsgemäß eingesetzte Beschichtungszusammensetzung (A) einen pH-Wert im Bereich von 4,2 bis 6,5, insbesondere im Bereich von 4,4 bis 6,5 oder im Bereich von 4,6 bis 6,5, insbesondere bevorzugt im Bereich von 4,8 bis 6,4, am meisten bevorzugt im Bereich von 5,0 bis 6,2 oder 5,2 bis 6,0 oder 5,5 bis 6,0 auf. Methoden zur Einstellung von pH-Werten in wässrigen Zusammensetzungen sind dem Fachmann bekannt. Vorzugsweise erfolgt die Einstellung des erwünschten pH-Werts durch Zugabe wenigstens einer Säure, besonders bevorzugt wenigstens einer anorganischen und/oder wenigstens einer organischen Säure. Geeignete anorganische Säuren sind beispielsweise Salzsäure, Schwefelsäure, Phosphorsäure und/oder Salpetersäure. Eine geeignete organische Säure ist beispielsweise Propionsäure, Milchsäure, Essigsäure und/oder Ameisensäure. Alternativ oder zusätzlich und zudem vorzugsweise kann auch die wenigstens eine in der Beschichtungszusammensetzung (A) vorhandene Komponente (A5) zur Einstellung des pH-Werts eingesetzt werden, sofern diese dazu geeignet ist, d.h. beispielsweise wenigstens eine deprotonierbare funktionelle Gruppe wie beispielsweise eine Carboxyl-Gruppe und/oder eine phenolische OH-Gruppe aufweist.

Vorzugsweise ist die erfindungsgemäße Beschichtungszusammensetzung (A) erhältlich durch
teilweises Überführen wenigstens einer in Wasser unlöslichen Bismut-Verbindung durch teilweise Umsetzung von dieser Verbindung mit wenigstens einem zur Komplexierung von Bismut geeigneten wenigstens zweizähnigen Komplexierungsmittel (A5) in wenigstens eine in Wasser lösliche Bismut-Verbindung (A3) in Wasser, gegebenenfalls in Gegenwart wenigstens einer der Komponenten (A6) bis (A8) und gegebenenfalls (A1) und/oder (A2), unter Erhalt einer wenigstens die Komponenten (A3), (A4) und (A5) sowie gegebenenfalls wenigstens einer der Komponenten (A6) bis (A8) und/oder gegebenenfalls (A1) und/oder (A2) der Beschichtungszusammensetzung (A) enthaltenen Mischung, und
gegebenenfalls Mischen der so erhaltenen Mischung wenigstens mit der Komponente (A1) und gegebenenfalls der Komponente (A2), gegebenenfalls in Gegenwart wenigstens einer der Komponenten (A6) bis (A8), unter Erhalt der Beschichtungszusammensetzung (A).

Vorzugsweise ist die eingesetzte in Wasser unlösliche Bismut-Verbindung Bestandteil einer Pigmentpaste, welche wenigstens ein Pigment (A6) enthält.

Vorzugsweise ist die erfindungsgemäße Beschichtungszusammensetzung (A) erhältlich, ohne dass eine separate Herstellung einer wässrigen Lösung der Komponente (A3) erforderlich ist. Dies erspart Zeit und Kosten und mögliche auftretende Probleme hinsichtlich der Stabilität der Beschichtungszusammensetzung (A) bei einer Zugabe einer solchen wässrigen Lösung der Komponente (A3), insbesondere wenn die Beschichtungszusammensetzung in einem Tauchlackbad zur zumindest teilweisen Beschichtung elektrisch leitfähiger Substrate eingesetzt wird.

Die Beschichtungszusammensetzung (A) enthält eine Gesamtmenge von wenigstens 130 ppm Bismut, bezogen auf das Gesamtgewicht der Beschichtungszusammensetzung (A).

Unter dem Begriff "Bismut" insbesondere im Zusammenhang mit der Gesamtmenge an Bismut in der Beschichtungszusammensetzung (A) und der Komponente (A3) sowie gegebenenfalls (A4) werden im Sinne der vorliegenden Erfindung vorzugsweise gegebenenfalls geladene wie zum Beispiel positiv geladene kationische Bismut-Atome unterschiedlicher Wertigkeiten verstanden. Das Bismut kann dabei in trivalenter Form (Bi(III)) vorliegen, kann aber alternativ oder zusätzlich auch in anderen Oxidationsstufen vorliegen. Die Menge an Bismut wird jeweils als Bismut-Metall berechnet.

Vorzugsweise beträgt die Gesamtmenge des in der Beschichtungszusammensetzung (A) enthaltenen Bismuts wenigstens 150 ppm oder wenigstens 175 ppm oder wenigstens 200 ppm, besonders bevorzugt wenigstens 300 ppm, ganz besonders bevorzugt wenigstens 500 oder wenigstens 750 ppm, insbesondere wenigstens 1 000 ppm oder wenigstens 1 500 ppm oder wenigstens 2 000 ppm, jeweils bezogen auf das Gesamtgewicht der Beschichtungszusammensetzung (A). Dabei beträgt die Gesamtmenge des in der Beschichtungszusammensetzung (A) enthaltenen Bismuts vorzugsweise jeweils höchstens 20 000 ppm, besonders bevorzugt höchstens 15 000 ppm, ganz besonders bevorzugt höchstens 10 000 ppm oder höchstens 7 500 ppm, insbesondere höchstens 5 000 ppm oder höchstens 4 000 ppm, jeweils bezogen auf das Gesamtgewicht der Beschichtungszusammensetzung (A). Vorzugsweise liegt die Gesamtmenge des in der Beschichtungszusammensetzung (A) enthaltenen Bismuts, bezogen auf das Gesamtgewicht der wässrigen Beschichtungszusammensetzung (A) in einem Bereich von 10 ppm bis 20 000 ppm, besonders bevorzugt in einem Bereich von 50 ppm bis 15 000 ppm, ganz besonders bevorzugt in einem Bereich von 100 ppm bis 10 000 ppm, insbesondere bevorzugt in einem Bereich von 500 ppm bis 10 000 ppm oder in einem Bereich von 500 bis 20 000 ppm oder in einem Bereich von 1 000 ppm bis 10 000 ppm oder in einem Bereich von 1 000 ppm bis 5 000 ppm oder in einem Bereich von 500 ppm bis 3 000 ppm. Vorzugsweise ist die Gesamtmenge des in der Beschichtungszusammensetzung (A) enthaltenen Bismuts jeweils die Summe aus (A3) und (A4). Die Menge an Bismut, berechnet als Metall, kann mittels der nachstehenden Methode (ICP-OES) bestimmt werden.

### Komponente (A3)

Die erfindungsgemäße Beschichtungszusammensetzung (A) enthält eine Gesamtmenge von wenigstens 130 ppm Bismut, bezogen auf das Gesamtgewicht der Beschichtungszusammensetzung (A), enthält, wobei davon
(A3) wenigstens 30 ppm Bismut, bezogen auf das Gesamtgewicht der Beschichtungszusammensetzung (A), in einer in der Beschichtungszusammensetzung (A) gelöst vorliegenden Form vorhanden sind, und
(A4) wenigstens 100 ppm Bismut, bezogen auf das Gesamtgewicht der Beschichtungszusammensetzung (A), in einer in der Beschichtungszusammensetzung (A) ungelöst vorliegenden Form vorhanden sind.

Vorzugsweise liegen die Komponenten (A3) und (A5) in Form eines Komplexes und/oder Salzes aus den Komponenten (A3) und (A5) in der Beschichtungszusammensetzung (A) vor. Die wenigstens 30 ppm Bismut, welche in einer in der Beschichtungszusammensetzung (A) als Komponente (A3) gelösten Form vorliegen, liegen daher vorzugsweise gemeinsam mit der Komponente (A5) in Form einer in der Beschichtungszusammensetzung (A) gelösten Bismut-Verbindung vor, insbesondere in Form wenigstens eines gelösten Salzes und/oder eines Komplexes aus den Komponenten (A3) und (A5). Alternativ und/oder zusätzlich kann die Komponente (A3) beispielsweise auch in Form von hydratisiertem trivalenten Bismut vorliegen.

Vorzugsweise liegt als Komponente (A3) zumindest teilweise trivalentes Bismut vor. Dieses kann hydratisiert und/oder in Form wenigstens eines gelösten Salzes und/oder eines Komplexes, insbesondere gemeinsam mit (A5), vorliegen.

Unter dem Begriff "in gelöst vorliegender Form" im Zusammenhang mit der Komponente (A3) der erfindungsgemäßen Beschichtungszusammensetzung (A) wird vorzugsweise verstanden, dass die Komponente (A3) bei einer Temperatur der Beschichtungszusammensetzung (A) in einem Bereich von 18 bis 40 °C in gelöst vorliegender Form in der Beschichtungszusammensetzung (A) vorliegt. Die Komponente (A3) ist vorzugsweise wasserlöslich.

Vorzugsweise ist die Komponente (A3) erhältlich ist aus wenigstens einer Bismut-Verbindung ausgewählt aus der Gruppe bestehend aus Oxiden, basischen Oxiden, Hydroxiden, Carbonaten, Nitraten, basischen Nitraten, Salicylaten und basischen Salicylaten des Bismuts sowie Mischungen davon. Dabei wird wenigstens eine solche Bismut-Verbindung vorzugsweise in Wasser in Gegenwart wenigstens eines Komplexierungsmittels (A5) teilweise unter Erhalt der Komponente (A3) umgesetzt.

Vorzugsweise enthält die Beschichtungszusammensetzung (A) wenigstens 50 ppm, besonders bevorzugt wenigstens 75 ppm, ganz besonders bevorzugt wenigstens 100 ppm oder wenigstens 200 ppm, insbesondere wenigstens 250 ppm Bismut, jeweils bezogen auf das Gesamtgewicht der Beschichtungszusammensetzung (A), in einer in der Beschichtungszusammensetzung (A) gelöst vorliegenden Form als Komponente (A3). Dem Fachmann ist klar, - da die Beschichtungszusammensetzung (A) wenigstens 100 ppm Bismut, bezogen auf das Gesamtgewicht der Beschichtungszusammensetzung (A), in einer in der Beschichtungszusammensetzung (A) ungelöst vorliegenden Form (A4) enthält -, dass die Beschichtungszusammensetzung (A) dadurch eine Gesamtmenge von wenigstens 150 ppm bzw. 175 ppm bzw. 200 ppm bzw. 300 ppm bzw. 350 ppm Bismut, jeweils bezogen auf das Gesamtgewicht der Beschichtungszusammensetzung (A), enthält. Die Menge an als Komponente (A3) gelöst vorliegendem Bismut wird jeweils als Bismut-Metall berechnet.

Der Anteil der Komponente (A3) in der Beschichtungszusammensetzung (A) kann mittels nachstehender Bestimmungsmethode ermittelt werden.

### Komponente (A4)

Die erfindungsgemäße Beschichtungszusammensetzung (A) enthält eine Gesamtmenge von wenigstens 130 ppm Bismut, bezogen auf das Gesamtgewicht der Beschichtungszusammensetzung (A), enthält, wobei davon
(A3) wenigstens 30 ppm Bismut, bezogen auf das Gesamtgewicht der Beschichtungszusammensetzung (A), in einer in der Beschichtungszusammensetzung (A) gelöst vorliegenden Form vorhanden sind, und
(A4) wenigstens 100 ppm Bismut, bezogen auf das Gesamtgewicht der Beschichtungszusammensetzung (A), in einer in der Beschichtungszusammensetzung (A) ungelöst vorliegenden Form vorhanden sind.

Die wenigstens 100 ppm Bismut, welche in einer in der Beschichtungszusammensetzung (A) als Komponente (A4) ungelösten Form vorliegen, liegen vorzugsweise in Form einer in der Beschichtungszusammensetzung (A) ungelösten Bismut-Verbindung vor, insbesondere in Form wenigstens eines ungelösten Bismut-Salzes, Hydroxids und/oder Oxids.

Vorzugsweise beträgt der Anteil der Komponente (A4) innerhalb der Gesamtmenge des in der Beschichtungszusammensetzung (A) enthaltenen Bismuts, d.h. bezogen auf die Gesamtmenge des in der Beschichtungszusammensetzung (A) enthaltenen Bismuts in Mol, wenigstens 10 mol-%, besonders bevorzugt wenigstens 20 mol-% oder wenigstens 30 mol-%, ganz besonders bevorzugt wenigstens 40 mol-% oder wenigstens 50 mol-% oder wenigstens 60 mol-% oder wenigstens 70 mol-%. Dabei beträgt der Anteil der Komponente (A4) innerhalb der Gesamtmenge des in der Beschichtungs-zusammensetzung (A) enthaltenen Bismuts vorzugsweise jeweils höchstens 98 mol-%, besonders bevorzugt höchstens 97 mol-% oder höchstens 96 mol-%, ganz besonders bevorzugt höchstens 95 mol-%.

Der Anteil der Komponente (A4) in mol-% innerhalb der Gesamtmenge des in der Beschichtungszusammensetzung (A) enthaltenen Bismuts ist größer als der Anteil der Komponente (A3) in mol-%.

Unter dem Begriff "in ungelöst vorliegender Form" im Zusammenhang mit der Komponente (A4) der erfindungsgemäßen Beschichtungszusammensetzung (A) wird vorzugsweise verstanden, dass die Komponente (A4) bei einer Temperatur der Beschichtungszusammensetzung (A) in einem Bereich von 18 bis 40 °C in ungelöst vorliegender Form in der Beschichtungszusammensetzung (A) vorliegt. Die Komponente (A4) ist vorzugsweise wasserunlöslich.

Vorzugsweise ist die Komponente (A4) erhältlich aus wenigstens einer Bismut-Verbindung ausgewählt aus der Gruppe bestehend aus Oxiden, basischen Oxiden, Hydroxiden, Carbonaten, basischen Nitraten (Subnitraten), Salicylaten und basischen Salicylaten (Subsalicylaten) des Bismuts sowie Mischungen davon, besonders bevorzugt erhältlich aus Bismut-Subnitrat.

Vorzugsweise enthält die Beschichtungszusammensetzung (A) wenigstens 150 ppm, besonders bevorzugt wenigstens 200 ppm, ganz besonders bevorzugt wenigstens 250 ppm oder wenigstens 300 ppm, insbesondere wenigstens 500 ppm Bismut, jeweils bezogen auf das Gesamtgewicht der Beschichtungszusammensetzung (A), in einer in der Beschichtungszusammensetzung (A) ungelöst vorliegenden Form als Komponente (A4). Dem Fachmann ist klar - da die Beschichtungszusammensetzung (A) wenigstens 30 ppm Bismut, bezogen auf das Gesamtgewicht der Beschichtungszusammensetzung (A), in einer in der Beschichtungszusammensetzung (A) gelöst vorliegenden Form (A3) enthält -, dass die Beschichtungszusammensetzung (A) dadurch eine Gesamtmenge von wenigstens 180 ppm bzw. wenigstens 230 ppm bzw. wenigstens 280 ppm bzw. wenigstens 330 ppm bzw. wenigstens 530 ppm Bismut, jeweils bezogen auf das Gesamtgewicht der Beschichtungszusammensetzung (A), enthält. Die Menge an als Komponente (A4) ungelöst vorliegendem Bismut wird jeweils als Bismut-Metall berechnet.

Der Anteil der Komponente (A4) in der Beschichtungszusammensetzung (A) kann mittels nachstehender Bestimmungsmethode ermittelt werden.

Vorzugsweise enthält die Beschichtungszusammensetzung (A) eine Gesamtmenge von wenigstens 300 ppm Bismut, bezogen auf das Gesamtgewicht der Beschichtungszusammensetzung (A), wobei davon
(A3) wenigstens 100 ppm Bismut, bezogen auf das Gesamtgewicht der Beschichtungszusammensetzung (A), in einer in der Beschichtungszusammensetzung (A) gelöst vorliegenden Form und
(A4) wenigstens 200 ppm Bismut, bezogen auf das Gesamtgewicht der Beschichtungszusammensetzung (A), in einer in der Beschichtungszusammensetzung (A) ungelöst vorliegenden Form vorhanden sind.

Besonders bevorzugt enthält die Beschichtungszusammensetzung (A) eine Gesamtmenge von wenigstens 400 ppm Bismut, bezogen auf das Gesamtgewicht der Beschichtungszusammensetzung (A), wobei davon
(A3) wenigstens 150 ppm Bismut, bezogen auf das Gesamtgewicht der Beschichtungszusammensetzung (A), in einer in der Beschichtungszusammensetzung (A) gelöst vorliegenden Form und
(A4) wenigstens 250 ppm Bismut, bezogen auf das Gesamtgewicht der Beschichtungszusammensetzung (A), in einer in der Beschichtungszusammensetzung (A) ungelöst vorliegenden Form vorhanden sind.

Ganz besonders bevorzugt enthält die Beschichtungszusammensetzung (A) eine Gesamtmenge von wenigstens 500 ppm Bismut, bezogen auf das Gesamtgewicht der Beschichtungszusammensetzung (A), wobei davon
(A3) wenigstens 200 ppm Bismut, bezogen auf das Gesamtgewicht der Beschichtungszusammensetzung (A), in einer in der Beschichtungszusammensetzung (A) gelöst vorliegenden Form und
(A4) wenigstens 300 ppm Bismut, bezogen auf das Gesamtgewicht der Beschichtungszusammensetzung (A), in einer in der Beschichtungszusammensetzung (A) ungelöst vorliegenden Form vorhanden sind.

### Komponente (A5)

Die erfindungsgemäße Beschichtungszusammensetzung (A) enthält wenigstens ein zur Komplexierung von Bismut geeignetes wenigstens zweizähniges Komplexierungsmittel als Komponente (A5), wobei das wenigstens eine Komplexierungsmittel (A5) in der wässrigen Beschichtungszusammensetzung (A) in einem Anteil von wenigstens 5 mol-%, bezogen auf die Gesamtmenge des in der Beschichtungszusammensetzung (A) enthaltenen Bismuts, vorhanden ist.

Dabei ist die Komponente (A5) sowohl zur Komplexierung von (A3) als auch (A4) geeignet. Vorzugsweise wird durch die Gegenwart der Komponente (A5) in der Beschichtungszusammensetzung (A) die Komponente (A4) teilweise in die Komponente (A3) überführt. Vorzugsweise ist das wenigstens eine Komplexierungsmittel (A5) daher zur Ausbildung von Salzen und/oder Komplexen mit der in der wässrigen Beschichtungszusammensetzung (A) enthaltenen Komponente (A3) geeignet.

Als Komponente (A5) sind insbesondere solche Komplexierungsmittel geeignet, welche in der Lage sind, in Wasser die Komponente (A4), vorzugsweise bei Temperaturen im Bereich von 10 bis 90 °C oder im Bereich von 20 bis 80 °C, besonders bevorzugt im Bereich von 30 bis 75 °C, in eine wasserlösliche Form (A3) zu überführen.

Ob eine bestimmte Komponente oder chemische Verbindung als erfindungsgemäß eingesetztes wenigstens zweizähniges Komplexierungsmittel (A5) geeignet ist, ist für den Fachmann durch folgende Bestimmungsmethode zu überprüfen: Die Gesamtmenge der in einer Beschichtungszusammensetzung, die jedoch kein Komplexierungsmittel enthält, enthaltenen Komponenten (A3) und (A4) bzw. deren Anteile wird mittels der nachstehenden Methode bestimmt. Zu dieser Zusammensetzung wird eine solche Menge der chemischen Verbindung, deren Komplexierungseignung untersucht werden soll, gegeben, dass das Molverhältnis dieser Verbindung zur Komponente (A4) in der Zusammensetzung genau eins beträgt. Die resultierende Mischung wird bei 18 bis 23°C für eine Dauer von 24 Stunden gerührt und dann die Menge an in der Zusammensetzung enthaltener Komponente (A3) mittels der nachstehend beschriebenen Methode bestimmt. Wenn sich der Gehalt an Komponente (A3), welche aus dem Ultrafiltrat bestimmt wird, um wenigstens 50%, vorzugsweise um wenigstens 100%, bezogen auf den vor Zugabe der Komponente oder Verbindung ermittelten Gehalt an (A3) erhöht hat, so ist die Komponente oder Verbindung als Komplexierungsmittel (A5) im Sinne der vorliegenden Erfindung geeignet.

Vorzugsweise ist das wenigstens eine Komplexierungsmittel (A5) in der wässrigen Beschichtungszusammensetzung (A) in einem Anteil von wenigstens 7,5 mol-% oder wenigstens 10 mol-%, besonders bevorzugt in einem Anteil von wenigstens 15 mol-% oder wenigstens 20 mol-%, ganz besonders bevorzugt in einem Anteil von wenigstens 30 mol-% oder wenigstens 40 mol-%, insbesondere in einem Anteil von wenigstens 50 mol-%, jeweils bezogen auf die Gesamtmenge des in der Beschichtungszusammensetzung (A) enthaltenen Bismuts, vorhanden. Die jeweilige Menge des erfindungsgemäß eingesetzten Komplexierungsmittel (A5) ist dabei beispielsweise abhängig von der Zähnigkeit von (A5) und/oder der Komplexierungsstärke von (A5). Das wenigstens eine Komplexierungsmittel (A5) ist in der wässrigen Beschichtungszusammensetzung (A) aber in einem solchen Anteil vorhanden, dass gewährleistet ist, dass wenigstens 100 ppm Bismut, bezogen auf das Gesamtgewicht der Beschichtungszusammensetzung (A), in einer in der Beschichtungszusammensetzung (A) ungelöst vorliegenden Form vorhanden sind.

Das Komplexierungsmittel (A5) ist vorzugsweise keine Bindemittel-Komponente (A1) und wird insbesondere auch nicht zur Herstellung des Bindemittels (A1) eingesetzt.

Das Komplexierungsmittel (A5) ist wenigstens zweizähnig. Einem Fachmann ist der Begriff der "Zähnigkeit" bekannt. Darunter wird die Anzahl möglicher Bindungen verstanden, die von einem Molekül des Komplexierungsmittels (A5) an das zu komplexierende Atom wie an das zu komplexierende Bismut-Atom und/oder Bismut-Ion ausgebildet werden können. Bevorzugt ist (A5) zweizähnig, dreizähnig oder vierzähnig, insbesondere zweizähnig.

Das Komplexierungsmittel (A5) kann als Anion, beispielsweise als Anion einer organischen Mono- oder Polycarbonsäure vorliegen.

Vorzugsweise weist das Komplexierungsmittel (A5) wenigstens zwei Donoratome auf, d.h. wenigstens zwei Atome mit mindestens einem freien Elektronenpaar in der Valenzschale. Bevorzugte Donoratome sind ausgewählt aus der Gruppe bestehend aus N-, S- und O-Atomen, sowie Mischungen davon. Besonders bevorzugt sind Komplexierungsmittel (A5), die wenigstens ein Sauerstoff-Donoratom und wenigstens ein Stickstoff-Donoratom aufweisen oder die wenigstens zwei Sauerstoff-Donoratome aufweisen. Ganz besonders bevorzugt sind Komplexierungsmittel (A5), die wenigstens zwei Sauerstoff-Donoratome aufweisen.

Sind O- und/oder S-Donoratome im Komplexierungsmittel (A5) vorhanden, so ist vorzugsweise jedes dieser wenigstens zwei Donoratome an ein anderes Trägeratom wie ein Kohlenstoffatom gebunden, welches selbst kein Donoratom darstellt. Sind wenigstens zwei N-Donoratome im Komplexierungsmittel (A5) vorhanden, so kann jedes dieser wenigstens zwei N-Donoratome an das gleiche Trägeratom gebunden werden, welches selbst kein Donoratom darstellt, wie beispielsweise im Fall von Guanidin oder Harnstoff.

Sind O- und/oder S-Donoratome im Komplexierungsmittel (A5) wie beispielsweise wenigstens zwei O-Donoratome vorhanden und ist jedes dieser wenigstens zwei Donoratome an ein anderes Trägeratom wie an ein Kohlenstoffatom gebunden, welches selbst kein Donoratom darstellt, so können diese wenigstens zwei Trägeratome direkt aneinander gebunden, d.h. benachbart sein, wie es beispielsweise bei Oxalsäure, Milchsäure, Bicin (N,N'-Bis((2-Hydroxyethyl)glycin), EDTA oder α-Aminosäuren der Fall ist. Zwei Donoratome, die zwei aneinander gebundenen Trägeratome und das zu komplexierende Atom und/oder Ion können dann einen Fünfring ausbilden. Die beiden Trägeratome können alternativ auch über ein einziges weiteres Atom miteinander verbrückt sein, wie es beispielsweise bei Acetylacetonat oder hinsichtlich der Phosphoratome als Trägeratome bei 1-Hydroxyethan-1,1-diphosphonsäure der Fall ist. Zwei Donoratome, die zwei Trägeratome, das diese Trägeratome verbrückende Atom und das zu komplexierende Atom und/oder Ion können dann einen Sechsring ausbilden. Die mindestens zwei Trägeratome können ferner durch zwei weitere Atome miteinander verbunden sein, wie es beispielsweise bei Maleinsäure der Fall ist. Liegt zwischen den beiden Atomen, die die Trägeratome miteinander verbinden, eine Doppelbindung vor, so müssen die beiden Trägeratome in cis-Stellung zueinander stehen, um eine Siebenringbildung mit dem zu komplexierenden Atom und/oder Ion zu ermöglichen. Sind zwei Trägeratome Teil eines aromatischen Systems oder sind diese Trägeratome durch bis zu zwei weitere Trägeratome miteinander verbunden, so sind Stellungen im aromatischen System in 1,2- und 1,3-Position bevorzugt, wie beispielsweise im Fall der Gallussäure, des Tirons der Salicylsäure oder der Phthalsäure. Weiterhin können die Donoratome auch selbst Teil eines aliphatischen oder aromatischen Ringsystems sein, wie beispielsweise im Fall des 8-Hydroxychinolins.

Ganz besonders bevorzugt sind Komplexierungsmittel (A5), die wenigstens zwei Sauerstoff-Donoratome aufweisen. In diesem Fall kann wenigstens eines der Sauerstoff-Donoratome eine negative Ladung aufweisen, wie beispielsweise im Fall von Acetylacetonat, oder Teil einer Säure-Gruppe sein wie beispielsweise einer Carbonsäure-Gruppe, Phosphonsäure-Gruppe oder Sulfonsäure-Gruppe. Gegebenenfalls kann auch oder alternativ das Sauerstoffatom der Säure-Gruppe eine negative Ladung tragen wie bei Deprotonierung und Ausbildung einer Carboxylat-Gruppe, Phosphonat oder Sulfonat-Gruppe.

Ist wenigstens ein Donoratom ein N-Atom, so ist ein weiteres Donoratom vorzugsweise ein O-Atom, das eine negative Ladung trägt, oder Teil einer Säuregruppe (Carbonsäure, Phosphonsäure, Sulfonsäure etc.) ist.

Weist (A5) nur N-Atome als Donoratome auf, so kann auch diese Komponente als Anion vorliegen wie beispielsweise im Fall von 1,2- oder 1,3- Dioxim-Anionen. Bevorzugte Trägeratome in diesem Fall sind C-Atome. N-Atome als Donoratome liegen vorzugsweise in Form von primären, sekundären oder tertiären Aminogruppen oder als Oximgruppen vor.

Weist (A5) nur S-Atome und/oder O-Atome als Donoratome auf, so sind bevorzugte Trägeratome in diesem Fall C-Atome, S-Atome und P-Atome, insbesondere C-Atome. O-Atome als Donoratome liegen vorzugsweise zumindest anteilig in anionischer Form (z.B. Acetylacetonat) oder in Form von Carboxylat-Gruppen, Phosphonatgruppen oder Sulfonatgruppen vor. S-Atome als Donoratome liegen bevorzugt in der Form von Thiolen, wie beispielsweise im Cystein, vor.

Vorzugsweise ist das Komplexierungsmittel (A5) ausgewählt aus der Gruppe bestehend aus stickstofffreien vorzugsweise wenigstens einfach Hydroxyl-substituierten organischen Monocarbonsäuren, stickstofffreien gegebenenfalls wenigstens einfach Hydroxyl-substituierten organischen Polycarbonsäuren, gegebenenfalls wenigstens einfach Hydroxyl-substituierten Aminopolycarbonsäuren, gegebenenfalls wenigstens einfach Hydroxyl-substituierten Aminomonocarbonsäuren, und Sulfonsäuren, sowie jeweils deren Anionen, und zudem vorzugsweise gegebenenfalls wenigstens einfach Hydroxyl-substituierten Monoaminen und gegebenenfalls wenigstens einfach Hydroxyl-substituierten Polyaminen, und chemischen Verbindungen, die wenigstens zwei-O-Donoratome enthalten und nicht unter die innerhalb dieser Aufzählung genannten Verbindungen fallen, wie beispielsweise 8-Hydroxychinolin und Acetylaceton.

Als Komplexierungsmittel (A5) eignet sich beispielsweise wenigstens eine organische Mono- oder Polycarbonsäure, welche vorzugsweise kein(e) Stickstoffatom(e) aufweist, und/oder deren Anionen.

Unter dem Begriff "Polycarbonsäure" wird im Sinne der vorliegenden Erfindung vorzugsweise eine Carbonsäure verstanden, welche zwei oder mehrere Carboxyl-Gruppen, beispielsweise 2, 3, 4, 5 oder 6 Carboxyl-Gruppen aufweist. Besonders bevorzugt weist die Polycarbonsäure 2 oder 3 Carboxyl-Gruppen auf. Bei Polycarbonsäuren mit zwei Carboxyl-Gruppen handelt es sich um Dicarbonsäuren und bei Polycarbonsäuren mit drei Carboxyl-Gruppen handelt es sich um Tricarbonsäuren. Die erfindungsgemäß eingesetzten Polycarbonsäuren können aromatisch, teilaromatisch, cycloaliphatisch, teilcycloaliphatisch oder aliphatisch sein, vorzugsweise aliphatisch sein. Vorzugsweise weisen die erfindungsgemäß eingesetzten Polycarbonsäuren 2 bis 64 Kohlenstoffatome, besonders bevorzugt 2 bis 36, insbesondere 3 bis 18 oder 3 bis 8 Kohlenstoffatome auf. Beispiele für Polycarbonsäuren sind Oxalsäure, Malonsäure, Bernsteinsäure, Glutarsäure, Adipinsäure, Weinsäure, Citronensäure, Schleimsäure und Äpfelsäure.

Unter dem Begriff "Monocarbonsäure" wird im Sinne der vorliegenden Erfindung vorzugsweise eine vorzugsweise aliphatische Monocarbonsäure verstanden, die genau eine -C(=O)-OH-Gruppe aufweist. Vorzugsweise weisen die erfindungsgemäß eingesetzten Monocarbonsäuren 1 bis 64 Kohlenstoffatome, besonders bevorzugt 1 bis 36, insbesondere 2 bis 18 oder 3 bis 8 Kohlenstoffatome auf. Vorzugsweise weist die Monocarbonsäure dabei wenigstens eine Hydroxyl-Gruppe auf.

Wird als Komplexierungsmittel (A5) wenigstens eine organische Mono- oder Polycarbonsäure, welche vorzugsweise kein(e) Stickstoffatom(e) aufweist, und/oder deren Anionen, eingesetzt, so weist die wenigstens eine organische Mono- oder Polycarbonsäure und/oder deren Anionen vorzugsweise wenigstens eine Carboxyl-Gruppe bzw. Carboxylat-Gruppe auf, die an einen organischen Rest mit 1-8 Kohlenstoffatomen gebunden ist, wobei der organische Rest gegebenenfalls mit wenigstens einem, vorzugsweise wenigstens einem oder wenigstens zwei, Substituenten ausgewählt aus der Gruppe bestehend aus Hydroxyl-Gruppen, EsterGruppen und Ether-Gruppen substituiert sein kann.

Vorzugsweise ist die organische Mono- oder Polycarbonsäure ausgewählt aus der Gruppe bestehend aus Mono- und Polycarbonsäuren und/oder deren Anionen, die in α-, β- oder γ-Stellung zur wenigstens einen Carboxyl-Gruppe bzw. Carboxylat-Gruppe eine oder zwei alkoholische Hydroxylgruppe(n) oder Estergruppe(n) oder Ethergruppe(n) aufweisen. Beispiele derartiger Säuren sind: Glykolsäure (Hydroxyessigsäure), Milchsäure, γ-Hydroxypropionsäure, α-Methylolpropionsäure, α,α'-Dimethylol-propionsäure, Weinsäure, Hydroxyphenylessigsäure, Äpfelsäure, Citronensäure und Zuckersäuren wie beispielsweise Gluconsäure und Schleimsäure. Zyklische oder aromatische Carbonsäuren sind ebenfalls geeignet, wenn die Hydroxyl-, Ester- oder Ethergruppen so zur Carboxylgruppe angeordnet sind, dass eine Bildung von Komplexen möglich wird. Beispiele hierfür sind Salicylsäure, Gallussäure, Hydroxybenzoesäure und 2,4-Dihydroxybenzoesäure. Beispiele geeigneter Carbonsäuren mit einer Ethergruppe oder Estergruppe sind Methoxyessigsäure, Methoxyessigsäuremethylester, Methoxyessigsäureisopropylester, Dimethoxy-essigsäure, Ethoxyessigsäure, Propoxyessigsäure, Butoxyessigsäure, 2-Ethoxy-2-Methylpropansäure, 3-Ethoxypropansäure, Butoxypropansäure und deren Ester, Butoxybuttersäure und α- oder β-Methoxypropionsäure. Optisch aktive Carbonsäuren wie Milchsäure können in der L-Form, in der D-Form oder als Racemat eingesetzt werden. Vorzugsweise werden Milchsäure (in optisch aktiver Form, bevorzugt als L-Form, oder als Racemat) und/oder Dimethylolpropionsäure verwendet.

Es können jedoch auch organische Mono- oder Polycarbonsäuren und/oder deren Anionen als Komplexierungsmittel (A5) eingesetzt werden, welche Stickstoffatome aufweisen, insbesondere Aminomonocarbonsäuren und/oder Aminopolycarbonsäuren, und/oder deren Anionen.

Unter dem Begriff "Aminopolycarbonsäure" wird im Sinne der vorliegenden Erfindung vorzugsweise eine Carbonsäure verstanden, welche zwei oder mehrere Carboxyl-Gruppen, beispielsweise 2, 3, 4, 5 oder 6 Carboxyl-Gruppen aufweist, und zudem wenigstens eine Amino-Gruppe, beispielsweise wenigstens eine primäre und/oder sekundäre und/oder tertiäre Amino-Gruppe, insbesondere wenigstens eine oder wenigstens zwei tertiäre Amino-Gruppen, aufweist. Vorzugsweise weisen die erfindungsgemäß eingesetzten Aminopolycarbonsäuren 2 bis 64 Kohlenstoffatome, besonders bevorzugt 2 bis 36, insbesondere 3 bis 18 oder 3 bis 8 Kohlenstoffatome auf. Beispiele von Aminopolycarbonsäuren sind Ethylendiamintetraessigsäure (EDTA), Diethylentriaminpentaessigsäure (DTPA), Nitrilotriessigsäure (NTA), Asparaginsäure, Methylglycidindiessigsäure (MGDA), β-Alanindiessigsäure (β-ADA), Imidosuccinat (IDS), Hydroxyethyleniminodiacetat (HEIDA) und N-(2-Hydroxyethyl)-ethylendiamin-N,N,N'-triessigsäure (HEDTA).

Unter dem Begriff "Aminomonocarbonsäure" wird im Sinne der vorliegenden Erfindung vorzugsweise eine Carbonsäure verstanden, welche genau eine Carboxyl-Gruppe aufweist, und zudem wenigstens eine Amino-Gruppe, beispielsweise wenigstens eine primäre und/oder sekundäre und/oder tertiäre Amino-Gruppe, insbesondere wenigstens eine oder wenigstens zwei tertiäre Amino-Gruppen, aufweist. Vorzugsweise weisen die erfindungsgemäß eingesetzten Aminomonocarbonsäuren 2 bis 64 Kohlenstoffatome, besonders bevorzugt 2 bis 36, insbesondere 3 bis 18 oder 3 bis 8 Kohlenstoffatome auf. Vorzugsweise weist die Aminomonocarbonsäure dabei wenigstens eine Hydroxyl-Gruppe auf. Ein Beispiel einer Aminomonocarbonsäure ist Bicin (N,N'-Bis((2-Hydroxyethyl)glycin). Andere Beispiele sind Glycin, Alanin, Lysin, Cystein, Serin, Threonin, Asparagin, β-Alanin, 6-Aminocapronsäure, Leucin und Dihydroxyethylglycin (DHEG) sowie Panthothensäure.

Als Komplexierungsmittel (A5) eignet sich beispielsweise zudem wenigstens ein Polyamin oder Monoamin.

Unter dem Begriff "Polyamin" wird im Sinne der vorliegenden Erfindung vorzugsweise eine Verbindung verstanden, welche wenigstens zwei Amino-Gruppen wie primäre oder sekundäre oder tertiäre Amino-Gruppen aufweist. Die Amino-Gruppen können auch als Oxim-Gruppen vorliegen. Insgesamt kann ein Polyamin jedoch vorzugsweise bis einschließlich 10 Amino-Gruppen aufweisen, d.h. zusätzlich zu den wenigstens zwei Amino-Gruppen noch bis zu einschließlich 8 weitere, d.h. 1, 2, 3, 4, 5, 6, 7 oder 8, vorzugsweise bis zu einschließlich 5 weitere Amino-Gruppen enthalten, bei denen es sich vorzugsweise um primäre oder sekundäre oder tertiäre Amino-Gruppen handelt. Vorzugsweise ist das Polyamin ein Diamin oder Triamin, besonders bevorzugt ein Diamin. Vorzugsweise weisen die erfindungsgemäß eingesetzten Polyamine 2 bis 64 Kohlenstoffatome, besonders bevorzugt 2 bis 36, insbesondere 3 bis 18 oder 3 bis 8 Kohlenstoffatome auf. Wenigstens eines der Kohlenstoffatome ist vorzugsweise mit einer Hydroxyl-Gruppe substituiert. Besonders bevorzugt sind daher Hydroxyalkylpolyamine. Beispiele von Polyaminen sind N,N,N',N'-Tetrakis-2-hydroxyethylethylendiamin (THEED), N,N,N',N'-Tetrakis-2-hydroxypropylethylendiamin (Quadrol), Guanidin, Diethylentriamin und Diphenylcarbazid sowie Diacetyldioxim.

Unter dem Begriff "Monoamin" wird im Sinne der vorliegenden Erfindung vorzugsweise ein vorzugsweise aliphatisches Monoamin verstanden, das genau eine Amino-Gruppe, wie beispielsweise genau eine primäre oder sekundäre oder insbesondere tertiäre Amino-Gruppe aufweist. Vorzugsweise weisen die erfindungsgemäß eingesetzten Monoamine 1 bis 64 Kohlenstoffatome, besonders bevorzugt 1 bis 36, insbesondere 2 bis 18 oder 3 bis 8 Kohlenstoffatome auf. Vorzugsweise weist das Monoamin dabei wenigstens eine Hydroxyl-Gruppe auf. Ein Beispiel für ein Monoamin ist Triisopropanolamin.

Als Komplexierungsmittel (A5) eignet sich beispielsweise zudem wenigstens eine Sulfonsäure. Beispiele für geeignete Sulfonsäuren sind Taurin, 1,1,1-Trifluoromethansulfonsäure, Tiron und Amidosulfonsäure.

In einer bevorzugten Ausführungsform ist wenigstens eine zur Komplexierung von Bismut geeignete wenigstens zweizähnige Komplexierungsmittel als Komponente (A5) eine Verbindung der allgemeinen Formel (1) oder ein Anion dieser Verbindung 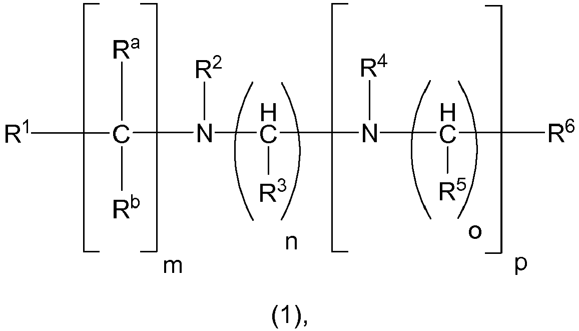 in der
R¹ für einen mit wenigstens einer OH-Gruppe substituierten C₁₋₆-aliphatischen Rest steht,
m für 0 oder 1 steht,
R^{a} und R^{b} jeweils unabhängig voneinander ausgewählt sind aus der Gruppe bestehend aus H und C₁₋₆-aliphatischen Resten, die gegebenenfalls mit wenigstens einer OH-Gruppe substituiert ist,
R², R³, R⁴ und R⁵ jeweils unabhängig voneinander für H oder für einen gegebenenfalls mit wenigstens einer OH-Gruppe substituierten C₁₋₆-aliphatischen Rest stehen,
n für 1 oder 2 steht,
o für 1 oder 2 steht,
p für 0, 1, 2 oder 3 steht, und
R⁶ für C(=O)OH, S(=O)₂OH, P(=O)(OH)₂, NR⁷R⁸ oder für einen C₁₋₆-aliphatischen Rest steht, der mit wenigstens einer OH-Gruppe substituiert ist,
   wobei R⁷ und R⁸ jeweils unabhängig voneinander ausgewählt sind aus der Gruppe bestehend aus H und C₁₋₆-aliphatischen Resten, die gegebenenfalls mit wenigstens einer OH-Gruppe substituiert sind,
   unter der Bedingung, dass wenigstens einer der Reste R⁷ und R⁸ für einen C₁₋₆-aliphatischen Rest steht, der mit wenigstens einer OH-Gruppe substituiert ist.

Der Ausdruck "C₁₋₆-aliphatischer Rest" umfasst im Sinne dieser Erfindung vorzugsweise acyclische gesättigte oder ungesättigte, vorzugsweise gesättigte, aliphatische Kohlenwasserstoffreste, d.h. C₁₋₆-aliphatische Reste, die jeweils verzweigt oder unverzweigt sowie unsubstituiert oder gegebenenfalls wenigstens einfach, beispielsweise zweifach oder dreifach, vorzugsweise aber einfach, mit wenigstens einer, gegebenenfalls auch zwei oder drei, OH-Gruppe(n) substituiert sein können, mit 1 bis 6, d.h. 1, 2, 3, 4 5 oder 6, Kohlenstoffatomen, d.h. C₁₋₆-Alkanyle, C₂₋₆-Alkenyle und C₂₋₆-Alkinyle. Dabei weisen Alkenyle mindestens eine C-C-Doppelbindung und Alkinyle mindestens eine C-C-Dreifachbindung auf. Besonders bevorzugt ist ein C₁₋₆-aliphatischer Rest ein C₁₋₆-Alkanyl. Bevorzugt ist ein C₁₋₆-aliphatischer Rest aus der Gruppe ausgewählt, die Methyl, Ethyl, n-Propyl, 2-Propyl, n-Butyl, iso-Butyl, sec.-Butyl, tert.-Butyl, n-Pentyl, iso-Pentyl, neo-Pentyl und n-Hexyl umfasst. Besonders bevorzugt ist ein C₁₋₆-aliphatischer Rest aus der Gruppe ausgewählt, die Ethyl, n-Propyl, 2-Propyl, n-Butyl, iso-Butyl und sec.-Butyl, insbesondere Ethyl, n-Propyl und 2-Propyl, umfasst. Ein C₁₋₄-aliphatischer Rest entspricht im Sinne der vorliegenden Erfindung einem C₁₋₆-aliphatischen Rest und den für diesen vorstehend genannten bevorzugten Ausführungsformen, mit dem Unterschied, dass ein solcher C₁₋₄-aliphatischer Rest nur 1 bis 4, d.h., 1, 2, 3 oder 4 Kohlenstoffatome aufweist.

Besonders bevorzugt ist die Komponente (A5) ausgewählt ist aus der Gruppe bestehend aus Ethylendiamintetraessigsäure, Milchsäure, N,N,N',N'-Tetrakis-2-hydroxypropylethylendiamin, N,N'-Bis((2-Hydroxyethyl)-glycin und N,N,N',N'-Tetrakis-2-hydroxyethylethylendiamin.

Wird Ethylendiamintetraessigsäure und/oder deren Anionen als Komplexierungsmittel (A5) eingesetzt, so ist dieses in der wässrigen Beschichtungszusammensetzung (A) vorzugsweise in einem Anteil in einem Bereich von < 100 mol-%, besonders bevorzugt in einem Bereich von 20 bis 60 mol-%, jeweils bezogen auf die Gesamtmenge des in der Beschichtungszusammensetzung (A) enthaltenen Bismuts, vorhanden. Wird N,N'-Bis((2-Hydroxyethyl)-glycin als Komplexierungsmittel (A5) eingesetzt, so ist dieses in der wässrigen Beschichtungszusammensetzung (A) vorzugsweise in einem Anteil in einem Bereich von < 900 mol-%, besonders bevorzugt in einem Bereich von 100 bis 700 mol-%, jeweils bezogen auf die Gesamtmenge des in der Beschichtungszusammensetzung (A) enthaltenen Bismuts, vorhanden. Wird N,N,N',N'-Tetrakis-2-hydroxyethylethylendiamin als Komplexierungsmittel (A5) eingesetzt, so ist dieses in der wässrigen Beschichtungszusammensetzung (A) vorzugsweise in einem Anteil in einem Bereich von 100 bis 600 mol-%, jeweils bezogen auf die Gesamtmenge des in der Beschichtungszusammensetzung (A) enthaltenen Bismuts, vorhanden. Wird N,N,N',N'-Tetrakis-2-hydroxypropylethylendiamin als Komplexierungsmittel (A5) eingesetzt, so ist dieses in der wässrigen Beschichtungszusammensetzung (A) vorzugsweise in einem Anteil in einem Bereich von 50 bis 300 mol-%, jeweils bezogen auf die Gesamtmenge des in der Beschichtungszusammensetzung (A) enthaltenen Bismuts, vorhanden.

Der molare Anteil von gegebenenfalls wenigstens einer in der wässrigen Beschichtungszusammensetzung (A) enthaltenen Aminopolycarbonsäure, insbesondere von als Komponente (A5) eingesetzter Aminopolycarbonsäure, ist vorzugsweise wenigstens um den Faktor 15 oder 20, besonders bevorzugt wenigstens um den Faktor 30 oder 40 oder 50 oder 60 oder 70 oder 80 oder 90 oder 100 oder 1 000 geringer als die Gesamtmenge des in der wässrigen Beschichtungszusammensetzung (A) enthaltenen Bismuts in Mol, vorzugsweise jeweils bezogen auf das Gesamtgewicht der wässrigen Zusammensetzung (A). Die Anwesenheit solcher Säuren kann gegebenenfalls zu Problemen bezüglich der Tauchbadstabilität und der Abwasserbehandlung durch eine Anreicherung dieser Verbindungen im Tauchbad führen.

### Weitere optionale Komponenten der Beschichtungszusammensetzung (A)

Die erfindungsgemäß eingesetzte wässrige Beschichtungszusammensetzung (A) kann zudem je nach erwünschter Anwendung wenigstens ein Pigment (A6) enthalten.

Vorzugsweise ist ein solches in der wässrigen Beschichtungszusammensetzung (A) enthaltenes Pigment (A6) ausgewählt aus der Gruppe bestehend aus organischen und anorganischen, farbgebenden und füllenden Pigmenten.

Das wenigstens eine Pigment (A6) kann dabei als Bestandteil der zur Herstellung der Beschichtungszusammensetzung (A) eingesetzten wässrigen Lösung oder Dispersion vorliegen, welche die Komponenten (A1) und gegebenenfalls (A2) enthält.

Alternativ kann das wenigstens eine Pigment (A6) auch in Form einer weiteren von dieser eingesetzten verschiedenen wässrigen Dispersion oder Lösung in die Beschichtungszusammensetzung (A) eingearbeitet werden. Innerhalb dieser Ausführungsform kann die entsprechende Pigment-haltige wässrige Dispersion oder Lösung zudem wenigstens ein Bindemittel enthalten. Vorzugsweise enthält eine solche Dispersion oder Lösung zudem die Komponente (A4).

Beispiele für geeignete anorganische farbgebende Pigmente (A6) sind Weißpigmente wie Zinkoxid, Zinksulfid, Titandioxid, Antimonoxid oder Lithopone; Schwarzpigmente wie Ruß, Eisen-Mangan-Schwarz oder Spinellschwarz; Buntpigmente wie Kobaltgrün oder Ultramaringrün, Kobaltblau, Ultramarinblau oder Manganblau, Ultramarinviolett oder Kobalt- und Manganviolett, Eisenoxidrot, Molybdatrot oder Ultramarinrot; Eisenoxidbraun, Mischbraun, Spinell- und Korundphasen; oder Eisenoxidgelb, Nickeltitangelb, oder Bismutvanadat. Beispiele für geeignete organische farbgebende Pigmente sind Monoazopigmente, Bisazopigmente, Anthrachinonpigmente, Benzimidazolpigmente, Chinacridonpigmente, Chinophthalonpigmente, Diketopyrrolopyrrolpigmente, Dioxazinpigmente, Indanthronpigmente, Isoindolinpigmente, Isoindolinonpigmente, Azomethinpigmente, Thioindigopigmente, Metallkomplexpigmente, Perinonpigmente, Perylenpigmente, Phthalocyaninpigmente oder Anilinschwarz. Beispiele geeigneter füllender Pigmente oder Füllstoffe sind Kreide, Calciumsulfat, Bariumsulfat, Silikate wie Talk oder Kaolin, Kieselsäuren, Oxide wie Aluminiumhydroxid oder Magnesiumhydroxid oder organische Füllstoffe wie Textilfasern, Cellulosefasern, Polyethylenfasern oder Polymerpulver; ergänzend wird auf Römpp Lexikon Lacke und Druckfarben, Georg Thieme Verlag, 1998, Seiten 250 ff., «Füllstoffe», verwiesen.

Der Pigment-Gehalt in den wässrigen Beschichtungszusammensetzungen (A) kann je nach Verwendungszweck und nach der Natur der Pigmente (A6) variieren. Vorzugsweise liegt der Gehalt, jeweils bezogen auf das Gesamtgewicht der wässrigen Beschichtungszusammensetzung (A) im Bereich von 0,1 bis 30 Gew.-% oder im Bereich von 0,5 bis 20 Gew.-%, besonders bevorzugt im Bereich von 1,0 bis 15 Gew.-%, ganz besonders bevorzugt im Bereich von 1,5 bis 10 Gew.-% und insbesondere im Bereich von 2,0 bis 5,0 Gew.-% oder im Bereich von 2,0 bis 4,0 Gew.-% oder im Bereich von 2,0 bis 3,5 Gew.-%.

Die Beschichtungszusammensetzung (A) kann je nach erwünschter Anwendung ein oder mehrere üblicherweise eingesetzte Additive (A7) enthalten. Vorzugsweise sind diese Additive (A7) ausgewählt aus der Gruppe bestehend aus Benetzungsmitteln, Emulgatoren, welche vorzugsweise die Komponente (A8) nicht beinhalten, Dispergiermitteln, oberflächen-aktiven Verbindungen wie Tensiden, Verlaufshilfsmitteln, Löslichkeitsvermittlern, Entschäumungsmitteln, Rheologiehilfsmitteln, Antioxidantien, Stabilisierungsmitteln, vorzugsweise HitzeStabilisatoren, Prozess-Stabilisatoren und UV- und/oder Licht-Stabilisatoren, Katalysatoren, Füllstoffen, Wachsen, Flexibilisierungsmitten, Weichmachern und Gemischen aus den vorstehend genannten Additiven. Der Additiv-Gehalt kann je nach Verwendungszweck sehr breit variieren. Vorzugsweise liegt der Gehalt, bezogen auf das Gesamtgewicht der wässrigen Beschichtungszusammensetzung (A), bei 0,1 bis 20,0 Gew.-%, bevorzugt bei 0,1 bis 15,0 Gew.-%, besonders bevorzugt bei 0,1 bis 10,0 Gew.-%, ganz besonders bevorzugt bei 0,1 bis 5,0 Gew.-% und insbesondere bei 0,1 bis 2,5 Gew.-%.

Das wenigstens eine Additiv (A7) kann dabei als Bestandteil der zur Herstellung der Beschichtungszusammensetzung (A) eingesetzten wässrigen Lösung oder Dispersion vorliegen, welche die Komponenten (A1) und gegebenenfalls (A2) enthält.

Alternativ kann das wenigstens eine Additiv (A7) auch in Form einer weiteren von dieser eingesetzten verschiedenen wässrigen Dispersion oder Lösung in die Beschichtungszusammensetzung (A) eingearbeitet werden, beispielsweise innerhalb einer wässrigen Dispersion oder Lösung, die wenigstens ein Pigment (A6) und gegebenenfalls zudem wenigstens ein Bindemittel enthält und gegebenenfalls zudem (A4) enthält.

In einer bevorzugten Ausführungsform ist die erfindungsgemäß eingesetzte Beschichtungszusammensetzung (A) eine kathodisch abscheidbare Miniemulsion, welche wenigstens einen kationischen Emulgator (A8) umfasst. Der Begriff "Miniemulsion" ist dem Fachmann bekannt, beispielsweise aus I.M. Grabs et al., Macromol. Symp. 2009, 275-276, Seiten 133-141. Eine Miniemulsion ist demnach eine Emulsion, deren Teilchen eine mittlere Teilchengröße im Bereich von 5 bis 500 nm aufweisen. Methoden zur Bestimmung der mittleren Teilchengröße solcher Teilchen sind dem Fachmann bekannt. Vorzugsweise erfolgt eine solche Bestimmung der mittleren Teilchengröße mittels dynamischer Lichtstreuung gemäß DIN ISO 13321 (Datum: 1.10.2004). Derartige Miniemulsionen sind beispielsweise aus WO 82/00148 A1 bekannt. Bei dem wenigstens einen kationischen Emulgator handelt es sich vorzugsweis um einen Emulgator, welcher einen HLB-Wert von ≥ 8 aufweist, welcher vorzugsweise gemäß der dem Fachmann bekannten Methode von Griffin bestimmt wird. Der Emulgator kann reaktive funktionelle Gruppen aufweisen. Als solche reaktiven funktionellen Gruppen kommen die gleichen reaktiven funktionellen Gruppen in Betracht, die auch das Bindemittel (A1) aufweisen kann. Vorzugsweise weist der Emulgator eine hydrophile Kopfgruppe auf, welche vorzugsweise ein quaternäres Stickstoffatom aufweist, an das vier organische vorzugsweise aliphatische Reste wie beispielsweise organische Reste mit 1-10 Kohlenstoffatomen gebunden sind, und eine lipophile Schwanzgruppe. Wenigstens einer dieser organischen Reste weist dabei vorzugsweise eine Hydroxyl-Gruppe auf.

### Optionale in (A) enthaltene weitere Metall-Ionen

Der molare Anteil von gegebenenfalls in der wässrigen Beschichtungszusammensetzung (A) enthaltenen Zirkonium-Ionen ist vorzugsweise wenigstens um den Faktor 100, vorzugsweise wenigstens um den Faktor 200, ganz besonders bevorzugt wenigstens um den Faktor 300 oder 400 oder 500 oder 600 oder 700 oder 800 oder 900 oder 1 000 geringer als die Gesamtmenge des in der wässrigen Beschichtungszusammensetzung (A) enthaltenen Bismuts in Mol, vorzugsweise jeweils bezogen auf das Gesamtgewicht der wässrigen Zusammensetzung (A). Die Beschichtungszusammensetzung (A) enthält insbesondere bevorzugt keine Zirkonium-Ionen.

Üblicherweise in Beschichtungszusammensetzungen zur Verbesserung des Korrosionsschutzes eingesetzte Zirkonium-Verbindungen werden oftmals in Form von Salzen oder Säuren eingesetzt, die Zirkonium-Ionen, insbesondere [ZrF₆]²⁻-Ionen enthalten. Der Einsatz solcher [ZrF₆]²⁻-Ionen führt bei gleichzeitiger Anwesenheit von Bismut-Ionen jedoch zur Ausfällung von Bismutfluorid. Daher soll der Einsatz von Zirkonium-Verbindungen in der Beschichtungszusammensetzung (A) vermieden werden.

Vorzugsweise ist zudem der molare Anteil von gegebenenfalls in der wässrigen Beschichtungszusammensetzung (A) enthaltenen Ionen ausgewählt aus der Gruppe bestehend aus Ionen von Metallen der Seltenen Erden wenigstens um den Faktor 100, ganz besonders bevorzugt wenigstens um den Faktor 200 oder 300 oder 400 oder 500 oder 600 oder 700 oder 800 oder 900 oder 1 000 geringer als die Gesamtmenge des in der wässrigen Beschichtungszusammensetzung (A) enthaltenen Bismuts in Mol, vorzugsweise jeweils bezogen auf das Gesamtgewicht der wässrigen Zusammensetzung (A). Insbesondere enthält die Beschichtungszusammensetzung (A) keine Ionen von Metallen der Seltenen Erden. Die Anwesenheit solcher Ionen führt zu einer Verteuerung des erfindungsgemäßen Verfahrens und erschwert die Abwasserbehandlung. Vorzugsweise sind solche Ionen von Metallen der Seltenen Erden ausgewählt aus der Gruppe bestehend aus Ionen von Sc, Y, La, Ce, Pr, Nd, Pm, Sm, Eu, Gb, Td, Dy, Ho, Er, Tm, Yb und Lu.

### Verfahren zur Herstellung der Beschichtungszusammensetzung (A)

Ein weiterer Gegenstand der vorliegenden Offenbarung ist ein Verfahren zur Herstellung der wässrigen erfindungsgemäß eingesetzten Beschichtungszusammensetzung (A) dadurch gekennzeichnet, dass das Verfahren wenigstens den Schritt (0) umfasst, nämlich
(0) teilweises Überführen wenigstens einer in Wasser unlöslichen Bismut-Verbindung durch teilweise Umsetzung von dieser Verbindung mit wenigstens einem zur Komplexierung von Bismut geeigneten wenigstens zweizähnigen Komplexierungsmittel (A5) in wenigstens eine in Wasser lösliche Bismut-Verbindung (A3) in Wasser, gegebenenfalls in Gegenwart wenigstens einer der Komponenten (A6) bis (A8) und gegebenenfalls (A1) und/oder (A2), unter Erhalt einer wenigstens die Komponenten (A3), (A4) und (A5) sowie gegebenenfalls wenigstens einer der Komponenten (A6) bis (A8) und/oder gegebenenfalls (A1) und/oder (A2),der Beschichtungszusammensetzung (A) enthaltenen Mischung.

Vorzugsweise ist die in Wasser unlösliche Bismut-Verbindung Bestandteil einer Pigmentpaste, welche wenigstens ein Pigment (A6) enthält.

Gegebenenfalls umfasst das erfindungsgemäße Verfahren nach Durchführung von Schritt (0) wenigstens einen weiteren Schritt, nämlich ein
Mischen der nach Durchführung von Schritt (0) erhaltenen Mischung wenigstens mit der Komponente (A1) und gegebenenfalls der Komponente (A2) sowie gegebenenfalls wenigstens einer der Komponenten (A6) bis (A8) unter Erhalt der Beschichtungszusammensetzung (A).

Vorzugsweise beträgt die Dauer des Schritts (0) wenigstens 2 oder wenigstens 4 oder wenigstens 6 oder wenigstens 8 oder wenigstens 10 oder wenigstens 12 oder wenigstens 14 oder wenigstens 16 oder wenigstens 18 oder wenigstens 20 oder wenigstens 22 oder wenigstens 24 Stunden. Schritt (0) wird vorzugsweise unter Rühren bei einer Temperatur im Bereich von 18 bis 23°C durchgeführt.

Vorzugsweise ist die erfindungsgemäße Beschichtungszusammensetzung (A) erhältlich, ohne dass eine separate Herstellung einer wässrigen Lösung der Komponente (A3) erforderlich ist. Dies erspart Zeit- und Kosten-Aufwand und mögliche auftretende Probleme hinsichtlich der Stabilität der Beschichtungszusammensetzung (A) bei einer Zugabe einer solchen wässrigen Lösung der Komponente (A3) zu den restlichen Komponenten der Beschichtungszusammensetzung (A), insbesondere wenn die Beschichtungszusammensetzung in einem Tauchlackbad zur zumindest teilweisen Beschichtung elektrisch leitfähiger Substrate eingesetzt wird.

Alle im Zusammenhang mit der erfindungsgemäßen wässrigen Beschichtungszusammensetzung (A) hierin zuvor beschriebenen bevorzugten Ausführungsformen sind auch bevorzugte Ausführungsformen der erfindungsgemäß eingesetzten wässrigen Beschichtungszusammensetzung (A) hinsichtlich ihrer Herstellung.

### Verwendung der Beschichtungszusammensetzung (A)

Ein weiterer Gegenstand der vorliegenden Offenbarung ist eine Verwendung der erfindungsgemäßen Beschichtungszusammensetzung (A) oder der in dem erfindungsgemäßen Verfahren zur zumindest teilweisen Beschichtung eines elektrisch leitfähigen Substrats mit einem Elektrotauchlack eingesetzten wässrigen Beschichtungszusammensetzung (A) zur zumindest teilweisen Beschichtung eines elektrisch leitfähigen Substrats mit einem Elektrotauchlack.

Alle im Zusammenhang mit der erfindungsgemäßen wässrigen Beschichtungszusammensetzung (A) hierin zuvor beschriebenen bevorzugten Ausführungsformen sind auch bevorzugte Ausführungsformen der erfindungsgemäß eingesetzten wässrigen Beschichtungszusammensetzung (A) hinsichtlich ihrer Verwendung zur zumindest teilweisen Beschichtung eines elektrisch leitfähigen Substrats mit einem Elektrotauchlack.

### Verfahren zur zumindest teilweisen Beschichtung eines elektrisch leitfähigen Substrats mit der Beschichtungszusammensetzung (A)

Ein weiterer Gegenstand der vorliegenden Offenbarung ist ein Verfahren zur zumindest teilweisen Beschichtung eines elektrisch leitfähigen Substrats mit einem Elektrotauchlack umfassend wenigstens einen Schritt (1),
(1) Kontaktieren des als Kathode geschalteten elektrisch leitfähigen Substrats mit der erfindungsgemäßen wässrigen Beschichtungszusammensetzung (A).

Ein Gegenstand der vorliegenden Erfindung ist ein Verfahren zur zumindest teilweisen Beschichtung eines elektrisch leitfähigen Substrats mit einem Elektrotauchlack umfassend wenigstens einen Schritt (1),
(1) Kontaktieren des als Kathode geschalteten elektrisch leitfähigen Substrats mit der erfindungsgemäßen wässrigen Beschichtungszusammensetzung (A),
   wobei Schritt (1) in wenigstens zwei aufeinanderfolgenden Stufen (1a) und (1b) durchgeführt wird, nämlich
   (1a) bei einer angelegten Spannung in einem Bereich von 1 bis 50 V, welche über eine Dauer von wenigstens 5 Sekunden angelegt wird, und
   (1b) bei einer angelegten Spannung in einem Bereich von 50 bis 400 V, unter der Bedingung, dass die in Stufe (1b) angelegte Spannung um wenigstens 10 V größer ist als die in Stufe (1a) angelegte Spannung,
d.h. einer wässrigen Beschichtungszusammensetzung (A), die einen pH-Wert in einem Bereich von 4,0 bis 6,5 aufweist und die Komponenten
(A1) wenigstens ein kathodisch abscheidbares Bindemittel und
(A2) gegebenenfalls wenigstens ein Vernetzungsmittel umfasst
und eine Gesamtmenge von wenigstens 130 ppm Bismut, bezogen auf das Gesamtgewicht der Beschichtungszusammensetzung (A), enthält, wobei davon
(A3) wenigstens 30 ppm Bismut, bezogen auf das Gesamtgewicht der Beschichtungszusammensetzung (A), in einer in der Beschichtungszusammensetzung (A) gelöst vorliegenden Form und
(A4) wenigstens 100 ppm Bismut, bezogen auf das Gesamtgewicht der Beschichtungszusammensetzung (A), in einer in der Beschichtungszusammensetzung (A) ungelöst vorliegenden Form vorhanden sind,
wobei der Anteil der Komponente (A4) in mol-% innerhalb der Gesamtmenge des in der Beschichtungszusammensetzung (A) enthaltenen Bismuts größer ist als der Anteil der Komponente (A3) in mol-%,
und zudem
(A5) wenigstens ein zur Komplexierung von Bismut geeignetes wenigstens zweizähniges Komplexierungsmittel,
umfasst,
wobei das wenigstens eine Komplexierungsmittel (A5) in der wässrigen Beschichtungszusammensetzung (A) in einem Anteil von wenigstens 5 mol-%, bezogen auf die Gesamtmenge des in der Beschichtungszusammensetzung (A) enthaltenen Bismuts, vorhanden ist.

Alle im Zusammenhang mit der erfindungsgemäßen wässrigen Beschichtungszusammensetzung (A) hierin zuvor beschriebenen bevorzugten Ausführungsformen sind auch bevorzugte Ausführungsformen der erfindungsgemäß eingesetzten wässrigen Beschichtungszusammensetzung (A) hinsichtlich ihres Einsatzes in Schritt (1) des erfindungsgemäßen Verfahrens zur zumindest teilweisen Beschichtung eines elektrisch leitfähigen Substrats mit einem Elektrotauchlack.

### Schritt (1)

Das erfindungsgemäße Verfahren zur zumindest teilweisen Beschichtung eines elektrisch leitfähigen Substrats mit einem Elektrotauchlack umfasst wenigstens einen Schritt (1), nämlich ein Kontaktieren des als Kathode geschalteten elektrisch leitfähigen Substrats mit der wässrigen Beschichtungszusammensetzung (A).

Unter dem Begriff "Kontaktierung" bzw. "Kontaktieren" im Sinne der vorliegenden Erfindung wird vorzugsweise ein Eintauchen des mit der Beschichtungszusammensetzung (A) zumindest teilweise zu beschichtenden Substrats in die eingesetzte wässrige Beschichtungszusammensetzung (A), ein Besprühen oder Bespritzen des mit der Beschichtungszusammensetzung (A) zumindest teilweise zu beschichtenden Substrats oder ein Aufwalzen des mit der Beschichtungszusammensetzung (A) zumindest teilweise zu beschichtenden Substrats auf das Substrat verstanden. Insbesondere wird unter dem Begriff "Kontaktierung" bzw. "Kontaktieren" im Sinne der vorliegenden Erfindung ein Eintauchen des mit der Beschichtungszusammensetzung (A) zumindest teilweise zu beschichtenden Substrats in die eingesetzte wässrige Beschichtungszusammensetzung (A), verstanden.

Vorzugsweise ist das erfindungsgemäße Verfahren ein Verfahren zur zumindest teilweisen Beschichtung eines im und/oder für den Automobilbau eingesetzten elektrisch leitfähigen Substrats. Das Verfahren kann kontinuierlich in Form einer Bandbeschichtung wie beispielsweise im Coil-Coating-Verfahren oder diskontinuierlich erfolgen.

Mittels Schritt (1) des erfindungsgemäßen Verfahrens erfolgt eine zumindest teilweise Beschichtung des Substrats mit der erfindungsgemäßen wässrigen Beschichtungszusammensetzung (A) durch eine kataphoretische Abscheidung dieser Beschichtungszusammensetzung auf der Substratoberfläche.

Schritt (1) erfolgt mittels Anlegen einer elektrischen Spannung zwischen dem Substrat und wenigstens einer Gegenelektrode. Schritt (1) des erfindungsgemäßen Verfahrens wird vorzugsweise in einem Tauchlackbad durchgeführt. Die Gegenelektrode kann sich dabei in dem Tauchlackbad befinden. Alternativ oder zusätzlich kann die Gegenelektrode auch vom Tauchlackbad separiert vorliegen, beispielsweise über eine für Anionen permeable Anionenaustauscher-Membran. Dabei können Anionen, die während der Tauchlackierung gebildet werden, aus dem Lack durch die Membran in das Anolyt abtransportiert werden, wodurch der pH-Wert im Tauchlackbad reguliert bzw. konstant gehalten werden kann. Vorzugsweise liegt die Gegenelektrode vom Tauchlackbad separiert vor.

Vorzugsweise erfolgt in Schritt (1) des erfindungsgemäßen Verfahrens eine vollständige Beschichtung des Substrats mit der erfindungsgemäßen wässrigen Beschichtungszusammensetzung (A) durch eine vollständige kataphoretische Abscheidung auf der gesamten Substratoberfläche.

Vorzugsweise wird in Schritt (1) des erfindungsgemäßen Verfahrens ein zumindest teilweise zu beschichtendes Substrat zumindest teilweise, vorzugsweise vollständig, in ein Tauchlackbad eingeführt und in diesem Tauchlackbad Schritt (1) durchgeführt.

In Schritt (1) des erfindungsgemäßen Verfahrens wird eine zumindest teilweise Beschichtung des Substrats durch eine zumindest teilweise kataphoretische Abscheidung der wässrigen Beschichtungszusammensetzung (A) erzielt. Die erfindungsgemäße wässrige Beschichtungszusammensetzung (A) wird dabei als Elektrotauchlack auf der Substratoberfläche abgeschieden.

Vorzugsweise wird die erfindungsgemäße wässrige Beschichtungszusammensetzung (A) mit einer elektrisch leitenden Anode und mit dem als Kathode geschalteten elektrisch leitfähigen Substrat in Berührung gebracht. Alternativ muss die wässrige Beschichtungszusammensetzung (A) nicht direkt mit einer elektrisch leitenden Anode in Berührung gebracht werden, beispielsweise wenn die Anode vom Tauchlackbad separiert vorliegt, beispielsweise über eine für Anionen permeable Anionenaustauscher-Membran.

Beim Durchgang von elektrischem Strom zwischen Anode und Kathode wird ein fest haftender Lackfilm auf der Kathode, d.h. auf dem Substrat abgeschieden.

Schritt (1) des erfindungsgemäßen Verfahrens wird vorzugsweise bei einer Tauchbadtemperatur in einem Bereich von 20 bis 45°C, noch bevorzugter in einem Bereich von 22 bis 42°C, besonders bevorzugt in einem Bereich von 24 bis 41°C, ganz besonders bevorzugt in einem Bereich von 26 bis 40°C, insbesondere bevorzugt in einem Bereich von 27 bis 39°C wie beispielsweise in einem Bereich von 28 bis 38°C durchgeführt. In einer anderen bevorzugten Ausführungsform des erfindungsgemäßen Verfahrens wird Schritt (1) bei einer Tauchbadtemperatur von höchstens 40°C, noch bevorzugter von höchstens 38°C, besonders bevorzugt von höchstens 35°C, ganz besonders bevorzugt von höchstens 34°C oder von höchstens 33°C oder von höchstens 32°C oder von höchstens 31°C oder von höchstens 30°C oder von höchstens 29°C oder von höchstens 28°C, durchgeführt. In einer weiteren anderen bevorzugten Ausführungsform des erfindungsgemäßen Verfahrens wird Schritt (1) bei einer Tauchbadtemperatur ≤ 32°C wie beispielsweise ≤ 31°C oder ≤ 30°C oder ≤ 29°C oder ≤ 28°C oder ≤ 27°C oder ≤ 26°C oder ≤ 25°C oder ≤ 24°C oder ≤ 23°C durchgeführt.

Vorzugsweise wird die erfindungsgemäße wässrige Beschichtungszusammensetzung (A) in Schritt (1) des erfindungsgemäßen Verfahrens so appliziert, dass die resultierende Elektrotauchlackschicht eine Trockenschichtdicke im Bereich von 5 bis 40 µm, besonders bevorzugt von 10 bis 30 µm, insbesondere bevorzugt von 20 bis 25 µm, aufweist.

### Stufen (1a) und (1b) innerhalb des Schritts (1)

Schritt (1) des erfindungsgemäßen Verfahrens wird in wenigstens zwei aufeinanderfolgenden Stufen (1a) und (1b) durchgeführt, nämlich
(1a) bei einer angelegten Spannung in einem Bereich von 1 bis 50 V, welche über eine Dauer von vorzugsweise wenigstens 5 Sekunden angelegt wird,
   und
(1b) bei einer angelegten Spannung in einem Bereich von 50 bis 400 V, unter der Bedingung, dass die in Stufe (1b) angelegte Spannung um wenigstens 10 V größer ist als die in Stufe (1a) angelegte Spannung.

Die Stufen (1a) und (1b) innerhalb des Schritts (1) des erfindungsgemäßen Verfahrens werden vorzugsweise innerhalb einem eingesetzten Tauchlackbad enthaltend die Beschichtungszusammensetzung (A) durchgeführt.

### Stufe (1a)

Während der Durchführung von Stufe (1a) bildet sich eine entsprechende Bismutangereicherte Schicht als eine Vorabscheidungsschicht auf dem elektrisch leitfähigen Substrat, welche sich beispielsweise durch Röntgenfluoreszenzanalyse nachweisen und quantifizieren lässt. Das Bismut liegt dabei vorzugsweise in Form von metallischem Bismut(0) vor, kann aber alternativ oder zusätzlich auch in trivalenter Form und/oder in anderen Oxidationsstufen vorliegen. Diese Vorabscheidungsschicht ist insbesondere weitgehend frei von in der Beschichtungszusammensetzung enthaltenen Komponenten (A1) und gegebenenfalls (A2) und/oder (A5) und/oder (A6). Die so gebildete Bismutangereicherte Schicht übt vorzugsweise eine korrosionsschützende Wirkung aus, welche umso ausgeprägter ist, je größer die Bismut-Schichtauflage (in mg Bismut pro m² Oberfläche) ist. Bevorzugt werden Schichtauflagen von mindestens 10 oder mindestens 20 oder mindestens 30, besonders bevorzugt mindestens 40 oder mindestens 50 und insbesondere mindestens 100 oder mindestens 180 mg Bismut (als Metall gerechnet) pro m² Oberfläche.

Vorzugsweise wird Stufe (1a) bei einer angelegten Spannung in einem Bereich von 1 bis 45 V oder in einem Bereich von 1 bis 40 V oder in einem Bereich von 1 bis 35 V oder in einem Bereich von 1 bis 30 V oder in einem Bereich von 1 bis 25 V oder in einem Bereich von 1 bis 20 V oder in einem Bereich von 1 bis 15 V oder in einem Bereich von 1 bis 10 V oder in einem Bereich von 1 bis 5 V durchgeführt. In einer weiteren bevorzugten Ausführungsform wird Stufe (1a) bei einer angelegten Spannung in einem Bereich von 2 bis 45 V oder in einem Bereich von 2 bis 40 V oder in einem Bereich von 2 bis 35 V oder in einem Bereich von 2 bis 30 V oder in einem Bereich von 3 bis 25 V oder in einem Bereich von 3 bis 20 V oder in einem Bereich von 3 bis 15 V oder in einem Bereich von 3 bis 10 V oder in einem Bereich von 3 bis 6 V durchgeführt.

Die in Stufe (1a) angelegte Spannung wird über eine Dauer von wenigstens 5 Sekunden, vorzugsweise von wenigstens 10 oder wenigstens 15 oder wenigstens 20 oder wenigstens 25 oder wenigstens 30 oder wenigstens 40 oder wenigstens 50 Sekunden, besonders bevorzugt von wenigstens 60 oder wenigstens 70 oder wenigstens 80 oder wenigstens 90 oder wenigstens 100 Sekunden, ganz besonders bevorzugt von wenigstens 110 oder wenigstens 120 Sekunden, angelegt. Vorzugsweise beträgt die Dauer dabei maximal 300 Sekunden, besonders bevorzugt maximal 250 Sekunden und insbesondere maximal 150 Sekunden. Die Dauer bezeichnet dabei jeweils das Zeitintervall, während dessen die entsprechende Spannung während der Durchführung von Stufe (1a) aufrechterhalten wird.

In einer bevorzugten Ausführungsform wird die in Stufe (1a) angelegte Spannung über eine Dauer in einem Bereich von wenigstens 5 bis 500 Sekunden oder von 5 bis 500 Sekunden oder von 10 bis 500 Sekunden oder von 10 bis 300 Sekunden oder von wenigstens 20 bis 400 Sekunden oder von wenigstens 30 bis 300 Sekunden oder von wenigstens 40 bis 250 Sekunden oder von wenigstens 50 bis 200 Sekunden, besonders bevorzugt in einem Bereich von wenigstens 60 bis 150 Sekunden oder von wenigstens 70 bis 140 Sekunden oder von wenigstens 80 bis 130 Sekunden, angelegt.

Die Einstellung einer Spannung in einem Bereich von 1 bis 50 V, die während der Durchführung von Stufe (1a) über eine Dauer von wenigstens 10 Sekunden angelegt wird, kann galvanostatisch (konstant geregelter Strom) erfolgen. Alternativ kann diese Einstellung jedoch auch potentiostatisch (konstant geregelte Spannung) erfolgen, indem Stufe (1a) bei einem Abscheidungsstrom oder in einem Abscheidungsstrombereich durchgeführt wird, der einer entsprechenden Spannung in einem Bereich von 1 bis 50 V entspricht. Vorzugsweise liegt ein solcher Abscheidungsstrom in einem Bereich von 20 bis 400 mA, besonders bevorzugt in einem Bereich von 30 bis 300 mA oder in einem Bereich von 40 bis 250 mA oder in einem Bereich von 50 bis 220 mA, insbesondere in einem Bereich von 55 bis 200 mA. Vorzugsweise werden solche Abscheidungsstrome innerhalb der Stufe (1a) eingesetzt, wenn Substrate verwendet werden, welche eine Oberfläche im Bereich von 300 bis 500 cm², insbesondere von 350 bis 450 cm² oder 395 bis 405 cm² aufweisen.

Vorzugsweise beträgt die Abscheidungsstromdichte in Stufe (1a) mindestens 1 A/m², besonders bevorzugt mindestens 2 A/m² und insbesondere mindestens 3 A/m², vorzugsweise aber jeweils nicht mehr als 20 A/m², besonders bevorzugt jeweils nicht mehr als 10 A/m².

Vorzugsweise wird die Abscheidungsstromdichte oder der Abscheidungsstrom in Stufe (1a) dabei über eine Dauer von wenigstens 5 oder wenigstens 10 Sekunden, vorzugsweise von wenigstens 15 oder wenigstens 20 oder wenigstens 25 oder wenigstens 30 oder wenigstens 40 oder wenigstens 50 Sekunden, besonders bevorzugt von wenigstens 60 oder wenigstens 70 oder wenigstens 80 oder wenigstens 90 oder wenigstens 100 Sekunden, ganz besonders bevorzugt von wenigstens 110 oder wenigstens 120 Sekunden, angelegt. Vorzugsweise beträgt die Dauer dabei maximal 300 Sekunden, besonders bevorzugt maximal 250 Sekunden und insbesondere maximal 150 Sekunden. In einer anderen bevorzugten Ausführungsform wird die in Stufe (1a) angelegte Abscheidungsstromdichte oder der Abscheidungsstrom über eine Dauer in einem Bereich von wenigstens 10 bis 500 Sekunden oder von wenigstens 20 bis 400 Sekunden oder von wenigstens 30 bis 300 Sekunden oder von wenigstens 40 bis 250 Sekunden oder von wenigstens 50 bis 200 Sekunden, besonders bevorzugt in einem Bereich von wenigstens 60 bis 150 Sekunden oder von wenigstens 70 bis 140 Sekunden oder von wenigstens 80 bis 130 Sekunden, angelegt.

Die Spannung bzw. der Abscheidungsstrom oder die Abscheidungsstromdichte kann dabei während der genannten Dauer konstant gehalten werden. Die Spannung bzw. der Abscheidungsstrom oder die Abscheidungsstromdichte kann alternativ aber auch während der Abscheidungsdauer innerhalb von Stufe (1a) innerhalb der angegeben Minimum- und Maximalwerte im Bereich von 1 bis 50 V unterschiedliche Werte annehmen, beispielsweise hin und her pendeln oder rampen- oder stufenförmig von der Minimal- zur Maximalabscheidungsspannung ansteigen.

Die Einstellung der Spannung bzw. des Abscheidungsstroms oder der Abscheidungsstromdichte während der Durchführung von Stufe (1a) kann "plötzlich" erfolgen, also beispielsweise durch entsprechendes Umschalten an einem Gleichrichter, was eine gewisse technisch bedingte Mindestzeitdauer zum Erreichen der Sollspannung erfordert. Die Einstellung kann aber auch in Form einer Rampe erfolgen, also zumindest annähernd kontinuierlich und vorzugsweise linear über einen wählbaren Zeitraum, beispielsweise von bis zu 10, 20 30, 40, 50, 60, 120 oder 300 Sekunden. Bevorzugt ist eine Rampe von bis zu 120 Sekunden, besonders bevorzugt von bis zu 60 Sekunden. Auch eine stufenförmige Spannungserhöhung ist dabei möglich, wobei bei jeder Spannungsstufe vorzugsweise eine gewisse Haltezeit bei dieser Spannung eingehalten wird, beispielsweise 1, 5, 10 oder 20 Sekunden. Auch eine Kombination von Rampen und Stufen ist möglich.

Die Einstellung der Spannung bzw. des Abscheidungsstroms oder der Abscheidungsstromdichte in Stufe (1a) kann auch in Form von Pulsen geregelt werden, mit Zeiten ohne Strom bzw. mit einer Spannung unterhalb des Minimalwerts zwischen zwei Pulsen. Die Pulsdauer kann beispielsweise im Bereich von 0,1 bis 10 Sekunden liegen. Als "Zeitraum" für die Abscheidung wird dann vorzugsweise die Summe der Zeitdauern angesehen, bei denen die Abscheidungsspannung innerhalb der genannten Höchst- und Tiefstwerte bei der Durchführung von Schritt (1a) liegt. Rampen und Pulse können auch miteinander kombiniert werden.

Vorzugsweise wird das Komplexierungsmittel (A5) während der Durchführung von Stufe (1a) zumindest teilweise, insbesondere vollständig, wieder frei gesetzt, da die von (A5) komplexierte Komponente (A3) abgeschieden wird. Aufgrund der Anwesenheit der Komponente (A4) in der Beschichtungszusammensetzung (A) kann das frei gesetzte Komplexierungsmittel (A5) dazu genutzt werden, die Komponente (A4) zumindest teilweise in eine in (A) gelöste Form zu überführen, d.h. (A5) kann zur ständigen Generierung von (A3) eingesetzt werden, um die Gegenwart eines entsprechenden Reservoirs an (A3) zu gewährleisten.

### Stufe (1b)

Während der Durchführung von Stufe (1b) bildet sich auf der nach Stufe (1a) erhaltenen Vorabscheidungsschicht die eigentliche Tauchlackbeschichtung durch Abscheidung der Tauchlackkomponenten, insbesondere (A1) und gegebenenfalls (A2) und/oder (A5). Auch diese Beschichtung enthält Bismut, welches in trivalenter Form oder alternativ oder zusätzlich in anderen Oxidationsstufen vorliegen kann. Das Bismut kann dabei in einem nachfolgenden optionalen Härtungsschritt bzw. Vernetzungsschritt (6) des erfindungsgemäßen Verfahrens als Katalysator fungieren. Daher kann bei der Herstellung der Beschichtungszusammensetzung (A) vorzugsweise auf die Einarbeitung eines solchen Katalysators verzichtet werden.

Vorzugsweise wird Stufe (1b) bei einer angelegten Spannung in einem Bereich von 55 bis 400 V oder in einem Bereich von 75 bis 400 V oder in einem Bereich von 95 bis 400 V oder in einem Bereich von 115 bis 390 V oder in einem Bereich von 135 bis 370 V oder in einem Bereich von 155 bis 350 V oder in einem Bereich von 175 bis 330 V oder in einem Bereich von 195 bis 310 V oder in einem Bereich von 215 bis 290 V durchgeführt.

Vorzugsweise wird in Stufe (1b) in einem Zeitintervall im Bereich von 0 bis 300 Sekunden nach Beenden der Durchführung von Stufe (1a) eine Spannung im Bereich von 50 bis 400 V angelegt, vorzugsweise gegenüber einer inerten Gegenelektrode, jedoch unter der Bedingung, dass diese in Stufe (1b) angelegte Spannung um wenigstens 10 V größer ist als die zuvor in Stufe (1a) angelegte Spannung. Vorzugsweise wird diese Spannung innerhalb der Durchführung von Stufe (1b) für einen Zeitraum im Bereich von 10 bis 300 Sekunden, vorzugsweise im Bereich von 30 bis 240 Sekunden, bei wenigstens einem Wert innerhalb des genannten Spannungsbereichs von 50 bis 400 V unter der vorstehend genannten Bedingung gehalten.

Die in Stufe (1b) angelegte Spannung wird vorzugsweise über eine Dauer von wenigstens 10 Sekunden oder von wenigstens 15 oder wenigstens 20 oder wenigstens 25 oder wenigstens 30 oder wenigstens 40 oder wenigstens 50 Sekunden, besonders bevorzugt von wenigstens 60 oder wenigstens 70 oder wenigstens 80 oder wenigstens 90 oder wenigstens 100 Sekunden, ganz besonders bevorzugt von wenigstens 110 oder wenigstens 120 Sekunden, angelegt. Vorzugsweise beträgt die Dauer dabei maximal 300 Sekunden, besonders bevorzugt maximal 250 Sekunden und insbesondere maximal 150 Sekunden. Die Dauer bezeichnet dabei jeweils das Zeitintervall, während dessen die entsprechende Spannung während der Durchführung von Stufe (1b) aufrechterhalten wird.

In einer bevorzugten Ausführungsform wird die in Stufe (1b) angelegte Spannung über eine Dauer in einem Bereich von wenigstens 10 bis 500 Sekunden oder von wenigstens 20 bis 400 Sekunden oder von wenigstens 30 bis 300 Sekunden oder von wenigstens 40 bis 250 Sekunden oder von wenigstens 50 bis 200 Sekunden, besonders bevorzugt in einem Bereich von wenigstens 60 bis 150 Sekunden oder von wenigstens 70 bis 140 Sekunden oder von wenigstens 80 bis 130 Sekunden, angelegt.

Die Spannungserhöhung von Stufe (1a) zu Stufe (1b) kann "plötzlich" erfolgen, also beispielsweise durch entsprechendes Umschalten an einem Gleichrichter, was eine gewisse technisch bedingte Mindestzeitdauer zum Erreichen der Sollspannung erfordert. Die Spannungserhöhung kann aber auch in Form einer Rampe erfolgen, also zumindest annähernd kontinuierlich über einen wählbaren Zeitraum, beispielsweise von bis zu 10, 20 30, 40, 50, 60, 120 oder 300 Sekunden. Bevorzugt ist eine Rampe von bis zu 120 Sekunden, besonders bevorzugt von bis zu 60 Sekunden. Auch eine stufenförmige Spannungserhöhung ist möglich, wobei bei jeder Spannungsstufe vorzugsweise eine gewisse Haltezeit bei dieser Spannung eingehalten wird, beispielsweise 1, 5, 10 oder 20 Sekunden. Auch eine Kombination von Rampen und Stufen ist möglich.

Die Angabe eines Zeitraums wie beispielsweise eines Zeitraums im Bereich von 10 bis 300 Sekunden für das Anlegen der Spannung in Stufe (1b) in einem Bereich von 50 bis 400 V kann bedeuten, dass diese während des genannten Zeitraums konstant gehalten wird. Die Spannung kann alternativ aber auch während der Abscheidungsdauer innerhalb von Stufe (1b) innerhalb der angegeben Minimum- und Maximalwerte im Bereich von 50 bis 400 V unterschiedliche Werte annehmen, beispielsweise hin und her pendeln oder rampen- oder stufenförmig von der Minimalzur Maximalabscheidungsspannung ansteigen.

Die Spannung, d.h. Abscheidungsspannung, in Stufe (1b) kann auch in Form von Pulsen geregelt werden, mit Zeiten ohne Strom bzw. mit einer Abscheidungsspannung unterhalb des Minimalwerts zwischen zwei Pulsen. Die Pulsdauer kann beispielsweise im Bereich von 0,1 bis 10 Sekunden liegen. Als "Zeitraum" für die Abscheidung wird dann vorzugsweise die Summe der Zeitdauern angesehen, bei denen die Abscheidungsspannung innerhalb der genannten Höchst- und Tiefstwerte bei der Durchführung von Schritt (1b) liegt. Rampen und Pulse können auch miteinander kombiniert werden.

### Weitere optionale Verfahrensschritte

Gegebenenfalls umfasst das erfindungsgemäße Verfahren ferner einen Schritt (2), der vorzugsweise auf den Schritt (1) folgt, welcher wie vorstehend ausgeführt zwei Stufen (1a) und (1b) beinhaltet, nämlich
(2) ein Kontaktieren des mit der Beschichtungszusammensetzung (A) zumindest teilweise beschichteten Substrats mit einer wässrigen Sol-Gel-Zusammensetzung vor einer Aushärtung der abgeschiedenen Beschichtungszusammensetzung (A).

Dem Fachmann sind die Begriffe "Sol-Gel-Zusammensetzung", "Sol-Gel" sowie die Herstellung von Sol-Gel-Zusammensetzungen und Sol-Gelen bekannt, beispielsweise aus D. Wang et al., Progress in Organic Coatings 2009, 64, 327-338 oder S. Zheng et al., J. Sol-Gel. Sci. Technol. 2010, 54, 174-187.

Unter einer wässrigen "Sol-Gel-Zusammensetzung" im Sinne der vorliegenden Erfindung wird vorzugsweise eine wässrige Zusammensetzung verstanden, zu deren Herstellung wenigstens eine Ausgangsverbindung, welche wenigstens ein Metallatom und/oder Halbmetallatom wie beispielsweise M¹ und/oder M² und wenigstens zwei hydrolysierbare Gruppen wie beispielsweise zwei hydrolysierbare Gruppen X¹ aufweist, und welche gegebenenfalls ferner wenigstens einen nicht hydrolysierbaren organischen Rest wie beispielsweise R¹ aufweist, mit Wasser unter Hydrolyse und Kondensation umgesetzt wird. Die wenigstens zwei hydrolysierbaren Gruppen sind dabei vorzugsweise jeweils direkt an das in der wenigstens einen Ausgangsverbindung enthaltene wenigstens eine Metallatom und/oder wenigstens eine Halbmetallatom jeweils mittels einer Einfachbindung gebunden. Aufgrund der Gegenwart des nicht hydrolysierbaren organischen Restes wie beispielsweise R¹ kann eine solche erfindungsgemäß eingesetzte Sol-Gel-Zusammensetzung auch als "Sol-Gel-Hybrid-Zusammensetzung" bezeichnet werden.

Vorzugsweise ist die im optionalen Schritt (2) erfindungsgemäß eingesetzte wässrige Sol-Gel-Zusammensetzung erhältlich durch Umsetzung
wenigstens einer Verbindung Si(X¹)₃(R¹),
wobei R¹ darin für einen nicht hydrolysierbaren organischen Rest steht, welcher wenigstens eine reaktive funktionelle Gruppe ausgewählt aus der Gruppe bestehend aus primären Amino-Gruppen, sekundären Amino-Gruppen, Epoxid-Gruppen, und Gruppen, die eine ethylenisch ungesättige Doppelbindung aufweisen, aufweist,
insbesondere wenigstens einer Verbindung Si(X¹)₃(R¹), wobei R¹ darin für einen nicht hydrolysierbaren organischen Rest steht, welcher wenigstens eine Epoxid-Gruppe als eine reaktive funktionelle Gruppe, aufweist, und worin X¹ für eine hydrolysierbare Gruppe wie beispielsweise eine O-C₁₋₆-Alkyl-Gruppe steht und zudem
gegebenenfalls wenigstens einer weiteren Verbindung Si(X¹)₃(R¹), wobei R¹ darin für einen nicht hydrolysierbaren organischen Rest steht, welcher wenigstens eine reaktive funktionelle Gruppe ausgewählt aus der Gruppe bestehend aus primären Amino-Gruppen und sekundären Amino-Gruppen, und worin X¹ für eine hydrolysierbare Gruppe wie beispielsweise eine O-C₁₋₆-Alkyl-Gruppe steht, aufweist,
und gegebenenfalls wenigstens einer Verbindung Si(X¹)₄, worin X¹ für eine hydrolysierbare Gruppe wie beispielsweise eine O-C₁₋₆-Alkyl-Gruppe steht,
und gegebenenfalls wenigstens einer Verbindung Si(X¹)₃(R¹),
wobei R¹ darin für einen nicht hydrolysierbaren organischen Rest steht, welcher keine reaktive funktionelle Gruppe aufweist wie beispielsweise einen C₁₋₁₀-Alkylrest, und worin X¹ für eine hydrolysierbare Gruppe wie beispielsweise einer O-C₁₋₆-Alkyl-Gruppe steht,
und gegebenenfalls wenigstens einer Verbindung Zr(X¹)₄, worin X¹ für eine hydrolysierbare Gruppe wie beispielsweise einer O-C₁₋₆-Alkyl-Gruppe steht,
mit Wasser.

Vorzugsweise umfasst das erfindungsgemäße Verfahren ferner einen Schritt (3), der vorzugsweise auf den Schritt (1) oder auf den Schritt (2) folgt, nämlich eine
(3) Spülung des nach Schritt (1) oder Schritt (2) erhältlichen mit der wässrigen Beschichtungszusammensetzung (A) zumindest teilweise beschichteten Substrats mit Wasser und/oder mit Ultrafiltrat.

Der Begriff "Ultrafiltrat" bzw. "Ultrafiltration" insbesondere im Zusammenhang mit der Elektrotauchlackierung ist dem Fachmann bekannt und beispielsweise definiert im Römpp Lexikon, Lacke und Druckfarben, Georg Thieme Verlag 1998.

Die Durchführung des Schritts (3) ermöglicht die Rückführung überschüssiger nach Schritt (1) auf dem zumindest teilweise beschichteten Substrat befindlicher Bestandteile der erfindungsgemäß eingesetzten wässrigen Beschichtungszusammensetzung (A) in das Tauchlackbad.

Das erfindungsgemäße Verfahren kann ferner einen optionalen Schritt (4), der vorzugsweise auf den Schritt (1) oder (2) oder (3) folgt, umfassen, nämlich einen Schritt (4)
(4) Kontaktieren des nach Schritt (1) oder Schritt (2) oder Schritt (3) erhältlichen mit der wässrigen Beschichtungszusammensetzung (A) zumindest teilweise beschichteten Substrats mit Wasser und/oder Ultrafiltrat, vorzugsweise über eine Dauer von 30 Sekunden bis zu einer Stunde, besonders bevorzugt über eine Dauer von 30 Sekunden bis zu 30 Minuten.

Das erfindungsgemäße Verfahren kann ferner einen optionalen Schritt (4a), der vorzugsweise auf den Schritt (1), insbesondere Stufe (1b), oder (2) oder (3) oder (4) folgt, umfassen, nämlich einen Schritt (4a),
(4a) Kontaktieren des nach Schritt (1) oder Schritt (2) oder Schritt (3) oder Schritt (4) erhältlichen mit der wässrigen Beschichtungszusammensetzung (A) zumindest teilweise beschichteten Substrats mit einer wässrigen Lösung oder Dispersion, vorzugsweise einer wässrigen Lösung, wenigstens eines Vernetzungskatalysators (V), vorzugsweise wenigstens eines Vernetzungskatalysators (V), der zur Vernetzung der reaktiven funktionellen Gruppen des Bindemittels (A1), insbesondere eines als Bindemittel (A1) eingesetzten Acrylat-basierten polymeren Harzes und/oder Epoxid-basierten polymeren Harzes geeignet ist.

Vorzugsweise ist die wässrige Lösung des wenigstens einen Vernetzungskatalysators (V) eine wässrige Lösung einer Bismut-Verbindung wie beispielsweise eine wässrige Lösung enthaltend eine trivalentes Bismut aufweisende Verbindung. Vorzugsweise wird an das eingesetzte elektrisch leitfähige Substrat während der Durchführung des optionalen Schritts (4a) eine kathodische Spannung gegenüber einer Anode angelegt, besonders bevorzugt in einem Bereich von 4 V bis 100 V. Die Durchführung des Schritts (4a) ermöglicht eine effiziente Vernetzung für den Fall, das eine zu geringe Menge der Komponente (A3) in der Beschichtungszusammensetzung nach Durchführung der Stufe (1a) des Schrittes (1) zurückbleibt, um in Stufe (1b) abgeschieden zu werden.

In einer bevorzugten Ausführungsform umfasst das erfindungsgemäße Verfahren ferner wenigstens einen Schritt (5), der vorzugsweise auf den Schritt (1) und/oder (2) und/oder (3) und/oder (4) und/oder (4a) folgt, aber vorzugsweise noch vor einem optionalen Schritt (6) durchgeführt wird, nämlich das
(5) Aufbringen wenigstens einer weiteren Lackschicht auf das nach Schritt (1) und/oder (2) und/oder (3) und/oder (4) und/oder (4a) erhältliche mit der erfindungsgemäß eingesetzten wässrigen Beschichtungszusammensetzung (A) zumindest teilweise beschichtete Substrat.

Mittels des Schrittes (5) können ein oder mehrere weitere Lackschichten auf das nach Schritt (1) und/oder (2) und/oder (3) und/oder (4) und/oder (4a) erhältliche und mit der Beschichtungszusammensetzung (A) zumindest teilweise beschichtete Substrat aufgebracht werden. Sollen mehrere Schichten aufgebracht werden, kann Schritt (5) entsprechend oft wiederholt werden. Beispiele weiterer aufzubringender Lackschichten sind beispielsweise Basislackschichten, Füllerschichten und/oder ein- oder mehrschichtige Decklackschichten. Dabei kann die gemäß Schritt (1) aufgebrachte wässrige Beschichtungszusammensetzung (A), gegebenenfalls nachdem sie einer Nachspülung mit einer wässrigen Sol-Gel-Zusammensetzung gemäß Schritt (2) und/oder einer optionalen Spülung mit Wasser und/oder Ultrafiltrat (gemäß Schritt (3)) unterworfen worden ist, und/oder nach Durchführung von Schritt (4) und/oder (4a) gehärtet werden, wobei diese Härtung wie nachfolgend beschrieben gemäß einem Schritt (6) erfolgt, bevor eine weitere Schicht wie eine Basislackschicht, Füllerschicht und/oder eine ein- oder mehrschichtige Decklackschicht aufgebracht wird. Alternativ kann aber die gemäß Schritt (1) aufgebrachte wässrige Beschichtungszusammensetzung (A), gegebenenfalls nachdem sie einer Nachspülung mit einer wässrigen Sol-Gel-Zusammensetzung gemäß Schritt (2) und/oder einer optionalen Spülung mit Wasser und/oder Ultrafiltrat (gemäß Schritt (3)) unterworfen worden ist und/oder nach Durchführung von Schritt (4) und/oder (4a), nicht gehärtet werden, sondern zunächst eine weitere Schicht wie eine Basislackschicht, Füllerschicht und/oder eine ein- oder mehrschichtige Decklackschicht aufgebracht werden ("Nass-in-Nass-Verfahren"). Nach Aufbringen dieser weiteren Schicht(en) wird in diesem Fall das so erhaltene Gesamtsystem gehärtet, wobei diese Härtung wie nachfolgend beschrieben vorzugsweise gemäß einem Schritt (6) erfolgen kann.

In einer bevorzugten Ausführungsform umfasst das erfindungsgemäße Verfahren ferner wenigstens einen Schritt (6), nämlich eine
(6) Aushärtung der nach Schritt (1) und/oder gegebenenfalls (2) und/oder (3) und/oder (4) und/oder (4a) zumindest teilweise auf dem Substrat aufgebrachten wässrigen Beschichtungszusammensetzung (A) oder der nach Schritt (1) und/oder gegebenenfalls (2) und/oder (3) und/oder (4) und/oder (4a) und/oder (5) zumindest teilweise auf dem Substrat aufgebrachten Beschichtung.

Schritt (6) des erfindungsgemäßen Verfahrens wird vorzugsweise mittels Einbrennen nach Schritt (1) oder gegebenenfalls (2) oder gegebenenfalls erst nach wenigstens einem weiteren Schritt (5) durchgeführt. Schritt (6) erfolgt vorzugsweise in einem Ofen. Die Aushärtung erfolgt dabei vorzugsweise bei einer Substrattemperatur im Bereich von 140°C bis 200°C, besonders bevorzugt in einem Bereich von 150°C bis 190°C, ganz besonders bevorzugt in einem Bereich von 160°C bis 180°C. Schritt (6) erfolgt vorzugsweise über eine Dauer von wenigstens 2 Minuten bis 2 Stunden, besonders bevorzugt über eine Dauer von wenigstens 5 Minuten bis 1 Stunde, ganz besonders bevorzugt über eine Dauer von wenigstens 10 Minuten bis 30 Minuten.

### Zumindest teilweise beschichtetes Substrat

Ein weiterer Gegenstand der vorliegenden Offenbarung ist ein zumindest teilweise mit der erfindungsgemäßen wässrigen Beschichtungszusammensetzung (A) beschichtetes elektrisch leitfähiges Substrat oder ein zumindest teilweise beschichtetes elektrisch leitfähiges Substrat, welches mittels des erfindungsgemäßen Verfahrens zur zumindest teilweisen Beschichtung eines elektrisch leitfähigen Substrats mit einem Elektrotauchlack erhältlich ist.

Ein weiterer Gegenstand der vorliegenden Offenbarung ist ein aus wenigstens einem solchen Substrat hergestellter vorzugsweise metallischer Gegenstand oder hergestelltes vorzugsweise metallisches Bauteil.

Solche Gegenstände können beispielsweise Metallbänder sein. Solche Bauteilen können zum Beispiel Karosserien und deren Teile von Automobilen wie Personenkraftwagen, Lastwagen, Motorrädern und Autobussen, und Bauteile von elektrischen Haushaltsprodukten oder auch Bauteilen aus dem Bereich der Geräteverkleidungen, Fassadenverkleidungen, Deckenverkleidungen oder Fensterprofilen sein.

### Verfahren zur Einstellung und/oder Aufrechterhaltung der Konzentrationen der Komponenten (A3) und/oder (A4) in der Beschichtungszusammensetzung (A)

Ein weiterer Gegenstand der vorliegenden Erfindung ist ein Verfahren zur Einstellung und/oder Aufrechterhaltung der Konzentration der Komponente (A3) und/oder (A4) in der erfindungsgemäßen Beschichtungszusammensetzung (A) während der Durchführung des erfindungsgemäßen Verfahrens zur zumindest teilweisen Beschichtung eines elektrisch leitfähigen Substrats mit einem Elektrotauchlack.

Alle im Zusammenhang mit der erfindungsgemäßen wässrigen Beschichtungszusammensetzung (A) und des erfindungsgemäßen Verfahrens zur zumindest teilweisen Beschichtung eines elektrisch leitfähigen Substrats mit einem Elektrotauchlack hierin zuvor beschriebenen bevorzugten Ausführungsformen sind auch bevorzugte Ausführungsformen der erfindungsgemäßen wässrigen Beschichtungszusammensetzung (A) hinsichtlich ihres Einsatzes in dem erfindungsgemäßen Verfahren zur Einstellung und/oder Aufrechterhaltung der Konzentration der Komponente (A3) und/oder (A4) in der erfindungsgemäßen Beschichtungszusammensetzung (A) während der Durchführung des erfindungsgemäßen Verfahrens zur zumindest teilweisen Beschichtung eines elektrisch leitfähigen Substrats mit einem Elektrotauchlack.

Das erfindungsgemäße Verfahren zur Einstellung und/oder Aufrechterhaltung der Konzentration der Komponente (A3) und/oder (A4) in der erfindungsgemäßen Beschichtungszusammensetzung (A) sieht während der Durchführung des erfindungsgemäßen (Beschichtungs-)Verfahrens vor,
in vorgewählten Zeitabständen den Anteil der Komponente (A3) und/oder (A4) in der Beschichtungszusammensetzung (A) in ppm, bezogen auf das Gesamtgewicht der Beschichtungszusammensetzung (A), zu bestimmen
und
den Anteil der Komponente (A5) in der Beschichtungszusammensetzung (A) spätestens dann zu erhöhen, wenn der Anteil der Komponente (A3) in ppm geringer als ein vorgewählter Sollwerte dieser Komponente in der Beschichtungszusammensetzung (A) ist,
oder
den Anteil der Komponente (A4) in der Beschichtungszusammensetzung (A) spätestens dann zu erhöhen, wenn der Anteil der Komponente (A4) in ppm geringer als ein vorgewählter Sollwerte dieser Komponente in der Beschichtungszusammensetzung (A) ist.

Das erfindungsgemäße Verfahren ermöglicht eine unabhängige Dosierung der Komponenten (A5) bzw. (A4) und somit eine Flexibilität hinsichtlich der gewünschten Einstellung dieser Parameter, die zudem leicht durchzuführen ist.

Der vorgewählte Sollwert der Komponente (A3) in der Beschichtungszusammensetzung (A) kann die Mindestmenge dieser Komponente in ppm, bezogen auf das Gesamtgewicht der Beschichtungszusammensetzung (A), sein. Die Mindestmenge der Komponente (A3) in der erfindungsgemäßen Beschichtungszusammensetzung ist dabei wenigstens 30 ppm Bismut, bezogen auf das Gesamtgewicht der Beschichtungszusammensetzung (A). Die Mindestmenge an (A3) in (A) umfasst zudem alle im Zusammenhang mit der Beschichtungszusammensetzung (A) vorstehend in bevorzugten Ausführungsformen genannten Mindestmengen an der Komponente (A3).

Der vorgewählte Sollwert der Komponente (A4) in der Beschichtungszusammensetzung (A) kann die Mindestmenge dieser Komponente in ppm, bezogen auf das Gesamtgewicht der Beschichtungszusammensetzung (A), sein. Die Mindestmenge der Komponente (A4) in der erfindungsgemäßen Beschichtungszusammensetzung ist dabei wenigstens 100 ppm Bismut, bezogen auf das Gesamtgewicht der Beschichtungszusammensetzung (A). Die Mindestmenge an (A4) umfasst zudem alle im Zusammenhang mit der Beschichtungszusammensetzung (A) vorstehend in bevorzugten Ausführungsformen genannten Mindestmengen an der Komponente (A4).

Die vorgewählten Sollwerte der Komponenten (A3) und (A4) in der Beschichtungszusammensetzung (A) in ppm können alternativ auch jeweils größer sein als die Mindestmengen der Komponenten (A3) und (A4) in (A). Vorzugsweise ist der Sollwert der Komponente (A3) in (A) 40 ppm oder 100 ppm oder 200 ppm oder 300 ppm oder 500 ppm oder 1 000 ppm, jeweils bezogen auf das Gesamtgewicht der Beschichtungszusammensetzung (A). Vorzugsweise ist der Sollwert der Komponente (A4) in (A) 500 ppm oder 1 000 ppm oder 1 600 ppm oder 2 600 ppm, jeweils bezogen auf das Gesamtgewicht der Beschichtungszusammensetzung (A).

Insbesondere ermöglicht das erfindungsgemäße Verfahren, dass eine Anreicherung des Komplexiermittels (A5) in der Beschichtungszusammensetzung (A) vermieden werden kann. Das Komplexierungsmittel (A5) wird nach Abscheidung (und daraus resultierend nach "Verbrauch") der in der Beschichtungszusammensetzung enthaltenen Komponente (A3) während der Durchführung von Stufe (1a) des erfindungsgemäßen Verfahrens zur zumindest teilweisen Beschichtung eines elektrisch leitfähigen Substrats mit einem Elektrotauchlack in Tauchlackbad bzw. der Beschichtungszusammensetzung (A) vorzugsweise wieder frei gesetzt. Eine daraus resultierende Anreicherung des Komplexiermittels (A5) in der Beschichtungszusammensetzung (A) kann zu Problemen hinsichtlich der Stabilität des Tauchbads führen. Durch Erhöhung des Anteils der Komponente (A4) in der Beschichtungszusammensetzung (A) kann dem entgegengewirkt werden. Sollte dagegen der Anteil von (A5) und damit auch der Anteil von (A3) in der Beschichtungszusammensetzung (A) zu gering werden (beispielsweise durch Ausschleppung über den Anolyt-Kreislauf oder durch Verluste bei der Ultrafiltration) so kann dem durch Erhöhung des Anteils der Komponente (A5) in der Beschichtungszusammensetzung (A) entgegengewirkt werden.

Unter dem Ausdruck "in vorgewählten Zeitabständen" wird im Sinne der vorliegenden Erfindung vorzugsweise jeder dem Fachmann bekannte und geeignete Zeitabstand verstanden, der sich im Bereich von Stunden, Tagen oder Wochen bewegen kann. Besonders bevorzugt wird der Anteil der Komponente (A3) und/oder (A4) in der Beschichtungszusammensetzung (A) in ppm, bezogen auf das Gesamtgewicht der Beschichtungszusammensetzung (A), täglich oder wöchentlich, insbesondere wöchentlich, bestimmt.

### Bestimmungsmethoden

### 1. Salzsprühnebelprüfung gemäß DIN EN ISO 9227 NSS

Die Salzsprühnebelprüfung dient der Ermittlung der Korrosionsbeständigkeit einer Beschichtung auf einem Substrat. Die Salzsprühnebelprüfung wird gemäß DIN EN ISO 9227 NSS (Datum: 1.9.2012) für das mit einer erfindungsgemäßen Beschichtungs-zusammensetzung oder mit einer Vergleichsbeschichtungszusammensetzung beschichtete elektrisch leitfähige Substrat kaltgewalzter Stahl (CRS) durchgeführt. Die zu untersuchenden Proben werden dabei in einer Kammer, in der bei einer Temperatur von 35 °C kontinuierlich über eine Dauer von 504 bzw. 1008 Stunden eine 5%ige Kochsalzlösung mit kontrolliertem pH-Wert im Bereich von 6,5 bis 7,2 vernebelt wird. Der Nebel schlägt sich auf die zu untersuchenden Proben nieder und überzieht diese mit einem korrosiv wirkenden Salzwasserfilm.

Wird die Beschichtung der zu untersuchenden Proben noch vor der Salzsprühnebelprüfung gemäß DIN EN ISO 9227 NSS mit einem Messerschnitt bis zum Substrat eingeritzt, so können die Proben hinsichtlich ihres Unterwanderungsgrades gemäß DIN EN ISO 4628-8 (Datum 1.3.2013) untersucht werden, da das Substrat während der Salzsprühnebelprüfung gemäß DIN EN ISO 9227 NSS entlang der Ritzlinie korrodiert. Diese Untersuchung erfolgt nach Durchführung der Salzsprühnebelprüfung über eine Dauer von 504 h. Durch den fortschreitenden Korrosionsvorgang wird die Beschichtung während der Prüfung mehr oder weniger stark unterwandert. Der Unterwanderungsgrad in [mm] ist ein Maß für die Beständigkeit der Beschichtung gegen Korrosion.

### 2. Filiformkorrosion gemäß DIN EN 3665

Die Bestimmung der Filiformkorrosion dient der Ermittlung der Korrosionsbeständigkeit einer Beschichtung auf einem Substrat. Diese Bestimmung wird gemäß DIN EN 3665 (1.8.1997) für das mit einer erfindungsgemäßen Beschichtungszusammensetzung oder mit einer Vergleichsbeschichtungszusammensetzung beschichtete elektrisch leitfähige Substrat Aluminium (ALU) über eine Dauer von 1008 h durchgeführt. Dabei wird die jeweilige Beschichtung, ausgehend von einer linienförmigen Verletzung der Beschichtung, in Form einer linien- oder fadenförmigen Unterkorrosion unterwandert. Die maximale Fadenlänge in [mm] wird dabei gemäß DIN EN 3665 (Verfahren 3) ausgemessen. Die mittlere Fadenlänge in [mm] wird dabei gemäß PAPP WT 3102 (Daimler) (Datum 21.12.2006) bestimmt. Die maximale und mittlere Fadenlänge sind ein Maß für die Beständigkeit der Beschichtung gegen Korrosion.

### 3. VDA-Klimawechseltest nach VDA 621-415

Dieser Klimawechseltest dient der Ermittlung der Korrosionsbeständigkeit einer Beschichtung auf einem Substrat. Der Klimawechseltest wird für das entsprechend beschichtete Substrat kaltgewalzter Stahl (CRS) durchgeführt. Der Klimawechseltest wird dabei in 10 sogenannten Zyklen durchgeführt. Ein Zyklus besteht dabei aus insgesamt 168 Stunden (1 Woche) und umfasst
a) 24 Stunden einer Salzsprühnebelprüfung gemäß DIN EN ISO 9227 NSS (Datum: 1.9.2012),
b) gefolgt von 8 Stunden einer Lagerung einschließlich Anwärmen gemäß DIN EN ISO 6270-2 vom September 2005, Verfahren AHT,
c) gefolgt von 16 Stunden einer Lagerung einschließlich Abkühlen gemäß DIN EN ISO 6270-2 vom September 2005, Verfahren AHT,
d) 3-fache Wiederholung von b) und c) (insgesamt also 72 Stunden), und
e) 48 Stunden einer Lagerung einschließlich Abkühlen bei belüfteter Klimakammer gemäß DIN EN ISO 6270-2 vom September 2005, Verfahren AHT.

Wird die jeweils eingebrannte Beschichtung der zu untersuchenden Proben noch vor der Durchführung des Klimawechseltests mit einem Messerschnitt bis zum Substrat eingeritzt, so können die Proben hinsichtlich ihres Unterwanderungsgrades gemäß DIN EN ISO 4628-8 (Datum 1.3.2013) untersucht werden, da das Substrat während der der Durchführung des Klimawechseltests entlang der Ritzlinie korrodiert. Durch den fortschreitenden Korrosionsvorgang wird die Beschichtung während der Prüfung mehr oder weniger stark unterwandert. Der Unterwanderungsgrad in [mm] ist ein Maß für die Beständigkeit der Beschichtung.

### 4. Röntgenfluoreszenzanalyse (RFA) zur Schichtgewichtsbestimmung

Das Schichtgewicht (in mg pro m² Oberfläche) der zu untersuchenden Beschichtung wird mittels wellenlängendispersiver Röntgenfluoreszenzanalyse (RFA) nach DIN 51001 (Datum: August 2003) ermittelt. Auf diese Weise kann beispielsweise der Bismut-Gehalt bzw. die Bismut-Schichtauflage einer Beschichtung wie beispielsweise der nach Stufe (1a) von Schritt (1) des erfindungsgemäßen Verfahrens erhaltenen Beschichtung ermittelt werden. Analog kann auch der jeweilige Gehalt an anderen Elementen wie beispielsweise Zirkonium bestimmt werden. Die bei der Durchführung der Röntgenfluoreszenzanalyse erhaltenen Signale werden um einen separat gemessen Untergrund einer unbeschichteten Referenzprobe korrigiert. Es werden Bruttozählraten (in kCounts pro Sekunde) jeweils der zu bestimmenden Elemente wie Bismut bestimmt. Von den so bestimmten jeweiligen Bruttozählraten der jeweiligen Probe werden die Bruttozählraten der jeweiligen Elemente einer Referenzprobe (unbeschichtetes Substrat) subtrahiert und so die Nettozählraten der zu bestimmenden Elemente erhalten. Diese werden mittels einer elementspezifischen Transferfunktion (erhalten aus einer Kalibriermessung) in Schichtgewichte (mg/cm²) umgerechnet. Werden mehrere Schichten aufgetragen, so wird nach jedem Auftrag das jeweilige Schichtgewicht bestimmt. Bei einer Folgeschicht zählt dann jeweils die Bruttozählrate der vorangegangenen Schicht als Referenz. Mittels dieser Bestimmungsmethode erfolgt die Bestimmung des Bismut-Gehalts der nach Stufe (1a) von Schritt (1) des erfindungsgemäßen Verfahrens erhaltenen Beschichtung.

### 5. Atomemissionsspektrometrie (ICP-OES) zur Bestimmung der Mengen an (A3) und (A4) in (A) sowie der Gesamtmenge des in der Beschichtungszusammensetzung (A) enthaltenen Bismut

Der Gehalt an bestimmten Elementen einer zu untersuchenden Probe wie beispielsweise der Gehalt an Bismut wird mittels induktiv-gekoppelter Plasma-Atom-Emissionspektrometrie (ICP-OES) gemäß DIN EN ISO 11885 (Datum: 1.9.2009) ermittelt. Als Probe wird eine Lösung der jeweiligen Probe eingesetzt wie beispielsweise eine Probe des Ultrafiltrats. Die Ultrafiltration wird dabei für die Dauer von einer Stunde durchgeführt (Ultrafiltration im Kreislauf; Membran der Ultrafiltration: Nadir, PVDF, RM-UV 150T). Aus dem Permeat bzw. Ultrafiltrat wird eine Probe entnommen. Diese wird in einem durch ein Hochfrequenzfeld erzeugtes Argonplasma thermisch angeregt und das aufgrund von Elektronenübergängen emittierte Licht als Spektrallinie der entsprechenden Wellenlänge sichtbar und mit einem optischen System analysiert. Dabei besteht eine lineare Beziehung zwischen der Intensität des emittierten Lichtes und der Konzentration des entsprechenden Elements wie Bismut. Vor Durchführung werden anhand von bekannten Elementstandards (Referenzstandards), die in Abhängigkeit von der jeweiligen zu untersuchenden Probe Kalibrierungsmessungen durchgeführt. Anhand dieser Kalibrierungen können Konzentrationen unbekannter Lösungen wie die Konzentration der Menge an (A3) im Ultrafiltrat bestimmt werden. Dabei wird angenommen, dass die in (A) in gelöster Form vorliegende Komponente (A3) vollständig ins Ultrafiltrat übergeht.

Mittels dieser Bestimmungsmethode erfolgt aber nicht nur die Bestimmung der Mengen der Komponente (A3) in der Beschichtungszusammensetzung (A), sondern es wird auch die Gesamtmenge an Bismut in der Beschichtungszusammensetzung (A), d.h. die Summe von (A3) und (A4), bestimmt. Hierzu wird eine Probe der Beschichtungszusammensetzung (A) entnommen und ein Mikrowellenaufschluss dieser Probe durchgeführt, um eine der ICP-OES-Untersuchung zugängliche Probenlösung zu erhalten: hierbei wird eine Probe der Beschichtungszusammensetzung (A) oder einer Vergleichszusammensetzung eingewogen und die flüchtigen Bestandteile dieser Probe durch Erhitzen bei einer linearen Temperaturerhöhung von 18°C auf 130°C innerhalb einer Stunde entfernt. Zu einer Menge von bis zu 0,5 g dieser so erhaltenen Probe wird eine 1:1-Mischung aus Salpetersäure (65%ig) und Schwefelsäure (96%ig) gegebenen (jeweils 5 mL von jeder der genannten Säuren) und dann ein Mikrowellenaufschluss mit einem Gerät der Firma Berghof (Gerät Speedwave IV) durchgeführt. Während des Aufschlusses wird die Probenmischung innerhalb von 20 bis 30 Minuten auf einer Temperatur von 250°C erhitzt und diese Temperatur für 10 Minuten gehalten. Nach dem Aufschluss soll die verbleibende Probenmischung eine klare Lösung ohne Festkörperanteil sein.

Mittels ICP-OES gemäß DIN EN ISO 11885 wird dann der Gesamtgehalt an Bismut der Probe bestimmt. Wird von diesem der Anteil an (A3) subtrahiert, der wie vorstehend erläutert, ermittelt wird, so ergibt sich der Anteil an vorhandener Komponente (A4) in der untersuchten Probe.

Die nachfolgenden Beispiele dienen der Erläuterung der Erfindung, sind jedoch nicht einschränkend auszulegen.

Sofern nicht anders angeführt, handelt es sich bei den nachfolgenden Angaben in Prozenten jeweils um Gewichtsprozente.

### Beispiele und Vergleichsbeispiele

### 1. Herstellung von erfindungsgemäßen wässrigen Beschichtunaszusammensetzungen sowie einer Vergleichsbeschichtungszusammensetzung

Die zur Herstellung der nachfolgenden beispielhaften erfindungsgemäßen Beschichtungszusammensetzungen bzw. der Vergleichsbeschichtungszusammensetzung V1 eingesetzten Pigmentpasten CathoGuard® 520 und CathoGuard® 800 der Firma BASF enthalten Bismut-Subnitrat. Die Herstellung solcher Pigmentpasten ist dem Fachmann beispielsweise aus DE 10 2008 016 220 A1 bekannt (Seite 7, Tabelle 1, Variante B).

### Vergleichsbeschichtungszusammensetzung V1

Eine wässrige Dispersion eines Bindemittels und eines Vernetzungsmittels (kommerziell erhältliches Produkt CathoGuard® 520 der Firma BASF mit einem Festkörpergehalt von 37,5 Gew.-%), eine Pigmentpaste (kommerziell erhältliches Produkt CathoGuard® 520 der Firma BASF mit einem Festkörpergehalt von 65,0 Gew.-%) und Anteile an deionisiertem Wasser werden zu einer Vergleichsbeschichtungszusammensetzung (V1) zusammengegeben und unter Rühren bei Raumtemperatur (18-23°C) vermischt. Dabei werden insgesamt 2275 g CathoGuard® 520, 295 g CathoGuard® 520 Pigmentpaste und 2430 g deionisiertes Wasser eingesetzt.

### Beschichtungszusammensetzung Z1

2,29 g des Di-Natriums Salz der Ethylendiamintetraessigsäure (EDTA) werden in 961 g deionisiertem Wasser zur Herstellung einer Lösung L1 gelöst. Zur Lösung L1 werden 118 g einer Pigmentpaste (kommerziell erhältliches Produkt CathoGuard® 520 der Firma BASF mit einem Festkörpergehalt von 65,0 Gew.-%) unter Rühren bei Raumtemperatur (18-23°C) unter Erhalt der Mischung M2 gegeben. Die Mischung M2 wird über eine Dauer von 24 h bei Raumtemperatur (18-23°C) gerührt. Danach werden zu dieser resultierenden Mischung 886 g einer wässrigen Dispersion eines Bindemittels und eines Vernetzungsmittels (kommerziell erhältliches Produkt CathoGuard® 520 der Firma BASF mit einem Festkörpergehalt von 37,5 Gew.-%) unter Erhalt der Beschichtungszusammensetzung Z1 gegeben. Das molare Verhältnis von Bismut (als Metall gerechnet) zu EDTA in der Beschichtungszusammensetzung liegt bei 1:0,25.

### Beschichtungszusammensetzung Z2

Die Herstellung der Beschichtungszusammensetzung Z2 erfolgt analog der im Zusammenhang mit der Beschichtungszusammensetzung Z1 beschriebenen Methode mit dem Unterschied, dass nach Zugabe der wässrigen Dispersion des Bindemittels und des Vernetzungsmittels zusätzlich 0,6 g Ammoniumhydrogendifluorid (entspricht 200 ppm Fluorid, bezogen auf das Gesamtgewicht der Beschichtungszusammensetzung) zu der resultierenden Mischung gegeben werden. Das molare Verhältnis von Bismut (als Metall gerechnet) zu EDTA in der Beschichtungszusammensetzung liegt bei 1:0,25. Das molare Verhältnis von Bismut (als Metall gerechnet) zu Fluorid in der Beschichtungszusammensetzung liegt bei 1:0,87.

### Beschichtungszusammensetzung Z3

1,8 g Ethylendiamintetraessigsäure (EDTA) werden in 961 g deionisiertem Wasser zur Herstellung einer Mischung M1 gegeben. Zur Mischung M1 werden danach zudem 118 g einer Pigmentpaste (kommerziell erhältliches Produkt CathoGuard® 520 der Firma BASF mit einem Festkörpergehalt von 65,0 Gew.-%) unter Rühren bei Raumtemperatur (18-23°C) unter Erhalt der Mischung M2 gegeben. Die Mischung M2 wird zudem durch Zugabe von Essigsäure angesäuert und dann über eine Dauer von 5 Tagen bei Raumtemperatur (18-23°C) gerührt. Danach werden zu dieser resultierenden Mischung 886 g einer wässrigen Dispersion eines Bindemittels und eines Vernetzungsmittels (kommerziell erhältliches Produkt CathoGuard® 520 der Firma BASF mit einem Festkörpergehalt von 37,5 Gew.-%) gegeben. Das molare Verhältnis von Bismut (als Metall gerechnet) zu EDTA in der Beschichtungszusammensetzung liegt bei 1:0,25.

### Beschichtungszusammensetzung Z4

9 g Ethylendiamintetraessigsäure (EDTA) werden in 2402,5 g deionisiertem Wasser zur Herstellung einer Mischung M1 gegeben. Zur Mischung M1 werden danach zudem 295 g einer Pigmentpaste (kommerziell erhältliches Produkt CathoGuard® 520 der Firma BASF mit einem Festkörpergehalt von 65,0 Gew.-%) unter Rühren bei Raumtemperatur (18-23°C) unter Erhalt der Mischung M2 gegeben. Die Mischung M2 wird über eine Dauer von 20 h bei Raumtemperatur (18-23°C) gerührt. Danach werden zu dieser resultierenden Mischung 2215 g einer wässrigen Dispersion eines Bindemittels und eines Vernetzungsmittels (kommerziell erhältliches Produkt CathoGuard® 520 der Firma BASF mit einem Festkörpergehalt von 37,5 Gew.-%) gegeben. Das molare Verhältnis von Bismut (als Metall gerechnet) zu EDTA in der Beschichtungszusammensetzung liegt bei 1:0,5.

### Beschichtungszusammensetzung Z5

Die Herstellung der Beschichtungszusammensetzung Z5 erfolgt analog der im Zusammenhang mit der Beschichtungszusammensetzung Z4 beschriebenen Methode mit dem Unterschied, dass anstelle von EDTA 9 g des kommerziell erhältlichen Produkts Quadrol (N,N,N',N'-Tetrakis-2-hydroxypropylethylendiamin) eingesetzt werden. Ferner wird die Mischung M2 vor Zugabe der wässrigen Dispersion des Bindemittels und des Vernetzungsmittels über eine Dauer von 26 h bei Raumtemperatur (18-23°C) gerührt und zu der resultierenden Mischung dann nach Zugabe der wässrigen Dispersion des Bindemittels und des Vernetzungsmittels eine solche Menge an Essigsäure zugefügt, dass ein pH-Wert von 5,7 eingestellt wird. Das molare Verhältnis von Bismut (als Metall gerechnet) zu Quadrol in der Beschichtungszusammensetzung liegt bei 1:0,5.

### Beschichtungszusammensetzung Z6

Die Herstellung der Beschichtungszusammensetzung Z6 erfolgt analog der im Zusammenhang mit der Beschichtungszusammensetzung Z4 beschriebenen Methode mit dem Unterschied, dass anstelle von EDTA 5,02 g des kommerziell erhältlichen Produkts Bicin (N,N'-Bis((2-Hydroxyethyl)glycin) eingesetzt werden. Ferner wird die Mischung M2 vor Zugabe der wässrigen Dispersion des Bindemittels und des Vernetzungsmittels über eine Dauer von 26 h bei Raumtemperatur (18-23°C) gerührt und zu der resultierenden Mischung dann nach Zugabe der wässrigen Dispersion des Bindemittels und des Vernetzungsmittels eine solche Menge an Essigsäure zugefügt, dass ein pH-Wert von 5,7 eingestellt wird. Das molare Verhältnis von Bismut (als Metall gerechnet) zu Bicin® in der Beschichtungszusammensetzung liegt bei 1:0,5.

Tabelle 1a gibt einen Überblick über die so erhaltenen erfindungsgemäßen Beschichtungszusammensetzungen Z1 bis Z6 sowie die Vergleichsbeschichtungszusammensetzung V1.

**Tabelle 1a**

| **Beispiele Z1-Z6 und Vergleichsbeispiel V1** | **V1** | **Z1** | **Z2** | **Z3** | **Z4** | **Z5** | **Z6** |
|---|---|---|---|---|---|---|---|
| CathoGuard® 520 / Gew.-% | 45,50 | 45,03 | 45,02 | 45,00 | 45,01 | 48,82 | 48,86 |
| Di-Natrium Salz von EDTA / Gew.-% | - | 0,12 | 0,12 | - | - | - | - |
| EDTA (freie Säure) / Gew.-% | - | - | - | 0,09 | 0,18 | - | - |
| Quadrol / Gew.-% | - | - | - | - | - | 0,18 | - |
| Bicin / Gew.-% | - | - | - | - | - | - | 0,10 |
| Essigsäure / Gew.-% | - | - | - | 0,10 | - | - | - |
| Deionisiertes Wasser / Gew.-% | 48,60 | 48,85 | 48,83 | 48,81 | 48,82 | 45,01 | 45,04 |
| Pigmentpaste CathoGuard® 520 enthaltend Bismut-Subnitrat / Gew.-% | 5,90 | 6,00 | 6,00 | 6,00 | 5,99 | 5,99 | 6,00 |
| Ammoniumhydrogendifluorid / Gew.-% | - | - | 0,03 | - | - | - | - |
| pH-Wert | 5,93 | 5,60 | 5,90 | 5,40 | 5,83 | 5,70 | 5,70 |
| Leitfähigkeit / µS/cm | 2190 | 2720 | 2930 | 2660 | - | - | - |

Die jeweiligen pH-Werte und Leitfähigkeiten in der Tabelle 1a werden jeweils bei einer Temperatur im Bereich von 18 bis 23 °C ermittelt, sofern sie bestimmt worden sind. Sofern der pH-Wert der jeweiligen Beschichtungszusammensetzung nachträglich durch Zugabe einer Säure eingestellt wird, sind die eingesetzten Mengen an Säure in vorstehender Tabelle nicht angeführt.

### Beschichtungszusammensetzung Z7

Zur Herstellung der Beschichtungszusammensetzung Z7 werden 8,6 g Milchsäure (Mischung aus D- und L-Milchsäure) mit 482,4 g deionisiertem Wasser vermischt. Die so erhaltene Mischung wird durch Zugabe von verdünnter Ammoniak-Lösung auf einen pH-Wert von 6,0 eingestellt. Zu dieser Mischung werden 443 g einer wässrigen Dispersion eines Bindemittels und eines Vernetzungsmittels (kommerziell erhältliches Produkt CathoGuard® 520 mit einem Festkörpergehalt von 37,5 Gew.-%) sowie 66 g einer Pigmentpaste (kommerziell erhältliches Produkt CathoGuard® 520 der Firma BASF mit einem Festkörpergehalt von 65,0 Gew.-%) unter Rühren bei Raumtemperatur (18-23°C) gegeben und vermischt. Vor der weiteren Verwendung wird die so erhaltene Beschichtungszusammensetzung über eine Dauer von 24 h bei 18-23°C gelagert.

### Beschichtungszusammensetzung Z8

Zur Herstellung der Beschichtungszusammensetzung Z8 werden 2,7 g Milchsäure (Mischung aus D- und L-Milchsäure) mit 488,3 g deionisiertem Wasser vermischt. Zu dieser Mischung werden 443 g einer wässrigen Dispersion eines Bindemittels und eines Vernetzungsmittels (kommerziell erhältliches Produkt CathoGuard® 520 mit einem Festkörpergehalt von 37,5 Gew.-%) sowie 66 g einer Pigmentpaste (kommerziell erhältliches Produkt CathoGuard® 520 der Firma BASF mit einem Festkörpergehalt von 65,0 Gew.-%) unter Rühren bei Raumtemperatur (18-23°C) gegeben und vermischt. Vor der weiteren Verwendung wird die so erhaltene Beschichtungszusammensetzung über eine Dauer von 24 h bei 18-23°C gelagert.

### Beschichtungszusammensetzung Z10

Die Herstellung der Beschichtungszusammensetzung Z10 erfolgt analog der im Zusammenhang mit der Beschichtungszusammensetzung Z4 beschriebenen Methode mit dem Unterschied, dass anstelle von EDTA 7,27 g THEED (N,N,N',N'-Tetrakis-2-hydroxyethylethylendiamin) eingesetzt werden. Ferner wird die Mischung M2 vor Zugabe der wässrigen Dispersion des Bindemittels und des Vernetzungsmittels über eine Dauer von 23 h bei Raumtemperatur (18-23°C) gerührt. Zudem wird nach Zugabe der wässrigen Dispersion des Bindemittels und des Vernetzungsmittels mittels Essigsäure ein pH-Wert von 5,7 eingestellt. Das molare Verhältnis von Bismut (als Metall gerechnet) zu THEED in der Beschichtungszusammensetzung liegt bei 1:0,5.

### Beschichtungszusammensetzung Z11

Die Herstellung der Beschichtungszusammensetzung Z11 erfolgt analog der im Zusammenhang mit der Beschichtungszusammensetzung Z4 beschriebenen Methode mit dem Unterschied, dass anstelle von 9 g EDTA 18 g EDTA eingesetzt werden. Ferner wird die Mischung M2 vor Zugabe der wässrigen Dispersion des Bindemittels und des Vernetzungsmittels über eine Dauer von 25 h bei Raumtemperatur (18-23°C) gerührt. Das molare Verhältnis von Bismut (als Metall gerechnet) zu EDTA in der Beschichtungszusammensetzung liegt bei 1:1.

### Beschichtungszusammensetzung Z12

Die Herstellung der Beschichtungszusammensetzung Z12 erfolgt derart, dass zu der Beschichtungszusammensetzung Z6 weitere 15,06 g Bicin (N,N'-Bis((2-Hydroxyethyl)glycin) hinzugefügt werden. Zudem wird mittels Zugabe von Essigsäure ein pH-Wert von 5,55 eingestellt. Das molare Verhältnis von Bismut (als Metall gerechnet) zu Bicin® in der Beschichtungszusammensetzung liegt bei 1:2.

Tabelle 1b gibt einen Überblick über die so erhaltenen erfindungsgemäßen Beschichtungszusammensetzungen Z7, Z8 sowie Z10 bis Z12.

**Tabelle 1b**

| **Beispiele Z7, Z8 und Z10-Z12** | **Z7** | **Z8** | **Z10** | **Z11** | **Z12** |
|---|---|---|---|---|---|
| CathoGuard® 520 / Gew.-% | 44,30 | 44,30 | 48,83 | 48,73 | 48,70 |
| Milchsäure (Mischung aus D- und L-Milchsäure) / Gew.-% | 0,86 | 0,27 | - | - | - |
| THEED / Gew.-% | - | - | 0,15 | - | - |
| EDTA (freie Säure) / Gew.-% | - | - | - | 0,37 | - |
| Bicin / Gew.-% | - | - | - | - | 0,41 |
| Deionisiertes Wasser / Gew.-% | 48,24 | 48,83 | 45,02 | 44,92 | 44,91 |
| Pigmentpaste CathoGuard® 520 enthaltend Bismut-Subnitrat / Gew.-% | 6,60 | 6,60 | 6,00 | 5,98 | 5,98 |
| pH-Wert | 5,95 | 5,10 | 5,70 | 5,50 | 5,55 |
| Leitfähigkeit / µS/cm | - | - | - | 2480 | - |

Die jeweiligen pH-Werte und Leitfähigkeiten in der Tabelle 1b werden jeweils bei einer Temperatur im Bereich von 18 bis 23 °C ermittelt, sofern sie bestimmt worden sind. Sofern der pH-Wert der jeweiligen Beschichtungszusammensetzung nachträglich durch Zugabe einer Säure eingestellt wird, sind die eingesetzten Mengen an Säure in vorstehender Tabelle nicht angeführt.

### Beschichtungszusammensetzung Z13

60,24 g Bicin (N,N'-Bis((2-Hydroxyethyl)glycin) werden in 2564 g deionisiertem Wasser zur Herstellung einer Mischung M1 gegeben. Zur Mischung M1 werden danach zudem 306 g einer Pigmentpaste (kommerziell erhältliches Produkt CathoGuard® 800 der Firma BASF mit einem Festkörpergehalt von 65 Gew.-%) unter Rühren bei Raumtemperatur (18-23°C) unter Erhalt der Mischung M2 gegeben. Die Mischung M2 wird über eine Dauer von 22 h bei Raumtemperatur (18-23°C) gerührt. Danach werden zu dieser resultierenden Mischung 2130 g einer wässrigen Dispersion eines Bindemittels und eines Vernetzungsmittels (kommerziell erhältliches Produkt CathoGuard® 800 der Firma BASF mit einem Festkörpergehalt von 37,5 Gew.-%) gegeben. Das molare Verhältnis von Bismut (als Metall gerechnet) zu Bicin® in der Beschichtungszusammensetzung liegt bei 1:6.

### Beschichtungszusammensetzung Z14

87,26 g THEED werden in 2564 g deionisiertem Wasser zur Herstellung einer Mischung M1 gegeben und der pH-Wert der Mischung M1 durch Zugabe von Essigsäure auf 5,7 eingestellt. Zur Mischung M1 werden danach zudem 306 g einer Pigmentpaste (kommerziell erhältliches Produkt CathoGuard® 520 der Firma BASF mit einem Festkörpergehalt von 65 Gew.-%) unter Rühren bei Raumtemperatur (18-23°C) unter Erhalt der Mischung M2 gegeben. Die Mischung M2 wird über eine Dauer von 22 h bei Raumtemperatur (18-23°C) gerührt. Danach werden zu dieser resultierenden Mischung 2130 g einer wässrigen Dispersion eines Bindemittels und eines Vernetzungsmittels (kommerziell erhältliches Produkt CathoGuard® 520 der Firma BASF mit einem Festkörpergehalt von 37,5 Gew.-%) gegeben. Das molare Verhältnis von Bismut (als Metall gerechnet) zu THEED in der Beschichtungszusammensetzung liegt bei 1:6.

### Beschichtungszusammensetzung Z15

Die Herstellung der Beschichtungszusammensetzung Z15 erfolgt analog der im Zusammenhang mit der Beschichtungszusammensetzung Z13 beschriebenen Methode mit dem Unterschied, dass anstelle von Bicin 53,99 g Quadrol eingesetzt werden und nach Zugabe der Pigmentpaste der pH-Wert der Mischung M2 durch Zugabe von Milchsäure auf 5,68 eingestellt wird. Zudem wird nach Zugabe der wässrigen Dispersion des Bindemittels und des Vernetzungsmittels der pH-Wert wiederum mittels Milchsäure auf 5,7 eingestellt. Das molare Verhältnis von Bismut (als Metall gerechnet) zu Quadrol® in der Beschichtungszusammensetzung liegt bei 1:3.

Tabelle 1c gibt einen Überblick über die so erhaltenen erfindungsgemäßen Beschichtungszusammensetzungen Z13 bis Z15.

**Tabelle 1c**

| **Beispiele Z13-Z15** | **Z13** | **Z14** | **Z15** |
|---|---|---|---|
| CathoGuard® 800 / Gew.-% | 42,09 | - | 42,14 |
| CathoGuard® 520 / Gew.-% | - | 41,87 | - |
| Bicin / Gew.-% | 1,19 | - | - |
| THEED / Gew.-% | - | 1,72 | - |
| Quadrol / Gew.-% | - | - | 1,07 |
| Deionisiertes Wasser / Gew.-% | 50,67 | 50,40 | 50,73 |
| Pigmentpaste CathoGuard® 800 enthaltend Bismut-Subnitrat / Gew.-% | 6,05 | - | 6,05 |
| Pigmentpaste CathoGuard® 520 enthaltend Bismut-Subnitrat / Gew.-% | - | 6,02 | - |
| pH-Wert | 5,61 | 5,77 | 5,70 |
| Leitfähigkeit / µS/cm | 2070 | 5210 | 3340 |

Die jeweiligen pH-Werte und Leitfähigkeiten in der Tabelle 1c werden jeweils bei einer Temperatur im Bereich von 18 bis 23 °C ermittelt.

Jede der so hergestellten Beschichtungszusammensetzungen Z1-Z8, Z10-Z15 sowie V1 wird nach ihrer Herstellung in ein Tauchlackbad gegeben. Die Beschichtungszusammensetzungen Z2, Z3, Z5, Z6 und Z10 bis Z12 werden bei einer Temperatur im Bereich von 18-23°C über eine Dauer von 60 Minuten ultrafiltriert und dann der Gehalt an Bismut, berechnet als Metall, im mg/L im Ultrafiltrat mittels Atomemissionsspektrometrie (ICP-OES) gemäß der vorstehend beschriebenen Methode ermittelt. Die entsprechenden Werte sind in Tabelle 1d wiedergegeben.

**Tabelle 1d:**

| **Beschichtungszusammensetzung** | Gehalt an Bismut im Ultrafiltrat / mg/L |
|---|---|
| V1 | 6,4 |
| Z2 | 350 |
| Z3 | 260 |
| Z5 | 310 |
| Z6 | 44 |
| Z10 | 100 |
| Z11 | 1330 |
| Z12 | 190 |
| Z13 | 1100 |

### 2. Herstellung von beschichteten elektrisch leitfähigen Substraten mittels einer der erfindungsgemäßen wässrigen Beschichtungszusammensetzungen oder der Vergleichsbeschichtungszusammensetzung V1

Die wässrigen Beschichtungszusammensetzungen Z1 bis Z8 und Z10 bis Z15 sowie V1 werden jeweils als Tauchlackbeschichtungen auf unterschiedliche Substrate appliziert. Dabei wird jede der Zusammensetzungen Z1 bis Z8 und Z10 bis Z15 bzw. V1 direkt nach ihrer vorstehend beschriebenen Herstellung auf die unterschiedlichen Substrate appliziert.

Es werden jeweils drei Arten von Testblechen für Z1 bis Z6, Z10 bis Z15 sowie V1 verwendet, nämlich T1 (tauchverzinkter Stahl (HDG)) und T2 (Aluminium (ALU)) sowie T3 (kaltgewalzter Stahl (CRS)) als Beispiele elektrisch leitfähiger Substrate eingesetzt. Jede der zwei Seiten der jeweils eingesetzten Bleche weist eine Fläche von 10,5 cm ·19 cm auf, so dass sich eine Gesamtfläche von ca. 400 cm² ergibt. Jede der zwei Seiten der eingesetzten Testbleche T1, T2 und T3, die mit einer der Zusammensetzungen Z7 oder Z8 beschichtet werden, weisen dagegen eine Fläche von 4 cm ·10 cm auf, so dass sich eine Gesamtfläche von 80 cm² ergibt.

Diese werden zunächst jeweils durch Eintauchen der Bleche in ein Bad enthaltend eine wässrige Lösung enthaltend die kommerziell erhältlichen Produkte Ridoline 1565-1 (3,0 Gew.-%) und Ridosol 1400-1 (0,3 % Gew.-%) der Firma Henkel sowie Wasser (96,7 Gew.-%) über eine Dauer von 1,5 bis 3 Minuten bei einer Temperatur von 62°C gereinigt. Danach wird eine mechanische Reinigung (mittels Pinseln) durchgeführt und die Bleche im Anschluss wiederum für eine Dauer von 1,5 Minuten erneut in das Bad eingetaucht.

Die auf diese Weise gereinigten Substrate werden im Anschluss mit Wasser (über eine Dauer von 1 Minute) und deionisiertem Wasser (über eine Dauer von 1 Minute) gespült.

Im direkten Anschluss wird auf jedes Blech T1, T2 bzw. T3 eine der erfindungsgemäß eingesetzten wässrigen Beschichtungszusammensetzungen Z1 bis Z8 und Z10 bis Z15 sowie V1 appliziert, indem das jeweilige Blech jeweils in ein entsprechendes eine der Zusammensetzungen Z1 bis Z8 und Z10 bis Z15 enthaltenes Tauchlackbad getaucht wird. Dabei weist das Tauchlackbad jeweils eine Badtemperatur von 30°C oder 32°C auf (32°C jeweils im Fall von Z1-Z6 und Z10-Z15 und V1, 30°C jeweils im Fall von Z7-Z8).

Die Beschichtung im Tauchlackbad wird dabei mittels eines zweistufigen Abscheidungsschritts bzw. Beschichtungsschritts durchgeführt, der zwei Stufen (1a) und (1b) vorsieht, bei welchem zunächst galvanostatisch Stromstärken im Bereich von 0,02 bis 0,32 A oder potentiostatisch eine Spannung von 4 V jeweils über eine Dauer von 120 Sekunden angelegt werden (entsprechend Stufe (1a)), wodurch ein Bismut-Vorabscheidung erzielt wird. In einigen Fällen wird zudem die Abscheidungsdauer bei einer bestimmten Stromstärke variiert. Alternativ wird eine stromlose Abscheidung über eine Dauer von 120 Sekunden als Stufe (1a) in einigen Fällen als Vergleichsbeispiel durchgeführt. Die Ergebnisse dieser Bismut-Vorabscheidung gemäß Stufe (1a) des Schritts sind nachfolgend in den Tabellen 2a bis 2o dargestellt. Der Bismut-Gehalt wird dabei jeweils gemäß der vorstehend beschriebenen Bestimmungsmethode der Röntgenfluoreszenzanalyse (RFA) ermittelt.

### Tabellen 2a bis 2o:

**Tabelle 2a - Bismut-Schichtauflage (in mg Bismut pro m² Oberfläche) der nach Durchführung der Stufe (1a) auf die Substrate T1, T2 und T3 aufgebrachten Beschichtung ausgehend von der Beschichtungszusammensetzung Z1 bei verschiedenen Stromstärken jeweils über eine Dauer von 120 Sekunden**

| Stromstärke in [A] | T1, Bismutgehalt in [mg/m²] | T2, Bismutgehalt in [mg/m²] | T3, Bismutgehalt in [mg/m²] |
|---|---|---|---|
| 0 | 53 | 6 | 1 |
| 0,10 | 99 | 55 | 28 |
| 0,12 | 136 | 81 | 39 |
| 0,14 | 160 | 102 | 46 |
| 0,16 | 164 | 118 | 51 |
| 0,18 | 159 | 106 | 51 |
| 0,19 | 153 | 97 | 71 |
| 0,20 | 164 | 102 | 102 |

**Tabelle 2b - Bismut-Schichtauflage (in mg Bismut pro m² Oberfläche) der nach Durchführung der Stufe (1a) auf die Substrate T1, T2 und T3 aufgebrachten Beschichtung ausgehend von der Beschichtungszusammensetzung Z2 bei verschiedenen Stromstärken jeweils über eine Dauer von 120 Sekunden**

| Stromstärke in [A] | T1, Bismutgehalt in [mg/m²] | T2, Bismutgehalt in [mg/m²] | T3, Bismutgehalt in [mg/m²] |
|---|---|---|---|
| 0 | 26 | 7 | -1 |
| 0,15 | 101 | 120 | 47 |
| 0,20 | 168 | 139 | 90 |
| 0,22 | 168 | 137 | 58 |
| 0,24 | 122 | 142 | 53 |
| 0,26 | 212 | 165 | 132 |

**Tabelle 2c - Bismut-Schichtauflage (in mg Bismut pro m² Oberfläche) der nach Durchführung der Stufe (1a) auf die Substrate T1, T2 und T3 aufgebrachten Beschichtung ausgehend von der Beschichtungszusammensetzung Z3 bei verschiedenen Stromstärken jeweils über eine Dauer von 120 Sekunden**

| Stromstärke in [A] | T1, Bismutgehalt in [mg/m²] | T2, Bismutgehalt in [mg/m²] | T3, Bismutgehalt in [mg/m²] |
|---|---|---|---|
| 0 | 33 | -5 | -1 |
| 0,20 | 230 | 171 | 57 |
| 0,22 | 255 | 199 | 82 |
| 0,24 | 271 | 219 | 91 |
| 0,26 | 267 | 211 | 107 |
| 0,28 | 263 | 206 | 112 |
| 0,30 | 208 | 241 | * |

| | | | |
|---|---|---|---|
| * wurde nicht ermittelt | | | |

**Tabelle 2d - Bismut-Schichtauflage (in mg Bismut pro m² Oberfläche) der nach Durchführung der Stufe (1a) auf die Substrate T1, T2 und T3 aufgebrachten Beschichtung ausgehend von der Beschichtungszusammensetzung Z4 bei verschiedenen Stromstärken jeweils über eine Dauer von 120 Sekunden**

| Stromstärke in [A] | T1, Bismutgehalt in [mg/m²] | T2, Bismutgehalt in [mg/m²] | T3, Bismutgehalt in [mg/m²] |
|---|---|---|---|
| 0,14 | 214 | 239 | 181 |
| 0,16 | 233 | 216 | 181 |
| 0,18 | 223 | 206 | 139 |
| 0,20 | -* | -* | 148 |

| | | | |
|---|---|---|---|
| ** wurde nicht ermittelt | | | |

**Tabelle 2e - Bismut-Schichtauflage (in mg Bismut pro m² Oberfläche) der nach Durchführung der Stufe (1a) auf die Substrate T1, T2 und T3 aufgebrachten Beschichtung ausgehend von der Beschichtungszusammensetzung Z5 bei verschiedenen Stromstärken jeweils über eine Dauer von 120 Sekunden**

| Stromstärke in [A] | T1, Bismutgehalt in [mg/m²] | T2, Bismutgehalt in [mg/m²] | T3, Bismutgehalt in [mg/m²] |
|---|---|---|---|
| 0,16 | 23 | 11 | 17 |
| 0,18 | 25 | 16 | 16 |
| 0,20 | 26 | 17 | 15 |
| 0,22 | 29 | 15 | 13 |
| 0,24 | 22 | 25 | 22 |

**Tabelle 2f - Bismut-Schichtauflage (in mg Bismut pro m² Oberfläche) der nach Durchführung der Stufe (1a) auf die Substrate T1, T2 und T3 aufgebrachten Beschichtung ausgehend von der Beschichtungszusammensetzung Z6 bei verschiedenen Stromstärken jeweils über eine Dauer von 120 Sekunden**

| Stromstärke in [A] | T1, Bismutgehalt in [mg/m²] | T2, Bismutgehalt in [mg/m²] | T3, Bismutgehalt in [mg/m²] |
|---|---|---|---|
| 0,16 | 50 | 36 | 48 |
| 0,18 | 50 | 36 | 46 |
| 0,20 | 47 | 32 | 48 |
| 0,22 | 44 | 39 | 42 |
| 0,24 | 55 | -* | 56 |

| | | | |
|---|---|---|---|
| ** wurde nicht ermittelt | | | |

**Tabelle 2g - Bismut-Schichtauflage (in mg Bismut pro m² Oberfläche) der nach Durchführung der Stufe (1a) auf das Substrat T3 aufgebrachten Beschichtung ausgehend von der Beschichtungszusammensetzung Z7 bei einer Stromstärke von 0,03 A/s jeweils über verschiedene Zeitdauern**

| Zeitdauer [s] | T3, Bismutgehalt in [mg/m²] |
|---|---|
| 60 | 22 |
| 180 | 70 |
| 300 | 129 |
| 480 | 233 |

**Tabelle 2h - Bismut-Schichtauflage (in mg Bismut pro m² Oberfläche) der nach Durchführung der Stufe (1a) auf das Substrat T3 aufgebrachten Beschichtung ausgehend von der Beschichtungszusammensetzung Z8 bei einer Stromstärke von 0,02 A/s oder von 0,04 A/s jeweils über verschiedene Zeitdauern**

| Stromstärke [A] | Zeitdauer [s] | T3, Bismutgehalt in [mg/m²] |
|---|---|---|
| 0,02 | 60 | 11 |
| 0,02 | 180 | 52 |
| 0,02 | 300 | 94 |
| 0,04 | 60 | 11 |
| 0,04 | 180 | 34 |
| 0,04 | 300 | 55 |

**Tabelle 2i - Bismut-Schichtauflage (in mg Bismut pro m² Oberfläche) der nach Durchführung der Stufe (1a) auf die Substrate T1, T2 und T3 aufgebrachten Beschichtung ausgehend von der Beschichtungszusammensetzung Z10 bei verschiedenen Stromstärken jeweils über eine Dauer von 120 Sekunden**

| Stromstärke in [A] | T1, Bismutgehalt in [mg/m²] | T2, Bismutgehalt in [mg/m²] | T3, Bismutgehalt in [mg/m²] |
|---|---|---|---|
| 0,16 | 43 | 27 | 25 |
| 0,18 | 49 | 28 | 27 |
| 0,20 | 48 | 30 | 25 |
| 0,22 | 38 | 25 | 24 |
| 0,24 | 39 | 37 | 36 |

**Tabelle 2j-1 - Bismut-Schichtauflage (in mg Bismut pro m² Oberfläche) der nach Durchführung der Stufe (1a) auf die Substrate T1, T2 und T3 aufgebrachten Beschichtung ausgehend von der Beschichtungszusammensetzung Z11 bei verschiedenen Stromstärken jeweils über eine Dauer von 120 Sekunden**

| Stromstärke in [A] | T1, Bismutgehalt in [mg/m²] | T2, Bismutgehalt in [mg/m²] | T3, Bismutgehalt in [mg/m²] |
|---|---|---|---|
| 0,06 | 116 | 81 | 26 |
| 0,08 | 185 | 132 | 65 |
| 0,10 | 201 | 212 | 129 |
| 0,12 | 168 | 227 | 137 |
| 0,14 | 265 | 229 | 151 |
| 0,15 | 312 | 274 | 189 |
| 0,16 | 263 | 273 | 190 |
| 0,17 | 282 | 254 | 208 |
| 0,18 | 301 | 290 | 270 |
| 0,20 | -* | -* | 222 |

| | | | |
|---|---|---|---|
| ** wurde nicht ermittelt | | | |

**Tabelle 2j-2 - Bismut-Schichtauflage (in mg Bismut pro m² Oberfläche) der nach Durchführung der Stufe (1a) auf das Substrat T3 aufgebrachten Beschichtung ausgehend von der Beschichtungszusammensetzung Z11 bei einer Stromstärke von 0,17 A/s jeweils über verschiedene Zeitdauern**

| Zeitdauer [s] | T3, Bismutgehalt in [mg/m²] |
|---|---|
| 20 | 15 |
| 40 | 52 |
| 60 | 88 |
| 80 | 159 |
| 100 | 177 |
| 120 | 208 |

**Tabelle 2k - Bismut-Schichtauflage (in mg Bismut pro m² Oberfläche) der nach Durchführung der Stufe (1a) auf die Substrate T1, T2 und T3 aufgebrachten Beschichtung ausgehend von der Beschichtungszusammensetzung Z12 bei verschiedenen Stromstärken jeweils über eine Dauer von 120 Sekunden**

| Stromstärke in [A] | T1, Bismutgehalt in [mg/m²] | T2, Bismutgehalt in [mg/m²] | T3, Bismutgehalt in [mg/m²] |
|---|---|---|---|
| 0,16 | 132 | 84 | 99 |
| 0,18 | -* | -* | 116 |
| 0,20 | 135 | 93 | 104 |
| 0,22 | -* | -* | 103 |
| 0,24 | 122 | -* | 98 |
| 0,26 | 121 | 82 | 96 |
| 0,28 | 97 | 80 | 84 |
| 0,30 | 99 | 78 | 81 |
| 0,32 | -* | -* | 86 |

| | | | |
|---|---|---|---|
| *wurde nicht ermittelt | | | |

**Tabelle 2l - Bismut-Schichtauflage (in mg Bismut pro m² Oberfläche) der nach Durchführung der Stufe (1a) auf die Substrate T1, T2 und T3 aufgebrachten Beschichtung ausgehend von der Beschichtungszusammensetzung Z13 bei verschiedenen Stromstärken jeweils über eine Dauer von 120 Sekunden**

| Stromstärke in [A] | T1, Bismutgehalt in [mg/m²] | T2, Bismutgehalt in [mg/m²] | T3, Bismutgehalt in [mg/m²] |
|---|---|---|---|
| 0,05 | 491 | 60 | 47 |
| 0,08 | 482 | 138 | 122 |
| 0,11 | 473 | 216 | 203 |
| 0,14 | 478 | 299 | 303 |
| 0,17 | 480 | 344 | 343 |
| 0,20 | 531 | 376 | 336 |
| 0,23 | 443 | 368 | 330 |
| 0,26 | 412 | 409 | 325 |
| 0,29 | 352 | 347 | 293 |

**Tabelle 2m - Bismut-Schichtauflage (in mg Bismut pro m² Oberfläche) der nach Durchführung der Stufe (1a) auf die Substrate T1 und T3 aufgebrachten Beschichtung ausgehend von der Beschichtungszusammensetzung Z14 bei verschiedenen Stromstärken jeweils über eine Dauer von 120 Sekunden**

| Stromstärke in [A] | T1, Bismutgehalt in [mg/m²] | T3, Bismutgehalt in [mg/m²] |
|---|---|---|
| 0,05 | 101 | 39 |
| 0,08 | 152 | 72 |
| 0,11 | 214 | 100 |
| 0,14 | 238 | 128 |
| 0,17 | 272 | 150 |
| 0,20 | 281 | 181 |
| 0,23 | -* | 157 |
| 0,26 | -* | 185 |
| 0,29 | -* | 177 |

| | | |
|---|---|---|
| *wurde nicht ermittelt | | |

**Tabelle 2n - Bismut-Schichtauflage (in mg Bismut pro m² Oberfläche) der nach Durchführung der Stufe (1a) auf die Substrate T1, T2 und T3 aufgebrachten Beschichtung ausgehend von der Beschichtungszusammensetzung Z15 bei verschiedenen Stromstärken jeweils über eine Dauer von 120 Sekunden**

| Stromstärke in [A] | T1, Bismutgehalt in [mg/m²] | T2, Bismutgehalt in [mg/m²] | T3, Bismutgehalt in [mg/m²] |
|---|---|---|---|
| 0,05 | 228 | 32 | 34 |
| 0,08 | 207 | 72 | 80 |
| 0,11 | 193 | 106 | 104 |
| 0,14 | 246 | 134 | 120 |
| 0,17 | 239 | 160 | 124 |
| 0,20 | 248 | 156 | 121 |
| 0,23 | 216 | 147 | 101 |
| 0,26 | 203 | 138 | 85 |
| 0,29 | -* | -* | 73 |

| | | | |
|---|---|---|---|
| *wurde nicht ermittelt | | | |

**Tabelle 2o - Bismut-Schichtauflage (in mg Bismut pro m² Oberfläche) der nach Durchführung der Stufe (1a) auf die Substrate T1, T2 und T3 aufgebrachten Beschichtung ausgehend von der Vergleichsbeschichtungszusammensetzung V1 bei einer Spannung von 4 V jeweils über eine Dauer von 120 Sekunden**

| Spannung [V] | T1, Bismutgehalt in [mg/m²] | T2, Bismutgehalt in [mg/m²] | T3, Bismutgehalt in [mg/m²] |
|---|---|---|---|
| 4 | 0 | 0 | 5 |

Im Anschluss daran wird für einige der nach Stufe (1a) erhaltenen Substrate Stufe (1b) des Schritts (1) des erfindungsgemäßen Verfahrens durchgeführt, wobei entweder potentiostatisch eine Spannung von 4 V oder galvanostatisch Stromstärken im Bereich von 0,12 bis 0,28 A angelegt werden, welche jeweils innerhalb von Stufe (1b) kontinuierlich linear auf eine Spannung im Bereich von 220-260 V jeweils über eine Dauer von jeweils 10 Sekunden mittels einer Spannungsrampe erhöht wird. Diese jeweilige Spannung wird dann solange für eine Dauer im Bereich von 80 bis 140 Sekunden (Haltezeit) gehalten, so dass eine Beschichtung des jeweiligen Substrats in einer Trockenschichtdicke mit der jeweiligen Beschichtungszusammensetzung von 20 µm erzielt wird.

Im Einzelnen werden für eine Beschichtung der Substrate T2 oder T3 mit einer der Zusammensetzungen V1, Z3, Z6, Z11, Z12 oder Z13 folgende Parameter gewählt:

### V1:

Stufe (1a): 4 V über 120 Sekunden (potentiostatisch)
Stufe (1b): Spannungsrampe: lineare Erhöhung der Spannung auf 260 V über eine Dauer von 10 Sekunden und Haltezeit von 60 Sekunden bei dieser Spannung

### Z3:

Stufe (1a): 0,26 A über 120 Sekunden (galvanostatisch)
Stufe (1b): Spannungsrampe: lineare Erhöhung der Spannung auf 220 V über eine Dauer von 10 Sekunden und Haltezeit von 120 Sekunden bei dieser Spannung

### Z6:

Stufe (1a): 0,22 A über 120 Sekunden (galvanostatisch)
Stufe (1b): Spannungsrampe: lineare Erhöhung der Spannung auf 240 V über eine Dauer von 10 Sekunden und Haltezeit von 120 Sekunden bei dieser Spannung

### Z11:

Stufe (1a): 0,28 A über 120 Sekunden (galvanostatisch)
Stufe (1b): Spannungsrampe: lineare Erhöhung der Spannung auf 240 V über eine Dauer von 10 Sekunden und Haltezeit von 120 Sekunden bei dieser Spannung

### Z12:

Stufe (1a): 0,12 A über 120 Sekunden (galvanostatisch)
Stufe (1b): Spannungsrampe: lineare Erhöhung der Spannung auf 240 V über eine Dauer von 10 Sekunden und Haltezeit von 90 Sekunden bei dieser Spannung

### Z13:

Stufe (1a): 0,15 A über 120 Sekunden (galvanostatisch)
Stufe (1b): Spannungsrampe: lineare Erhöhung der Spannung auf 250 V über eine Dauer von 10 Sekunden und Haltezeit von 120 Sekunden bei dieser Spannung. Zudem wird Schritt (1) hier bei einer Tauchbadtemperatur von 34°C durchgeführt.

Der jeweilige nachfolgende Einbrennschritt erfolgt so, dass die erhaltenen Beschichtungen jeweils bei 175 °C (Ofentemperatur) über eine Dauer von 25 Minuten eingebrannt werden. Die Trockenschichtdicken der auf die jeweiligen Substrate eingebrannten erfindungsgemäßen wässrigen Beschichtungszusammensetzungen betragen jeweils 20 µm.

### 3. Untersuchung der Korrosionsschutzwirkung der beschichteten Substrate

Es werden die mit einer der Beschichtungszusammensetzungen V1, Z3, Z6, Z11, Z12 oder Z13 beschichteten Substrate T2 oder T3 untersucht.

Alle nachstehenden Prüfungen wurden entsprechend der vorstehend angegebenen Bestimmungsmethoden und/oder der entsprechenden Norm durchgeführt. Jeder Wert in Tabelle 3a bzw. 3b ist der Mittelwert (mit Standardabweichung) aus einer Zweifach- oder Dreifachbestimmung.

**Tabelle 3a**

| | **Beispiel** | **Beispiel** | **Beispiel** | **Beispiel** | **Vergleichsbeispiel** |
|---|---|---|---|---|---|
| Substrat | T3 (CRS) | T3 (CRS) | T3 (CRS) | T3 (CRS) | T3 (CRS) |
| Beschichtungszusammensetzung | Z3 | Z11 | Z12 | Z13 | V1 |
| Unterwanderung [mm] gemäß DIN EN ISO 4628-8 nach 504 h einer Salzsprühnebelprüfung gemäß DIN EN ISO 9227 NSS | **2,8** | **1,2** | **1,6** | **0,5** | 4,1 |
| Unterwanderung [mm] gemäß DIN EN ISO 4628-8 nach 10 Zyklen des VDA-Klimawechseltest nach VDA 621-415 | **8,1** | **7,1** | **6,0** | **1,3** | 12,8 |

**Tabelle 3b**

| | **Beispiel** | **Beispiel** | **Beispiel** | **Beispiel** | **Vergleichsbeispiel** |
|---|---|---|---|---|---|
| Substrat | T2 (ALU) | T2 (ALU) | T2 (ALU) | T2 (ALU) | T2 (ALU) |
| Beschichtungszusammensetzung | Z6 | Z11 | Z12 | Z13 | V1 |
| Maximale Fadenlänge [mm] gemäß DIN EN 3365 nach 1008 h | **9,6** | **7,4** | **6,2** | **8,9** | 12,4 |
| Mittlere Fadenlänge [mm] gemäß PAPP WT 3102 (Daimler) nach Filiformkorrosion gemäß DIN EN 3365 nach 1008 h | **4,5** | **2,7** | **2,0** | **4,1** | 7,5 |

Wie aus den Tabellen 3a und 3b ersichtlich ist, zeichnen sich die mittels des erfindungsgemäßen Verfahrens mit einer erfindungsgemäßen wässrigen Beschichtungszusammensetzung beschichteten Substrate im Vergleich zu dem mit der Vergleichsbeschichtungszusammensetzung beschichtete Substrat durchweg durch eine verbesserte Korrosionsschutzwirkung aus.

## Patentansprüche

1. Ein Verfahren zur zumindest teilweisen Beschichtung eines elektrisch leitfähigen Substrats mit einem Elektrotauchlack umfassend wenigstens einen Schritt (1),
(1) Kontaktieren des als Kathode geschalteten elektrisch leitfähigen Substrats mit einer wässrigen Beschichtungszusammensetzung (A) umfassend
(A1) wenigstens ein kathodisch abscheidbares Bindemittel und
(A2) gegebenenfalls wenigstens ein Vernetzungsmittel,
wobei die Beschichtungszusammensetzung (A)
einen pH-Wert in einem Bereich von 4,0 bis 6,5 aufweist und
eine Gesamtmenge von wenigstens 130 ppm Bismut, bezogen auf das Gesamtgewicht der Beschichtungszusammensetzung (A), enthält, wobei davon
(A3) wenigstens 30 ppm Bismut, bezogen auf das Gesamtgewicht der Beschichtungszusammensetzung (A), in einer in der Beschichtungszusammensetzung (A) gelöst vorliegenden Form und
(A4) wenigstens 100 ppm Bismut, bezogen auf das Gesamtgewicht der Beschichtungszusammensetzung (A), in einer in der Beschichtungszusammensetzung (A) ungelöst vorliegenden Form vorhanden sind,
wobei der Anteil der Komponente (A4) in mol-% innerhalb der Gesamtmenge des in der Beschichtungszusammensetzung (A) enthaltenen Bismuts größer als der Anteil der Komponente (A3) in mol-% ist,
und die Beschichtungszusammensetzung (A) zudem
(A5) wenigstens ein zur Komplexierung von Bismut geeignetes wenigstens zweizähniges Komplexierungsmittel umfasst,
wobei das wenigstens eine Komplexierungsmittel (A5) in der wässrigen Beschichtungszusammensetzung (A) in einem Anteil von wenigstens 5 mol-%, bezogen auf die Gesamtmenge des in der Beschichtungszusammensetzung (A) enthaltenen Bismuts, vorhanden ist,
wobei Schritt (1) in wenigstens zwei aufeinanderfolgenden Stufen (1a) und (1b) durchgeführt wird, nämlich
(1a) bei einer angelegten Spannung in einem Bereich von 1 bis 50 V, welche über eine Dauer von wenigstens 5 Sekunden angelegt wird, und
(1b) bei einer angelegten Spannung in einem Bereich von 50 bis 400 V, unter der Bedingung, dass die in Stufe (1b) angelegte Spannung um wenigstens 10 V größer ist als die in Stufe (1a) angelegte Spannung.

2. Das Verfahren gemäß einem Anspruch 1, **dadurch gekennzeichnet, dass** in Stufe (1a) eine solche Spannung angelegt wird, dass die Abscheidungsstromdichte mindestens 1 A/m² beträgt.

3. Das Verfahren gemäß Anspruch 1 oder 2, **dadurch gekennzeichnet, dass** die in Stufe (1a) angelegte Spannung über eine Dauer in einem Bereich von wenigstens 5 bis 300 Sekunden angelegt wird.

4. Das Verfahren gemäß einem der vorstehenden Ansprüche, **dadurch gekennzeichnet, dass** die in Stufe (1b) angelegte Spannung im Bereich von 50 bis 400 V in einem Zeitintervall von 0 bis 300 Sekunden nach Durchführung der Stufe (1a) erfolgt und für einen Zeitraum im Bereich von 10 bis 300 Sekunden bei einem Wert innerhalb des genannten Spannungsbereichs von 50 bis 400 V aufrechterhalten wird.

5. Das Verfahren gemäß einem der vorstehenden Ansprüche, **dadurch gekennzeichnet, dass** die Beschichtungszusammensetzung (A) eine Gesamtmenge von wenigstens 300 ppm Bismut, bezogen auf das Gesamtgewicht der Beschichtungszusammensetzung (A), enthält, wobei davon
(A3) wenigstens 100 ppm Bismut, bezogen auf das Gesamtgewicht der Beschichtungszusammensetzung (A), in einer in der Beschichtungszusammensetzung (A) gelöst vorliegenden Form und
(A4) wenigstens 200 ppm Bismut, bezogen auf das Gesamtgewicht der Beschichtungszusammensetzung (A), in einer in der Beschichtungszusammensetzung (A) ungelöst vorliegenden Form vorhanden sind.

6. Das Verfahren gemäß einem der vorstehenden Ansprüche, **dadurch gekennzeichnet, dass** das elektrisch leitfähige Substrat kein phosphatiertes oder chromatiertes Substrat ist.

7. Das Verfahren gemäß einem der vorstehenden Ansprüche, **dadurch gekennzeichnet, dass** die Gesamtmenge des in der Beschichtungszusammensetzung (A) enthaltenen Bismuts in einem Bereich von wenigstens 500 ppm bis 20 000 ppm liegt

8. Das Verfahren gemäß einem der vorstehenden Ansprüche, **dadurch gekennzeichnet, dass** die Komponente (A4) erhältlich ist aus wenigstens einer Bismut-Verbindung ausgewählt aus der Gruppe bestehend aus Oxiden, basischen Oxiden, Hydroxiden, Carbonaten, basischen Nitraten, Salicylaten und basischen Salicylaten des Bismuts sowie Mischungen davon.

9. Das Verfahren gemäß einem der vorstehenden Ansprüche, **dadurch gekennzeichnet, dass** die Komponenten (A3) und (A5) in Form eines Komplexes und/oder Salzes aus den Komponenten (A3) und (A5) in der Beschichtungszusammensetzung (A) vorliegen.

10. Das Verfahren gemäß einem der vorstehenden Ansprüche, **dadurch gekennzeichnet, dass** die Komponente (A5) ausgewählt ist aus der Gruppe bestehend aus Ethylendiamintetraessigsäure, Milchsäure, N,N,N',N'-Tetrakis-2-hydroxypropylethylendiamin, N,N'-Bis((2-Hydroxyethyl)-glycin und N,N,N',N'-Tetrakis-2-hydroxyethylethylendiamin.

11. Das Verfahren gemäß einem der vorstehenden Ansprüche, **dadurch gekennzeichnet, dass** die Beschichtungszusammensetzung (A) erhältlich ist durch
teilweises Überführen wenigstens einer in Wasser unlöslichen Bismut-Verbindung durch teilweise Umsetzung von dieser Verbindung mit wenigstens einem zur Komplexierung von Bismut geeigneten wenigstens zweizähnigen Komplexierungsmittel (A5) in wenigstens eine in Wasser lösliche Bismut-Verbindung (A3) in Wasser, gegebenenfalls in Gegenwart wenigstens einer der Komponenten (A1) und/oder (A2), unter Erhalt einer wenigstens die Komponenten (A3), (A4) und (A5) und gegebenenfalls (A1) und/oder (A2) der Beschichtungszusammensetzung (A) enthaltenen Mischung, und
gegebenenfalls Mischen der so erhaltenen Mischung wenigstens mit der Komponente (A1) und gegebenenfalls der Komponente (A2) unter Erhalt der Beschichtungszusammensetzung (A).

12. Das Verfahren gemäß einem der vorstehenden Ansprüche, **dadurch gekennzeichnet, dass** der molare Anteil von gegebenenfalls wenigstens einer in der wässrigen Beschichtungszusammensetzung (A) enthaltenen Aminopolycarbonsäure wenigstens um den Faktor 15 geringer als die Gesamtmenge des in der wässrigen Beschichtungszusammensetzung (A) enthaltenen Bismuts in Mol.

13. Ein Verfahren zur Einstellung und/oder Aufrechterhaltung der Konzentration der Komponente (A3) und/oder (A4) in der Beschichtungszusammensetzung (A) während der Durchführung des Verfahrens gemäß einem der Ansprüche 1 bis 12, **dadurch gekennzeichnet, dass**
in vorgewählten Zeitabständen der Anteil der Komponente (A3) und/oder (A4) in der Beschichtungszusammensetzung (A) in ppm, bezogen auf das Gesamtgewicht der Beschichtungszusammensetzung (A), bestimmt wird
und
der Anteil der Komponente (A5) in der Beschichtungszusammensetzung (A) spätestens dann erhöht wird, wenn der Anteil der Komponente (A3) in ppm geringer als ein vorgewählter Sollwert dieser Komponente in der Beschichtungszusammensetzung (A) ist,
oder
der Anteil der Komponente (A4) in der Beschichtungszusammensetzung (A) spätestens dann erhöht wird, wenn der Anteil der Komponente (A4) in ppm geringer als ein vorgewählter Sollwert dieser Komponente in der Beschichtungszusammensetzung (A) ist.

## Claims

1. A method for at least partly coating an electrically conductive substrate with an electrocoat material, comprising at least a step (1) :
(1) contacting the electrically conductive substrate, connected as cathode, with an aqueous coating composition (A) comprising
(A1) at least one cathodically depositable binder and
(A2) optionally at least one crosslinking agent,
the coating composition (A) having a pH in a range from 4.0 to 6.5, and
comprising a total amount of at least 130 ppm of bismuth, based on the total weight of the coating composition (A), including
(A3) at least 30 ppm of bismuth, based on the total weight of the coating composition (A), in a form in which it is in solution in the coating composition (A), and
(A4) at least 100 ppm of bismuth, based on the total weight of the coating composition (A), in a form in which it is not in solution in the coating composition (A),
wherein the mol% fraction of component (A4) within the total amount of bismuth present in the coating composition (A) is greater than the mol% fraction of component (A3),
and the coating composition (A) further comprises
(A5) at least one at least bidentate complexing agent suitable for complexing bismuth,
the at least one complexing agent (A5) being present in the aqueous coating composition (A) in a fraction of at least 5 mol%, based on the total amount of the bismuth present in the coating composition (A),
step (1) being carried out in at least two successive stages (1a) and (1b):
(1a) at an applied voltage in a range from 1 to 50 V, which is applied over a duration of at least 5 seconds, and
(1b) at an applied voltage in a range from 50 to 400 V, with the proviso that the voltage applied in stage (1b) is greater by at least 10 V than the voltage applied in stage (1a).

2. The method according to Claim 1, **characterized in that** the voltage applied in stage (1a) is such that the deposition current density is at least 1 A/m².

3. Method according to Claim 1 or 2, **characterized in that** the voltage applied in stage (1a) is applied over a duration in a range from at least 5 to 300 seconds.

4. The method according to any of the preceding claims, **characterized in that** the voltage applied in stage (1b) in the range from 50 to 400 V takes place in a time interval of 0 to 300 seconds after implementation of stage (1a) and is maintained for a period in the range from 10 to 300 seconds at a value within the stated voltage range of 50 to 400 V.

5. Method according to any of the preceding claims, **characterized in that** the coating composition (A) according to claim 1, wherein the coating composition (A) comprises a total amount of at least 300 ppm of bismuth, based on the total weight of the coating composition (A), including
(A3) at least 100 ppm of bismuth, based on the total weight of the coating composition (A), in a form in which it is in solution in the coating composition (A), and
(A4) at least 200 ppm of bismuth, based on the total weight of the coating composition (A), in a form in which it is not in solution in the coating composition (A).

6. The method according to any of the preceding claims, **characterized in that** the electrically conductive substrate is not a phosphate or chromate substrate.

7. The method according to any of the preceding claims, **characterized in that** the total amount of bismuth present in the coating composition (A) is in a range from at least 500 ppm to 20 000 ppm.

8. The method according to any of the preceding claims, **characterized in that** component (A4) is obtainable from at least one bismuth compound selected from the group consisting of oxides, basic oxides, hydroxides, carbonates, basic nitrates, salicylates, and basic salicylates of bismuth, and also mixtures thereof.

9. The method according to any of the preceding claims, **characterized in that** components (A3) and (A5) are present in the form of a complex and/or salt of components (A3) and (A5) in the coating composition (A).

10. The method according to any of the preceding claims, **characterized in that** component (A5) is selected from the group consisting of ethylenediaminetetraacetic acid, lactic acid, N,N,N',N'-tetrakis-2-hydroxypropylethylenediamine, N,N'-bis(2-hydroxyethyl)glycine and N,N,N',N'-tetrakis-2-hydroxyethylethylenediamine.

11. The method according to any of the preceding claims, **characterized in that** the coating composition (A) is obtainable by
partly converting at least one water-insoluble bismuth compound, by partial reaction of this compound with at least one at least bidentate complexing agent (A5) suitable for complexing bismuth, into at least one water-soluble bismuth compound (A3) in water, optionally in the presence of at least one of components (A1) and/or (A2), to give a mixture comprising at least components (A3), (A4), and (A5), and optionally (A1) and/or (A2), of the coating composition (A), and optionally mixing the resulting mixture at least with component (A1) and optionally component (A2), to give the coating composition (A).

12. The method according to any of the preceding claims, **characterized in that** the molar proportion of any at least one amino polycarboxylic acid present in the aqueous coating composition (A) is lower by a factor of at least 15 than the total amount of bismuth present in the aqueous coating composition (A) in moles.

13. A method for setting and/or maintaining the concentration of component (A3) and/or (A4) in the coating composition (A) during the implementation of the method according to any of Claims 1 to 12, **characterized in that**
at preselected intervals of time, a determination is made of the fraction of component (A3) and/or (A4) in the coating composition (A) in ppm, based on the total weight of the coating composition (A),
and
the fraction of component (A5) in the coating composition (A) is increased no later than when the fraction of component (A3) in ppm is lower than a preselected setpoint value for this component in the coating composition (A),
or
the fraction of component (A4) in the coating composition (A) is increased no later than when the fraction of component (A4) in ppm is lower than a preselected setpoint value for this component in the coating composition (A).

## Revendications

1. Procédé pour le revêtement au moins partiel d'un substrat électriquement conducteur au moyen d'une laque d'électro-immersion, comprenant au moins une étape (1)
(1) mise en contact du substrat électriquement conducteur branché en tant que cathode avec une composition (A) aqueuse de revêtement comprenant (A1)
au moins un liant pouvant être déposé cathodiquement et
(A2) le cas échéant au moins un réticulant,
la composition (A) de revêtement
présentant un pH dans une plage de 4,0 à 6,5 et contenant une quantité totale d'au moins 130 ppm de bismuth, par rapport au poids total de la composition (A) de revêtement, dont
(A3) au moins 30 ppm de bismuth, par rapport au poids total de la composition (A) de revêtement, sont présents sous une forme dissoute dans la composition (A) de revêtement et
(A4) au moins 100 ppm de bismuth, par rapport au poids total de la composition (A) de revêtement, sont présents sous une forme non dissoute dans la composition (A) de revêtement,
la proportion du composant (A4), en % en mole, dans la quantité totale du bismuth contenu dans la composition (A) de revêtement étant supérieure à la proportion de composant (A3), en % en mole,
et la composition (A) de revêtement comprenant en outre
(A5) au moins un complexant au moins bidentate approprié pour la complexation du bismuth,
ledit au moins un complexant (A5) étant présent dans la composition (A) aqueuse de revêtement en une proportion d'au moins 5% en mole, par rapport à la quantité totale du bismuth contenu dans la composition (A) de revêtement,
l'étape (1) étant réalisée en au moins deux étapes successives (1a) et (1b), à savoir
(1a) à une tension appliquée dans une plage de 1 à 50 V, qui est appliquée sur une durée d'au moins 5 secondes et
(1b) à une tension appliquée dans une plage de 50 à 400 V, à condition que la tension appliquée dans l'étape (1b) soit supérieure d'au moins 10 V à la tension appliquée dans l'étape (1a).

2. Procédé selon la revendication 1, **caractérisé en ce que**, dans l'étape (1a), on applique une tension telle que la densité de courant de dépôt est d'au moins 1 A/m².

3. Procédé selon la revendication 1 ou 2, **caractérisé en ce que** la tension appliquée dans l'étape (1a) est appliquée sur une durée dans une plage d'au moins 5 à 300 secondes.

4. Procédé selon l'une quelconque des revendications précédentes, **caractérisé en ce que** l'application de la tension dans l'étape (1b) dans la plage de 50 à 400 V a lieu dans un intervalle de temps de 0 à 300 secondes après la réalisation de l'étape (1a) et la tension est maintenue pendant une durée dans la plage de 10 à 300 secondes à une valeur située dans la plage de tension mentionnée de 50 à 400 V.

5. Procédé selon l'une quelconque des revendications précédentes, **caractérisé en ce que** la composition (A) de revêtement contient une quantité totale de bismuth d'au moins 300 ppm, par rapport au poids total de la composition (A) de revêtement, dont
(A3) au moins 100 ppm de bismuth, par rapport au poids total de la composition (A) de revêtement, sont présents sous une forme dissoute dans la composition (A) de revêtement et
(A4) au moins 200 ppm de bismuth, par rapport au poids total de la composition (A) de revêtement, sont présents sous une forme non dissoute dans la composition (A) de revêtement.

6. Procédé selon l'une quelconque des revendications précédentes, **caractérisé en ce que** le substrat électriquement conducteur n'est pas un substrat phosphaté ou chromé.

7. Procédé selon l'une quelconque des revendications précédentes, **caractérisé en ce que** la quantité totale du bismuth contenu dans la composition (A) de revêtement se situe dans une plage d'au moins 500 ppm à 20.000 ppm.

8. Procédé selon l'une quelconque des revendications précédentes, **caractérisé en ce que** le composant (A4) peut être obtenu à partir d'au moins un composé à base de bismuth choisi dans le groupe constitué par les oxydes, les oxydes basiques, les hydroxydes, les carbonates, les nitrates basiques, les salicylates et les salicylates basiques du bismuth ainsi que les mélanges de ceux-ci.

9. Procédé selon l'une quelconque des revendications précédentes, **caractérisé en ce que** les composants (A3) et (A5) se trouvent sous forme d'un complexe et/ou de sel des composants (A3) et (A5) dans la composition (A) de revêtement.

10. Procédé selon l'une quelconque des revendications précédentes, **caractérisé en ce que** le composant (A5) est choisi dans le groupe constitué par l'acide éthylènediaminetétraacétique, l'acide lactique, la N,N,N',N'-tétrakis-2-hydroxypropyléthylènediamine, la N,N'-bis((2-hydroxyéthyl)-glycine et la N,N,N',N'-tétrakis-2-hydroxyéthyléthylènediamine.

11. Procédé selon l'une quelconque des revendications précédentes, **caractérisé en ce que** la composition (A) de revêtement peut être obtenue par transfert au moins partiel d'au moins un composé du bismuth insoluble dans l'eau, par transformation au moins partielle de ce composé avec au moins un complexant (A5) au moins bidentate approprié pour la complexation du bismuth en au moins un composé (A3) du bismuth soluble dans l'eau, dans l'eau, le cas échéant en présence d'au moins un des composants (A1) et/ou (A2), avec obtention d'un mélange contenant au moins les composants (A3), (A4) et (A5) et le cas échéant (A1) et/ou (A2) de la composition (A) de revêtement et le cas échéant agitation du mélange ainsi obtenu au moins avec le composant (A1) et le cas échéant le composant (A2) avec obtention de la composition (A) de revêtement.

12. Procédé selon l'une quelconque des revendications précédentes, **caractérisé en ce que** la proportion molaire d'au moins un acide aminopolycarboxylique le cas échéant contenu dans la composition (A) aqueuse de revêtement est inférieure d'au moins un facteur 15 à la quantité totale du bismuth contenu dans la composition (A) aqueuse de revêtement, en moles.

13. Procédé pour le réglage et/ou le maintien de la concentration en composant (s) (A3) et/ou (A4) dans la composition (A) de revêtement pendant la réalisation du procédé selon l'une quelconque des revendications 1 à 12, **caractérisé en ce que**, à des intervalles de temps sélectionnés au préalable, la proportion du/des composants(s) (A3) et/ou (A4) dans la composition (A) de revêtement, en ppm, par rapport au poids total de la composition (A) de revêtement, est déterminée
et
la proportion du composant (A5) dans la composition (A) de revêtement est augmentée au plus tard lorsque la proportion du (A3) en ppm est inférieure à une valeur de consigne sélectionnée au préalable de ce composant dans la composition (A) de revêtement,
ou
la proportion du composant (A4) dans la composition (A) de revêtement est augmentée au plus tard lorsque la proportion du composant (A4) en ppm est inférieure à une valeur de consigne sélectionnée au préalable de ce composant dans la composition (A) de revêtement.
